# EUROPEAN PATENT APPLICATION

(11) **EP 4 534 958 A1**
(43) Date of publication of application: **09.04.2025**
(21) Application number: 24204359.4
(22) Date of filing: 02.10.2024
(51) Int. Cl.: G01C 21/34

(54) **METHOD AND SYSTEM FOR ADAPTIVE SMART RANGE ESTIMATION DUE TO CHANGE IN VEHICLE CONFIGURATION**

(30) Priority: 04.10.2023 US 202318480673
(71) Applicant: Volvo Car Corporation, 405 31 Göteborg (SE)
(72) Inventor: FRIDÉN, Henrik, 40531 Göteborg (SE); YANG, Derong, 40531 Göteborg (SE); LARSSON, Viktor, 40531 Göteborg (SE)
(74) Representative: Maiwald GmbH

(57) **Abstract**

According to an embodiment a system comprises a detection module; an estimation module; and a processor; wherein the processor is operable to: receive a starting location, a destination, and a stopover location; detect, via the detection module, a planned change in a configuration of a vehicle at one or more of the starting location and the stopover location; and estimate, via the estimation module, a new range of the vehicle based on the planned change in the configuration of the vehicle; and wherein the system is operable for adaptive smart range estimation.

## Description

### FIELD OF THE INVENTION

The present disclosure relates to estimating the range of a vehicle. More specifically, the present disclosure relates to systems and methods for detecting a planned change in vehicle configuration and estimating the range based on the planned change in configuration of the vehicle, wherein the system is operable for adaptive smart range estimation.

### BACKGROUND

The problem is that when the owner of a vehicle plans to add additional items or people to the vehicle, it is difficult to accurately determine the range (e.g., fuel based vehicle or electric based vehicle) of the vehicle. For example, when an owner travels to a friend's house and adds a trailer and a boat, the vehicle system does not have the means to determine the impact of that additional weight. This can lead to inaccurate range estimation which can leave the driver stranded. Also, the current estimated range would not include the additional passengers (e.g., impact due to additional weight).

Therefore, there is a need for range estimation by taking into consideration planned or future addition of items or passengers and estimating a range of the vehicle.

### SUMMARY

The following presents a summary to provide a basic understanding of one or more embodiments described herein. This summary is not intended to identify key or critical elements or delineate any scope of the different embodiments and/or any scope of the claims. The purpose of the summary is to present some concepts in a simplified form as a prelude to the more detailed description presented herein.

According to an embodiment, it is a system comprising a detection module; an estimation module; and a processor; wherein the processor is operable to receive a starting location, a destination, and a stopover location; detect, via the detection module, a planned change in configuration of a vehicle at one or more of the starting location and the stopover location; and estimate, via the estimation module, a new range of the vehicle based on the planned change in configuration of the vehicle; and wherein the system is operable for adaptive smart range estimation.

According to an embodiment, it is a method comprising receiving a starting location, a destination, and a stopover location; detecting, via a detection module, a planned change in configuration of a vehicle at one or more of the starting location and the stopover location; and estimating, via an estimation module, a new range of the vehicle based on the planned change in configuration of the vehicle; and wherein the system is operable for adaptive smart range estimation.

According to an embodiment, it is a non-transitory computer-readable medium, further comprising instructions executable by a computer system to perform operations comprising sensing a change in one or more parameters, the one or more parameters comprising a change in tire pressure, a weather condition, a route, an unexpected stop, an additional weight, and a removed weight; estimating a reduction in an available range due to the change; and providing a recommendation to extend the available range; and wherein the system is operable for adaptive smart range estimation.

### BRIEF DESCRIPTION OF THE FIGURES

These and other aspects of the present invention will now be described in more detail, with reference to the appended drawings showing exemplary embodiments of the present invention, in which:
FIG. 1 is an illustration of an example autonomous vehicle with various sensors, actuators, and systems according to an embodiment.
FIG. 2 shows a block diagram of electronic components of a vehicle according to an embodiment.
FIG. 3 shows the block diagram of the system and its components for detecting a change in vehicle configuration and estimating range according to an embodiment.
FIG. 4A shows a system for vehicle configuration detection module and vehicle parameters estimation according to an embodiment.
FIG. 4B shows obtaining item or attachment details from the item itself according to an embodiment.
FIG. 4C shows obtaining item or attachment details from the cloud network according to an embodiment.
FIG. 4D shows detecting an attachment or trailer using the communication module according to an embodiment.
FIG. 4E shows detecting an attachment or trailer using wired communication according to an embodiment.
FIG. 4F shows detecting an attachment or trailer using wireless communication according to an embodiment.
FIG. 5A shows input and output to the Range Estimation Module according to an embodiment.
FIG. 5B shows an example communication message format according to an embodiment.
FIG. 5C shows an example message exchange between trailer and the vehicle according to an embodiment.
FIG. 5D shows an example message displayed on the infotainment system of the vehicle according to an embodiment.
FIG. 6A shows a structure of the neural network / machine learning model with a feedback loop according to an embodiment.
FIG. 6B shows a structure of the neural network / machine learning model with reinforcement learning according to an embodiment.
FIG. 6C shows an example block diagram for predicting a range using a machine learning model according to an embodiment.
FIG. 6D shows an example flow chart for continuous monitoring and recommending an action using a machine learning model according to an embodiment.
FIG. 7A shows a block diagram for a method for estimating a range based on change in configuration of the vehicle according to an embodiment.
FIG. 7B shows a block diagram for a system for estimating a range based on change in configuration of the vehicle according to an embodiment.
FIG. 7C shows a block diagram for a method stored on a non-transitory computer medium for estimating a range based on change in configuration of the vehicle according to an embodiment.
FIG. 8A shows a block diagram for a method for detecting an item via communication module and estimating a range according to an embodiment.
FIG. 8B shows a block diagram for a system for detecting an item via communication module and estimating a range according to an embodiment.
FIG. 9A shows a block diagram for a method for estimating a range based on a planned or future change in configuration of the vehicle according to an embodiment.
FIG. 9B shows a block diagram for a system for estimating a range based on a planned or future change in configuration of the vehicle according to an embodiment.
FIG. 9C shows a block diagram for a method stored on a non-transitory computer medium for estimating a range based on a planned or future change in configuration of the vehicle according to an embodiment.
FIG. 10A shows a block diagram for a method for recommending an adjustment for increasing the range of the vehicle according to an embodiment.
FIG. 10B shows a block diagram for a system for recommending an adjustment for increasing the range of the vehicle according to an embodiment.
FIG. 10C shows a block diagram for recommending an adjustment for increasing the range of the vehicle according to an embodiment.
FIG. 11A shows the block diagram of the cyber security module according to an embodiment.
FIG. 11B shows the flowchart of securing the data through the cyber security module.
FIG. 11C shows the flowchart of securing the data through the cyber security module.

### DETAILED DESCRIPTION

For simplicity and clarity of illustration, the figures illustrate the general manner of construction. The description and figures may omit the descriptions and details of well-known features and techniques to avoid unnecessarily obscuring the present disclosure. The figures exaggerate the dimensions of some of the elements relative to other elements to help improve understanding of embodiments of the present disclosure. The same reference numeral in different figures denotes the same element.

Although the detailed description herein contains many specifics for the purpose of illustration, a person of ordinary skill in the art will appreciate that many variations and alterations to the details are considered to be included herein.

Accordingly, the embodiments herein are without any loss of generality to, and without imposing limitations upon, any claims set forth. The terminology used herein is for the purpose of describing particular embodiments only and is not limiting. Unless defined otherwise, all technical and scientific terms used herein have the same meaning as commonly understood by one with ordinary skill in the art to which this disclosure belongs.

As used herein, the articles "a" and "an" used herein refer to one or to more than one (i.e., to at least one) of the grammatical object of the article. By way of example, "an element" means one element or more than one element. Moreover, usage of articles "a" and "an" in the subject specification and annexed drawings construe to mean "one or more" unless specified otherwise or clear from context to mean a singular form.

As used herein, the terms "example" and / or "exemplary" mean serving as an example, instance, or illustration. For the avoidance of doubt, such examples do not limit the herein described subject matter. In addition, any aspect or design described herein as an "example" and / or "exemplary" is not necessarily preferred or advantageous over other aspects or designs, nor does it preclude equivalent exemplary structures and techniques known to those of ordinary skill in the art.

As used herein, the terms "first," "second," "third," and the like in the description and in the claims, if any, distinguish between similar elements and do not necessarily describe a particular sequence or chronological order. The terms are interchangeable under appropriate circumstances such that the embodiments herein are, for example, capable of operation in sequences other than those illustrated or otherwise described herein. Furthermore, the terms "include," "have," and any variations thereof, cover a non-exclusive inclusion such that a process, method, system, article, device, or apparatus that comprises a list of elements is not necessarily limiting to those elements, but may include other elements not expressly listed or inherent to such process, method, system, article, device, or apparatus.

As used herein, the terms "left," "right," "front," "back," "top," "bottom," "over," "under" and the like in the description and in the claims, if any, are for descriptive purposes and not necessarily for describing permanent relative positions. The terms so used are interchangeable under appropriate circumstances such that the embodiments of the apparatus, methods, and / or articles of manufacture described herein are, for example, capable of operation in other orientations than those illustrated or otherwise described herein.

No element act, or instruction used herein is critical or essential unless explicitly described as such. Furthermore, the term "set" includes items (e.g., related items, unrelated items, a combination of related items and unrelated items, etc.) and may be interchangeable with "one or more." Where only one item is intended, the term "one" or similar language is used. Also, the terms "has," "have," "having," or the like are open-ended terms. Further, the phrase "based on" means "based, at least in part, on" unless explicitly stated otherwise.

As used herein, the terms "system," "device," "unit," and / or "module" refer to a different component, component portion, or component of the various levels of the order. However, other expressions that achieve the same purpose may replace the terms.

As used herein, the terms "couple," "coupled," "couples," "coupling," and the like refer to connecting two or more elements mechanically, electrically, and / or otherwise. Two or more electrical elements may be electrically coupled together, but not mechanically or otherwise coupled together. Coupling may be for any length of time, e.g., permanent, or semi-permanent or only for an instant. "Electrical coupling" includes electrical coupling of all types. The absence of the word "removably," "removable," and the like, near the word "coupled" and the like does not mean that the coupling, etc. in question is or is not removable.

As used herein, the term "or" means an inclusive "or" rather than an exclusive "or." That is, unless specified otherwise, or clear from context, "X employs A or B" means any of the natural inclusive permutations. That is, if X employs A; X employs B; or X employs both A and B, then "X employs A or B" is satisfied under any of the foregoing instances.

As used herein, two or more elements or modules are "integral" or "integrated" if they operate functionally together. Two or more elements are "non-integral" if each element can operate functionally independently.

As used herein, the term "real-time" refers to operations conducted as soon as practically possible upon occurrence of a triggering event. A triggering event can include receipt of data necessary to execute a task or to otherwise process information. Because of delays inherent in transmission and / or in computing speeds, the term "real-time" encompasses operations that occur in "near" real-time or somewhat delayed from a triggering event. In a number of embodiments, "real-time" can mean real-time less a time delay for processing (e.g., determining) and / or transmitting data. The particular time delay can vary depending on the type and / or amount of the data, the processing speeds of the hardware, the transmission capability of the communication hardware, the transmission distance, etc. However, in many embodiments, the time delay can be less than approximately one second, two seconds, five seconds, or ten seconds.

As used herein, the term "approximately" can mean within a specified or unspecified range of the specified or unspecified stated value. In some embodiments, "approximately" can mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.

As used herein the term "component" refers to a distinct and identifiable part, element, or unit within a larger system, structure, or entity. It is a building block that serves a specific function or purpose within a more complex whole. Components are often designed to be modular and interchangeable, allowing them to be combined or replaced in various configurations to create or modify systems. Components may be a combination of mechanical, electrical, hardware, firmware, software and/or other engineering elements.

Digital electronic circuitry, or computer software, firmware, or hardware, including the structures disclosed in this specification and their structural equivalents, or in combinations of one or more of them may realize the implementations and all of the functional operations described in this specification. Implementations may be as one or more computer program products i.e., one or more modules of computer program instructions encoded on a computer-readable medium for execution by, or to control the operation of, data processing apparatus. The computer-readable medium may be a machine-readable storage device, a machine-readable storage substrate, a memory device, a composition of matter affecting a machine-readable propagated signal, or a combination of one or more of them. The term "computing system" encompasses all apparatus, devices, and machines for processing data, including by way of example, a programmable processor, a computer, or multiple processors or computers. The apparatus may include, in addition to hardware, code that creates an execution environment for the computer program in question, e.g., code that constitutes processor firmware, a protocol stack, a database management system, an operating system, or a combination of one or more of them. A propagated signal is an artificially generated signal (e.g., a machine-generated electrical, optical, or electromagnetic signal) that encodes information for transmission to a suitable receiver apparatus.

The actual specialized control hardware or software code used to implement these systems and / or methods is not limiting to the implementations. Thus, any software and any hardware can implement the systems and / or methods based on the description herein without reference to specific software code.

A computer program (also known as a program, software, software application, script, or code) is written in any appropriate form of programming language, including compiled or interpreted languages. Any appropriate form, including a standalone program or a module, component, subroutine, or other unit suitable for use in a computing environment may deploy it. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may execute on one computer or on multiple computers that are located at one site or distributed across multiple sites and interconnected by a communication network.

One or more programmable processors, executing one or more computer programs to perform functions by operating on input data and generating output, perform the processes and logic flows described in this specification. The processes and logic flows may also be performed by, and apparatus may also be implemented as, special purpose logic circuitry, for example, without limitation, a Field Programmable Gate Array (FPGA), an Application Specific Integrated Circuit (ASIC), Application Specific Standard Products (ASSPs), System-On-a-Chip (SOC) systems, Complex Programmable Logic Devices (CPLDs), etc.

Processors suitable for the execution of a computer program include, by way of example, both general and special purpose microprocessors, and any one or more processors of any appropriate kind of digital computer. A processor will receive instructions and data from a read-only memory or a random-access memory or both. Elements of a computer can include a processor for performing instructions and one or more memory devices for storing instructions and data. A computer will also include, or is operatively coupled to receive data, transfer data or both, to/from one or more mass storage devices for storing data e.g., magnetic disks, magneto optical disks, optical disks, or solid-state disks. However, a computer need not have such devices. Moreover, another device, e.g., a mobile telephone, a personal digital assistant (PDA), a mobile audio player, a Global Positioning System (GPS) receiver, etc. may embed a computer. Computer-readable media suitable for storing computer program instructions and data include all forms of non-volatile memory, media and memory devices, including, by way of example, semiconductor memory devices (e.g., Erasable Programmable Read-Only Memory (EPROM), Electronically Erasable Programmable Read-Only Memory (EEPROM), and flash memory devices), magnetic disks (e.g., internal hard disks or removable disks), magneto optical disks (e.g. Compact Disc Read-Only Memory (CD ROM) disks, Digital Versatile Disk-Read-Only Memory (DVD-ROM) disks) and solid-state disks. Special purpose logic circuitry may supplement or incorporate the processor and the memory.

To provide for interaction with a user, a computer may have a display device, e.g., a Cathode Ray Tube (CRT) or Liquid Crystal Display (LCD) monitor, for displaying information to the user, and a keyboard and a pointing device, e.g., a mouse or a trackball, by which the user may provide input to the computer. Other kinds of devices provide for interaction with a user as well. For example, feedback to the user may be any appropriate form of sensory feedback, e.g., visual feedback, auditory feedback, or tactile feedback; and a computer may receive input from the user in any appropriate form, including acoustic, speech, or tactile input.

A computing system that includes a back-end component, e.g., a data server, or that includes a middleware component, e.g., an application server, or that includes a front-end component, e.g., a client computer having a graphical user interface or a Web browser through which a user may interact with an implementation, or any appropriate combination of one or more such back-end, middleware, or front-end components, may realize implementations described herein. Any appropriate form or medium of digital data communication, e.g., a communication network may interconnect the components of the system. Examples of communication networks include a Local Area Network (LAN) and a Wide Area Network (WAN), e.g., Intranet and Internet.

The computing system may include clients and servers. A client and server are remote from each other and typically interact through a communication network. The relationship of the client and server arises by virtue of computer programs running on the respective computers and having a client-server relationship with each other.

Embodiments of the present invention may comprise or utilize a special purpose or general purpose computer including computer hardware. Embodiments within the scope of the present invention may also include physical and other computer-readable media for carrying or storing computer-executable instructions and / or data structures. Such computer-readable media can be any media accessible by a general purpose or special purpose computer system. Computer-readable media that store computer-executable instructions are physical storage media. Computer-readable media that carry computer-executable instructions are transmission media. Thus, by way of example and not limitation, embodiments of the invention can comprise at least two distinct kinds of computer-readable media: physical computer-readable storage media and transmission computer-readable media.

Although the present embodiments described herein are with reference to specific example embodiments it will be evident that various modifications and changes may be made to these embodiments without departing from the broader spirit and scope of the various embodiments. For example, hardware circuitry (e.g., Complementary Metal Oxide Semiconductor (CMOS) based logic circuitry), firmware, software (e.g., embodied in a non-transitory machine-readable medium), or any combination of hardware, firmware, and software may enable and operate the various devices, units, and modules described herein. For example, transistors, logic gates, and electrical circuits (e.g., Application Specific Integrated Circuit (ASIC) and / or Digital Signal Processor (DSP) circuit) may embody the various electrical structures and methods.

In addition, a non-transitory machine-readable medium and / or a system may embody the various operations, processes, and methods disclosed herein. Accordingly, the specification and drawings are illustrative rather than restrictive.

Physical computer-readable storage media includes RAM, ROM, EEPROM, CD-ROM or other optical disk storage (such as CDs, DVDs, etc.), magnetic disk storage or other magnetic storage devices, solid-state disks or any other medium. They store desired program code in the form of computer-executable instructions or data structures which can be accessed by a general purpose or special purpose computer.

As used herein, the term "network" refers to one or more data links that enable the transport of electronic data between computer systems and / or modules and / or other electronic devices. When a network or another communications connection (either hardwired, wireless, or a combination of hardwired or wireless) transfers or provides information to a computer, the computer properly views the connection as a transmission medium. A general purpose or special purpose computer access transmission media that can include a network and / or data links which carry desired program code in the form of computer-executable instructions or data structures. The scope of computer-readable media includes combinations of the above, that enable the transport of electronic data between computer systems and / or modules and / or other electronic devices. The term network may include the Internet, a local area network, a wide area network, or combinations thereof. The network may include one or more networks or communication systems, such as the Internet, the telephone system, satellite networks, cable television networks, and various other private and public networks. In addition, the connections may include wired connections (such as wires, cables, fiber optic lines, etc.), wireless connections, or combinations thereof. Furthermore, although not shown, other computers, systems, devices, and networks may also be connected to the network. Network refers to any set of devices or subsystems connected by links joining (directly or indirectly) a set of terminal nodes sharing resources located on or provided by network nodes. The computers use common communication protocols over digital interconnections to communicate with each other. For example, subsystems may comprise the cloud. Cloud refers to servers that are accessed over the Internet, and the software and databases that run on those servers.

Further, upon reaching various computer system components, program code in the form of computer-executable instructions or data structures can be transferred automatically from transmission computer-readable media to physical computer-readable storage media (or vice versa). For example, computer-executable instructions or data structures received over a network or data link can be buffered in RAM within a Network Interface Module (NIC), and then eventually transferred to computer system RAM and / or to less volatile computer-readable physical storage media at a computer system. Thus, computer system components that also (or even primarily) utilize transmission media may include computer-readable physical storage media.

Computer-executable instructions comprise, for example, instructions and data which cause a general purpose computer, special purpose computer, or special purpose processing device to perform a certain function or group of functions. The computer-executable instructions may be, for example, binary, intermediate format instructions such as assembly language, or even source code. Although the subject matter herein described is in a language specific to structural features and / or methodological acts, the described features or acts described do not limit the subject matter defined in the claims. Rather, the herein described features and acts are example forms of implementing the claims.

While this specification contains many specifics, these do not construe as limitations on the scope of the disclosure or of the claims, but as descriptions of features specific to particular implementations. A single implementation may implement certain features described in this specification in the context of separate implementations. Conversely, multiple implementations separately or in any suitable sub-combination may implement various features described herein in the context of a single implementation. Moreover, although features described herein as acting in certain combinations and even initially claimed as such, one or more features from a claimed combination may in some cases be excised from the combination, and the claimed combination may be directed to a sub-combination or variation of a sub-combination.

Similarly, while operations depicted herein in the drawings in a particular order to achieve desired results, this should not be understood as requiring that such operations be performed in the particular order shown or in sequential order or that all illustrated operations be performed, to achieve desirable results. In certain circumstances, multitasking and parallel processing may be advantageous. Moreover, the separation of various system components in the implementations should not be understood as requiring such separation in all implementations, and it should be understood that the described program components and systems may be integrated together in a single software product or packaged into multiple software products.

Even though particular combinations of features are recited in the claims and / or disclosed in the specification, these combinations are not intended to limit the disclosure of possible implementations. Other implementations are within the scope of the claims. For example, the actions recited in the claims may be performed in a different order and still achieve desirable results. In fact, many of these features may be combined in ways not specifically recited in the claims and / or disclosed in the specification. Although each dependent claim may directly depend on only one claim, the disclosure of possible implementations includes each dependent claim in combination with every other claim in the claim set.

Further, a computer system including one or more processors and computer-readable media such as computer memory may practice the methods. In particular, one or more processors execute computer-executable instructions, stored in the computer memory, to perform various functions such as the acts recited in the embodiments.

Those skilled in the art will appreciate that the invention may be practiced in network computing environments with many types of computer system configurations including personal computers, desktop computers, laptop computers, message processors, hand-held devices, multiprocessor systems, microprocessor-based or programmable consumer electronics, network PCs, minicomputers, mainframe computers, mobile telephones, PDAs, pagers, routers, switches, etc. Distributed system environments where local and remote computer systems, which are linked (either by hardwired data links, wireless data links, or by a combination of hardwired and wireless data links) through a network, both perform tasks may also practice the invention. In a distributed system environment, program modules may be located in both local and remote memory storage devices.

The following terms and phrases, unless otherwise indicated, shall be understood to have the following meanings.

As used herein, the term "Cryptographic protocol" is also known as security protocol or encryption protocol. It is an abstract or concrete protocol that performs a security-related function and applies cryptographic methods often as sequences of cryptographic primitives. A protocol describes usage of algorithms. A sufficiently detailed protocol includes details about data structures and representations, to implement multiple, interoperable versions of a program.

Secure application-level data transport widely uses cryptographic protocols. A cryptographic protocol usually incorporates at least some of these aspects: key agreement or establishment, entity authentication, symmetric encryption, and message authentication material construction, secured application-level data transport, non-repudiation methods, secret sharing methods, and secure multi-party computation.

Networking switches use cryptographic protocols, like Secure Socket Layer (SSL) and Transport Layer Security (TLS), the successor to SSL, to secure data communications over a wireless network.

As used herein, the term "Unauthorized access" is when someone gains access to a website, program, server, service, or other system using someone else's account or other methods. For example, if someone kept guessing a password or username for an account that was not theirs until they gained access, it is considered unauthorized access.

As used herein, the term "IoT" stands for Internet of Things which describes the network of physical objects "things" or objects embedded with sensors, software, and other technologies for the purpose of connecting and exchanging data with other devices and systems over the internet.

As used herein "Machine learning " refers to algorithms that give a computer the ability to learn without explicit programming, including algorithms that learn from and make predictions about data. Machine learning techniques include, but are not limited to, support vector machine, artificial neural network (ANN) (also referred to herein as a "neural net"), deep learning neural network, logistic regression, discriminant analysis, random forest, linear regression, rules-based machine learning, Naive Bayes, nearest neighbor, decision tree, decision tree learning, and hidden Markov, etc. For the purposes of clarity, part of a machine learning process can use algorithms such as linear regression or logistic regression. However, using linear regression or another algorithm as part of a machine learning process is distinct from performing a statistical analysis such as regression with a spreadsheet program. The machine learning process can continually learn and adjust the classifier as new data becomes available and does not rely on explicit or rules-based programming. The ANN may be featured with a feedback loop to adjust the system output dynamically as it learns from the new data as it becomes available. In machine learning, backpropagation and feedback loops are used to train the Artificial Intelligence/Machine Learning (AI/ML) model improving the model's accuracy and performance over time. Statistical modeling relies on finding relationships between variables (e.g., mathematical equations) to predict an outcome.

As used herein, the term "Data mining" is a process used to turn raw data into useful information. It is the process of analyzing large datasets to uncover hidden patterns, relationships, and insights that can be useful for decision-making and prediction.

As used herein, the term "Data acquisition" is the process of sampling signals that measure real world physical conditions and converting the resulting samples into digital numeric values that a computer manipulates. Data acquisition systems typically convert analog waveforms into digital values for processing. The components of data acquisition systems include sensors to convert physical parameters to electrical signals, signal conditioning circuitry to convert sensor signals into a form that can be converted to digital values, and analog-to-digital converters to convert conditioned sensor signals to digital values. Stand-alone data acquisition systems are often called data loggers.

As used herein, the term "Dashboard" is a type of interface that visualizes particular Key Performance Indicators (KPIs) for a specific goal or process. It is based on data visualization and infographics.

As used herein, a "Database" is a collection of organized information so that it can be easily accessed, managed, and updated. Computer databases typically contain aggregations of data records or files.

As used herein, the term "Data set" (or "Dataset") is a collection of data. In the case of tabular data, a data set corresponds to one or more database tables, where every column of a table represents a particular variable, and each row corresponds to a given record of the data set in question. The data set lists values for each of the variables, such as height and weight of an object, for each member of the data set. Each value is known as a datum. Data sets can also consist of a collection of documents or files.

As used herein, a "Sensor" is a device that detects and measures physical properties from the surrounding environment and converts this information into electrical or digital signals for further processing. Sensors play a crucial role in collecting data for various applications across industries. Sensors may be made of electronic, mechanical, chemical, or other engineering components. Examples include sensors to measure temperature, pressure, humidity, proximity, light, acceleration, orientation etc.

The term "infotainment system" or "in-vehicle infotainment system" (IVI) as used herein refers to a combination of vehicle systems which are used to deliver entertainment and information. In an example, the information may be delivered to the driver and the passengers of a vehicle/occupants through audio/ video interfaces, control elements like touch screen displays, button panel, voice commands, and more. Some of the main components of an in-vehicle infotainment systems are integrated head-unit, heads-up display, high-end Digital Signal Processors (DSPs), and Graphics Processing Units (GPUs) to support multiple displays, operating systems, Controller Area Network (CAN), Low-Voltage Differential Signaling (LVDS), and other network protocol support (as per the requirement), connectivity modules, automotive sensors integration, digital instrument cluster, etc.

The term "environment" or "surrounding" as used herein refers to surroundings and the space in which a vehicle is navigating. It refers to dynamic surroundings in which a vehicle is navigating which includes other vehicles, obstacles, pedestrians, lane boundaries, traffic signs and signals, speed limits, potholes, snow, water logging etc.

The term "autonomous mode" as used herein refers to an operating mode which is independent and unsupervised.

The term "vehicle" as used herein refers to a thing used for transporting people or goods. Automobiles, cars, trucks, buses etc. are examples of vehicles.

The term "autonomous vehicle" also referred to as self-driving vehicle, driverless vehicle, robotic vehicle as used herein refers to a vehicle incorporating vehicular automation, that is, a vehicle that can sense its environment and move safely with little or no human input. Self-driving vehicles combine a variety of sensors to perceive their surroundings, such as thermographic cameras, Radio Detection and Ranging (RADAR), Light Detection and Ranging (LIDAR), Sound Navigation and Ranging (SONAR), Global Positioning System (GPS), odometry and inertial measurement unit. Control systems, designed for the purpose, interpret sensor information to identify appropriate navigation paths, as well as obstacles and relevant signage.

The term "communication module" or "communication system" as used herein refers to a system which enables the information exchange between two points. The process of transmission and reception of information is called communication. The elements of communication include but are not limited to a transmitter of information, channel or medium of communication and a receiver of information.

The term "autonomous communication" as used herein comprises communication over a period with minimal supervision under different scenarios and is not solely or completely based on pre-coded scenarios or pre-coded rules or a predefined protocol. Autonomous communication, in general, happens in an independent and an unsupervised manner. In an embodiment, a communication module is enabled for autonomous communication.

The term "connection" as used herein refers to a communication link. It refers to a communication channel that connects two or more devices for the purpose of data transmission. It may refer to a physical transmission medium such as a wire, or to a logical connection over a multiplexed medium such as a radio channel in telecommunications and computer networks. A channel is used for the information transfer of, for example, a digital bit stream, from one or several senders to one or several receivers. A channel has a certain capacity for transmitting information, often measured by its bandwidth in Hertz (Hz) or its data rate in bits per second. For example, a Vehicle-to-Vehicle (V2V) communication may wirelessly exchange information about the speed, location and heading of surrounding vehicles.

The term "communication" as used herein refers to the transmission of information and / or data from one point to another. Communication may be by means of electromagnetic waves. Communication is also a flow of information from one point, known as the source, to another, the receiver. Communication comprises one of the following: transmitting data, instructions, information or a combination of data, instructions, and information. Communication happens between any two communication systems or communicating units. The term communication, herein, includes systems that combine other more specific types of communication, such as: V2I (Vehicle-to-Infrastructure), V2N (Vehicle-to-Network), V2V (Vehicle-to-Vehicle), V2P (Vehicle-to-Pedestrian), V2D (Vehicle-to-Device), V2G (Vehicle-to-Grid), and Vehicle-to-Everything (V2X) communication.

Further, the communication apparatus is configured on a computer with the communication function and is connected for bidirectional communication with the on-vehicle emergency report apparatus by a communication line through a radio station and a communication network such as a public telephone network or by satellite communication through a communication satellite. The communication apparatus is adapted to communicate, through the communication network, with communication terminals.

The term "Vehicle-to-Vehicle (V2V) communication" refers to the technology that allows vehicles to broadcast and receive messages. The messages may be omni-directional messages, creating a 360-degree "awareness" of other vehicles in proximity. Vehicles may be equipped with appropriate software (or safety applications) that can use the messages from surrounding vehicles to determine potential crash threats as they develop.

The term "Vehicle-to-Everything (V2X) communication" as used herein refers to transmission of information from a vehicle to any entity that may affect the vehicle, and vice versa. Depending on the underlying technology employed, there are two types of V2X communication technologies: cellular networks and other technologies that support direct device-to-device communication (such as Dedicated Short-Range Communication (DSRC), Port Community System (PCS), Bluetooth^{®}, Wi-Fi^{®}, etc.).

The term "protocol" as used herein refers to a procedure required to initiate and maintain communication; a formal set of conventions governing the format and relative timing of message exchange between two communications terminals; a set of conventions that govern the interactions of processes, devices, and other components within a system; a set of signaling rules used to convey information or commands between boards connected to the bus; a set of signaling rules used to convey information between agents; a set of semantic and syntactic rules that determine the behavior of entities that interact; a set of rules and formats (semantic and syntactic) that determines the communication behavior of simulation applications; a set of conventions or rules that govern the interactions of processes or applications between communications terminals; a formal set of conventions governing the format and relative timing of message exchange between communications terminals; a set of semantic and syntactic rules that determine the behavior of functional units in achieving meaningful communication; a set of semantic and syntactic rules for exchanging information.

The term "communication protocol" as used herein refers to standardized communication between any two systems. An example communication protocol is a DSRC protocol. The DSRC protocol uses a specific frequency band (e.g., 5.9 GHz (Gigahertz)) and specific message formats (such as the Basic Safety Message, Signal Phase and Timing, and Roadside Alert ) to enable communications between vehicles and infrastructure components, such as traffic signals and roadside sensors. DSRC is a standardized protocol, and its specifications are maintained by various organizations, including the Institute of Electrical and Electronics Engineers (IEEE) and Society of Automotive Engineers (SAE) International.

The term "bidirectional communication" as used herein refers to an exchange of data between two components. In an example, the first component can be a vehicle and the second component can be an infrastructure that is enabled by a system of hardware, software, and firmware.

The term "alert" or "alert signal" refers to a communication to attract attention. An alert may include visual, tactile, audible alert, and a combination of these alerts to warn drivers or occupants. These alerts allow receivers, such as drivers or occupants, the ability to react and respond quickly.

The term "in communication with" as used herein, refers to any coupling, connection, or interaction using signals to exchange information, message, instruction, command, and / or data, using any system, hardware, software, protocol, or format regardless of whether the exchange occurs wirelessly or over a wired connection.

The term "electronic control unit" (ECU), also known as an "electronic control module" (ECM), is usually a module that controls one or more subsystems. Herein, an ECU may be installed in a car or other motor vehicle. It may refer to many ECUs, and can include but not limited to, Engine Control Module (ECM), Powertrain Control Module (PCM), Transmission Control Module (TCM), Brake Control Module (BCM) or Electronic Brake Control Module (EBCM), Central Control Module (CCM), Central Timing Module (CTM), General Electronic Module (GEM), Body Control Module (BCM), and Suspension Control Module (SCM). ECUs together are sometimes referred to collectively as the vehicles' computer or vehicles' central computer and may include separate computers. In an example, the electronic control unit can be an embedded system in automotive electronics. In another example, the electronic control unit is wirelessly coupled with automotive electronics.

The terms "non-transitory computer-readable medium" and "computer-readable medium" include a single medium or multiple media such as a centralized or distributed database, and / or associated caches and servers that store one or more sets of instructions. Further, the terms "non-transitory computer-readable medium" and "computer-readable medium" include any tangible medium that is capable of storing, encoding, or carrying a set of instructions for execution by a processor that, for example, when executed, cause a system to perform any one or more of the methods or operations disclosed herein. As used herein, the term "computer readable medium" is expressly defined to include any type of computer readable storage device and / or storage disk and to exclude propagating signals.

The term "Vehicle Data bus" as used herein represents the interface to the vehicle data bus (e.g., Controller Area Network (CAN), Local Interconnect Network (LIN), Ethernet/IP, FlexRay, and Media Oriented Systems Transport (MOST)) that may enable communication between the Vehicle on-board equipment (OBE) and other vehicle systems to support connected vehicle applications.

The term, "handshaking" refers to an exchange of predetermined signals between agents connected by a communications channel to assure each that it is connected to the other (and not to an imposter). This may also include the use of passwords and codes by an operator. Handshaking signals are transmitted back and forth over a communications network to establish a valid connection between two stations. A hardware handshake uses dedicated wires such as the request-to-send (RTS) and clear-to-send (CTS) lines in a Recommended Standard 232 (RS-232) serial transmission. A software handshake sends codes such as "synchronize" (SYN) and "acknowledge" (ACK) in a Transmission Control Protocol/Internet Protocol (TCP/IP) transmission.

The term "computer vision module" or "computer vision system" allows the vehicle to "see" and interpret the world around it. This system uses a combination of cameras, sensors, and other technologies such as Radio Detection and Ranging (RADAR), Light Detection and Ranging (LIDAR), Sound Navigation and Ranging (SONAR), Global Positioning System (GPS), and Machine learning algorithms, etc. to collect visual data about the vehicle's surroundings and to analyze that data in real-time. The computer vision system is designed to perform a range of tasks, including object detection, lane detection, and pedestrian recognition. It uses deep learning algorithms and other machine learning techniques to analyze visual data and make decisions about how to control the vehicle. For example, the computer vision system may use object detection algorithms to identify other vehicles, pedestrians, and obstacles in the vehicle's path. It can then use this information to calculate the vehicle's speed and direction, adjust its trajectory to avoid collisions, and apply the brakes or accelerate as needed. It allows the vehicle to navigate safely and efficiently in a variety of driving conditions.

As used herein, the term "driver" refers to such an occupant, even when that occupant is not actually driving the vehicle but is situated in the vehicle so as to be able to take over control and function as the driver of the vehicle when the vehicle control system hands over control to the occupant or driver or when the vehicle control system is not operating in an autonomous or semi-autonomous mode.

The term "host vehicle" as used herein refers to a vehicle that is observing the environment in order to decide based on observations.

The term "target vehicle" as used herein refers to a vehicle on which the host vehicle has a focus. The target vehicle may or may not be an autonomous vehicle. It may or may not have been enabled for Vehicle-to-Vehicle (V2V) communication.

The term "nearby vehicle" or "neighboring vehicle" or "surrounding vehicle" as used herein refers to a vehicle anywhere near to the host vehicle within a communication range of the host vehicle. It may or may not be an autonomous vehicle. It may or may not have been enabled for V2V communication. In some embodiments, a neighboring vehicle may more specifically refer to a vehicle that is immediately in the next lane or behind the host vehicle.

The term "road surface condition" as used herein refers to the physical state of the roadway, including its smoothness, texture, and friction. It can be affected by several factors such as weather, traffic volume, and maintenance practices. In an embodiment, it may be classified as dry, wet, snow-covered, or icy.

The term "application server" refers to a server that hosts applications or software that delivers a business application through a communication protocol. An application server framework is a service layer model. It includes software components available to a software developer through an application programming interface. It is system software that resides between the operating system (OS) on one side, the external resources such as a database management system (DBMS), communications and Internet services on another side, and the users' applications on the third side.

The term "cyber security" as used herein refers to application of technologies, processes, and controls to protect systems, networks, programs, devices, and data from cyber-attacks.

The term "cyber security module" as used herein refers to a module comprising application of technologies, processes, and controls to protect systems, networks, programs, devices and data from cyber-attacks and threats. It aims to reduce the risk of cyber-attacks and protect against the unauthorized exploitation of systems, networks, and technologies. It includes, but is not limited to, critical infrastructure security, application security, network security, cloud security, Internet of Things (IoT) security.

The term "encrypt" used herein refers to securing digital data using one or more mathematical techniques, along with a password or "key" used to decrypt the information. It refers to converting information or data into a code, especially to prevent unauthorized access. It may also refer to concealing information or data by converting it into a code. It may also be referred to as cipher, code, encipher, encode. A simple example is representing alphabets with numbers - say, 'A' is '01', 'B' is `02', and so on. For example, a message like "HELLO" will be encrypted as "0805121215," and this value will be transmitted over the network to the recipient(s).

The term "decrypt" used herein refers to the process of converting an encrypted message back to its original format. It is generally a reverse process of encryption. It decodes the encrypted information so that only an authorized user can decrypt the data because decryption requires a secret key or password. This term could be used to describe a method of unencrypting the data manually or unencrypting the data using the proper codes or keys.

The term "cyber security threat" used herein refers to any possible malicious attack that seeks to unlawfully access data, disrupt digital operations, or damage information. A malicious act includes but is not limited to damaging data, stealing data, or disrupting digital life in general. Cyber threats include, but are not limited to, malware, spyware, phishing attacks, ransomware, zero-day exploits, trojans, advanced persistent threats, wiper attacks, data manipulation, data destruction, rogue software, malvertising, unpatched software, computer viruses, man-in-the-middle attacks, data breaches, Denial of Service (DoS) attacks, and other attack vectors.

The term "hash value" used herein can be thought of as fingerprints for files. The contents of a file are processed through a cryptographic algorithm, and a unique numerical value, the hash value, is produced that identifies the contents of the file. If the contents are modified in any way, the value of the hash will also change significantly. Example algorithms used to produce hash values: the Message Digest-5 (MD5) algorithm and Secure Hash Algorithm-1 (SHA1).

The term "integrity check" as used herein refers to the checking for accuracy and consistency of system related files, data, etc. It may be performed using checking tools that can detect whether any critical system files have been changed, thus enabling the system administrator to look for unauthorized alteration of the system. For example, data integrity corresponds to the quality of data in the databases and to the level by which users examine data quality, integrity, and reliability. Data integrity checks verify that the data in the database is accurate, and functions as expected within a given application.

The term "alarm" as used herein refers to a trigger when a component in a system or the system fails or does not perform as expected. The system may enter an alarm state when a certain event occurs. An alarm indication signal is a visual signal to indicate the alarm state. For example, when a cyber security threat is detected, a system administrator may be alerted via sound alarm, a message, a glowing LED, a pop-up window, etc. Alarm indication signal may be reported downstream from a detecting device, to prevent adverse situations or cascading effects.

As used herein, the term "cryptographic protocol" is also known as security protocol or encryption protocol. It is an abstract or concrete protocol that performs a security-related function and applies cryptographic methods often as sequences of cryptographic primitives. A protocol describes how the algorithms should be used. A sufficiently detailed protocol includes details about data structures and representations, at which point it can be used to implement multiple, interoperable versions of a program. Cryptographic protocols are widely used for secure application-level data transport. A cryptographic protocol usually incorporates at least some of these aspects: key agreement or establishment, entity authentication, symmetric encryption, and message authentication material construction, secured application-level data transport, non-repudiation methods, secret sharing methods, and secure multi-party computation. Hashing algorithms may be used to verify the integrity of data. Secure Socket Layer (SSL) and Transport Layer Security (TLS), the successor to SSL, are cryptographic protocols that may be used by networking switches to secure data communications over a network.

The term "range of a vehicle" as used herein refers to the maximum distance it can travel before needing to be refueled or recharged. The term is commonly used in the context of Electric Vehicles (Evs) and hybrid vehicles, as well as traditional internal combustion engine vehicles that use gasoline, diesel, or other fuels. The range is typically measured in miles or kilometers and represents the distance the vehicle can cover.

The term "item" as used herein in reference to a vehicle encompasses a range of things or attachments that may be added to the vehicle. It may also include a separate, unpowered trailer that is connected to a motorized vehicle. Broadly, it can be referred to as anything that changes or affects the vehicle's range. Some of the examples could be cargo, trailers, bikes, boats, etc. Some of the accessories for the attachment facilitation can either be factory-installed by the manufacturer or added aftermarket by vehicle owners or professionals which may also affect the range. Some common examples include roof racks for carrying extra cargo, towing hitches for hauling trailers, bike racks for bicycle transportation, and cargo carriers for carrying additional luggage and gear, etc. A trailer is any wheeled construction that is pulled by another vehicle. Some common trailer types include utility trailers, popup campers, travel trailers, livestock trailers, flatbed trailers and boat trailers. A trailer can also include an automotive vehicle towed by recreational vehicle (RV) or another automotive vehicle.

The term "vehicle configuration" refers to the specific setup or arrangement of items in a vehicle, considering whether attachments or additional items are present or not and where they are present. This configuration can involve a variety of accessories and improvements intended to enhance the vehicle's functionality, appearance, and / or performance. These modifications may include factory-installed features by the manufacturer or aftermarket additions by vehicle owners or professionals. Examples of different vehicle configurations include having a trailer attached versus not having one, having a bike rack installed versus not having one, and having a bike secured in the bike rack versus not having a bike in the rack. Additionally, the location of the bike, such as on a luggage rack above the vehicle or on a bike rack behind the vehicle, is also considered in the vehicle configuration. The concept of vehicle configuration becomes relevant when changes affect the vehicle's range, indicating how and how much such alterations influence the vehicle's overall range. A change in vehicle configuration is any change to the vehicle such that it impacts range.

The term "smart range" as used herein refers to an estimated distance that a vehicle can travel on a single charge or a tank of fuel, considering several factors such as driving conditions, terrain, weather, and driving habits along with attachments. For example, the system may employ sensors and advanced Artificial Intelligence/Machine Learning algorithms (AI/ML), and data processing to make informed estimations. It may utilize real-time data and historical patterns to create a more accurate and personalized range prediction. The smart aspect of the system allows it to learn from past behaviors and optimize its calculations for different drivers and scenarios.

The term "adaptive" as used herein refers to the ability to adjust or modify the systems in response to varying conditions, circumstances, or input. When adaptive, the range estimation system is capable of adjusting and updating its calculations based on the changing conditions during a drive. For example, adaptive range can adjust or modify the system to increase the estimated or available range according to current situation, environment, and requirements. As the conditions change, the system continuously recalculates the estimated range to provide a more accurate prediction of how far the vehicle can travel before needing to recharge or refuel. This adaptability ensures that the range estimate remains relevant and reliable even as driving conditions evolve.

The term "adaptive smart range estimation" as used herein refers to a dynamic and intelligent system or process that calculates and provides real-time estimates of the distance a vehicle can travel on a single charge or tank of fuel. This estimation considers a variety of changing factors, such as driving conditions, terrain, weather, driving habits, and the current state of the vehicle's systems (e.g., battery health in electric vehicles). For example, the system may utilize various technologies (such as vision system and AI/ML technology) that dynamically and intelligently calculates how far a vehicle can travel based on current conditions, historical data, and real-time inputs from the vehicle and the user. This helps drivers plan their journeys more effectively and avoid unexpected issues related to energy or fuel depletion.

The term "planned" as used herein refers to something that has been carefully thought out, organized, and arranged in advance with a specific intention or purpose. When something is planned, it means that steps, actions, or decisions have been taken beforehand to achieve a particular goal or outcome. Planning involves considering several factors, making decisions, setting goals, and creating a structured approach to achieve those goals. For example, planning a holiday can include items and people to be picked and dropped at certain locations, a starting location of the trip, a destination location, and travel dates and times.

The embodiments described herein can be directed to one or more of a system, a method, an apparatus, and/or a computer program product at any possible technical detail level of integration. The computer program product can include a computer readable storage medium (or media) having computer readable program instructions thereon for causing a processor to carry out aspects of the one or more embodiments described herein. The computer readable storage medium can be a tangible device that can retain and store instructions for use by an instruction execution device. For example, the computer readable storage medium can be, but is not limited to, an electronic storage device, a magnetic storage device, an optical storage device, an electromagnetic storage device, a superconducting storage device, and / or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon and / or any suitable combination of the foregoing. A computer readable storage medium, as used herein, does not construe transitory signals per se, such as radio waves and / or other freely propagating electromagnetic waves, electromagnetic waves propagating through a waveguide and / or other transmission media (e.g., light pulses passing through a fiber-optic cable), and / or electrical signals transmitted through a wire.

Computer readable program instructions described herein are downloadable to respective computing/processing devices from a computer readable storage medium and / or to an external computer or external storage device via a network, for example, the Internet, a local area network, a wide area network and / or a wireless network. The network can comprise copper transmission cables, optical transmission fibers, wireless transmission, routers, firewalls, switches, gateway computers, and / or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the one or more embodiments described herein can be assembler instructions, instruction-set-architecture (ISA) instructions, machine instructions, machine dependent instructions, microcode, firmware instructions, state-setting data, configuration data for integrated circuitry, and / or source code and / or object code written in any combination of one or more programming languages. Programming languages may be high-level programming languages, low-level programming languages, compiled languages, interpreted languages, scripting languages, functional programming languages, markup languages etc. It includes object oriented programming languages such as Smalltalk, C++ or the like, and / or procedural programming languages, such as the "C" programming language and / or similar programming languages. The computer readable program instructions can execute entirely on a computer, partly on a computer, as a stand-alone software package, partly on a computer and / or partly on a remote computer or entirely on the remote computer and / or server. In the latter scenario, the remote computer can be connected to a computer through any type of network, including a local area network (LAN) and / or a wide area network (WAN), and / or the connection can be made to an external computer (for example, through the Internet using an Internet Service Provider). In one or more embodiments, electronic circuitry including, for example, programmable logic circuitry, field-programmable gate arrays (FPGA), and / or programmable logic arrays (PLA) can execute the computer readable program instructions by utilizing state information of the computer readable program instructions to personalize the electronic circuitry, in order to perform aspects of the one or more embodiments described herein.

Aspects of the one or more embodiments described herein are described with reference to flowchart illustrations and / or block diagrams of methods, apparatus (systems), and computer program products according to one or more embodiments described herein. Each block of the flowchart illustrations and / or block diagrams, and combinations of blocks in the flowchart illustrations and / or block diagrams, can be implemented by computer readable program instructions. These computer readable program instructions can be provided to a processor of a general purpose computer, special purpose computer and / or other programmable data processing apparatus to produce a machine, such that the instructions, which execute via the processor of the computer or other programmable data processing apparatus, can create means for implementing the functions/acts specified in the flowchart and / or block diagram block or blocks. These computer readable program instructions can also be stored in a computer readable storage medium that can direct a computer, a programmable data processing apparatus and / or other devices to function in a particular manner, such that the computer readable storage medium having instructions stored therein can comprise an article of manufacture including instructions which can implement aspects of the function/act specified in the flowchart and / or block diagram block or blocks. The computer readable program instructions can also be loaded onto a computer, other programmable data processing apparatus and / or other device to cause a series of operational acts to be performed on the computer, other programmable apparatus and / or other device to produce a computer implemented process, such that the instructions which execute on the computer, other programmable apparatus and / or other device implement the functions/acts specified in the flowchart and / or block diagram block or blocks.

The flowcharts and block diagrams in the figures illustrate the architecture, functionality and / or operation of possible implementations of systems, computer-implementable methods and / or computer program products according to one or more embodiments described herein. In this regard, each block in the flowchart or block diagrams can represent a module, segment and / or portion of instructions, which comprises one or more executable instructions for implementing the specified logical function(s). In one or more alternative implementations, the functions noted in the blocks can occur out of the order noted in the Figures. For example, two blocks shown in succession can be executed substantially concurrently, and / or the blocks can sometimes be executed in the reverse order, depending upon the functionality involved. It will also be noted that each block of the block diagrams and / or flowchart illustration, and / or combinations of blocks in the block diagrams and / or flowchart illustration, can be implemented by special purpose hardware-based systems that can perform the specified functions and / or acts and / or carry out one or more combinations of special purpose hardware and / or computer instructions.

While the subject matter described herein is in the general context of computer-executable instructions of a computer program product that runs on a computer and / or computers, those skilled in the art will recognize that the one or more embodiments herein also can be implemented in combination with one or more other program modules. Program modules include routines, programs, components, data structures, and / or the like that perform particular tasks and / or implement particular abstract data types. Moreover, other computer system configurations, including single-processor and / or multiprocessor computer systems, mini-computing devices, mainframe computers, as well as computers, hand-held computing devices (e.g., PDA, phone), microprocessor-based or programmable consumer and / or industrial electronics and / or the like can practice the herein described computer-implemented methods. Distributed computing environments, in which remote processing devices linked through a communications network perform tasks, can also practice the illustrated aspects. However, stand-alone computers can practice one or more, if not all aspects of the one or more embodiments described herein. In a distributed computing environment, program modules can be located in both local and remote memory storage devices.

As used in this application, the terms "component," "system," "platform," "interface," and / or the like, can refer to and / or can include a computer-related entity or an entity related to an operational machine with one or more specific functionalities. The entities described herein can be either hardware, a combination of hardware and software, software, or software in execution. For example, a component can be, but is not limited to being, a process running on a processor, a processor, an object, an executable, a thread of execution, a program and / or a computer. By way of illustration, both an application running on a server and the server can be a component. One or more components can reside within a process and / or thread of execution and a component can be localized on one computer and / or distributed between two or more computers. In another example, respective components can execute from various computer readable media having various data structures stored thereon. The components can communicate via local and / or remote processes such as in accordance with a signal having one or more data packets (e.g., data from one component interacting with another component in a local system, distributed system and / or across a network such as the Internet with other systems via the signal). As another example, a component can be an apparatus with specific functionality provided by mechanical parts operated by electric or electronic circuitry, which is operated by a software and / or firmware application executed by a processor. In such a case, the processor can be internal and / or external to the apparatus and can execute at least a part of the software and / or firmware application. As yet another example, a component can be an apparatus that provides specific functionality through electronic components without mechanical parts, where the electronic components can include a processor and / or other means to execute software and / or firmware that confers at least in part the functionality of the electronic components. In an aspect, a component can emulate an electronic component via a virtual machine, e.g., within a cloud computing system.

As it is employed in the subject specification, the term "processor" can refer to any computing processing unit and / or device comprising, but not limited to, single-core processors; single-processors with software multi-thread execution capability; multi-core processors; multi-core processors with software multi-thread execution capability; multi-core processors with hardware multithread technology; parallel platforms; and / or parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, and / or any combination thereof designed to perform the functions described herein. Further, processors can exploit nano-scale architectures such as, but not limited to, molecular based transistors, switches and / or gates, in order to optimize space usage and / or to enhance performance of related equipment. A combination of computing processing units can implement a processor.

Herein, terms such as "store," "storage," "data store," data storage," "database," and any other information storage component relevant to operation and functionality of a component refer to "memory components," entities embodied in a "memory," or components comprising a memory. Memory and / or memory components described herein can be either volatile memory or nonvolatile memory or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, and / or nonvolatile random access memory (RAM) (e.g., ferroelectric RAM (FeRAM). Volatile memory can include RAM, which can function as external cache memory, for example. By way of illustration and not limitation, RAM can be available in many forms such as synchronous RAM (SRAM), dynamic RAM (DRAM), synchronous DRAM (SDRAM), double data rate SDRAM (DDR SDRAM), enhanced SDRAM (ESDRAM), Synch link DRAM (SLDRAM), direct Rambus RAM (DRRAM), direct Rambus dynamic RAM (DRDRAM) and / or Rambus dynamic RAM (RDRAM). Additionally, the described memory components of systems and / or computer-implemented methods herein include, without being limited to including, these and / or any other suitable types of memory.

The embodiments described herein include mere examples of systems and computer-implemented methods. It is, of course, not possible to describe every conceivable combination of components and / or computer-implemented methods for purposes of describing the one or more embodiments, but one of ordinary skill in the art can recognize that many further combinations and / or permutations of the one or more embodiments are possible. Furthermore, to the extent that the terms "includes," "has," "possesses," and the like are used in the detailed description, claims, appendices and / or drawings such terms are intended to be inclusive in a manner similar to the term "comprising" as "comprising" is interpreted when employed as a transitional word in a claim.

Other specific forms may embody the present invention without departing from its spirit or characteristics. The described embodiments are in all respects illustrative and not restrictive. Therefore, the appended claims rather than the description herein indicate the scope of the invention. All variations which come within the meaning and range of equivalency of the claims are within their scope.

The descriptions of the one or more embodiments are for purposes of illustration but are not exhaustive or limiting to the embodiments described herein. Many modifications and variations will be apparent to those of ordinary skill in the art without departing from the scope and spirit of the described embodiments. The terminology used herein best explains the principles of the embodiments, the practical application and / or technical improvement over technologies found in the marketplace, and / or to enable others of ordinary skill in the art to understand the embodiments described herein.

In an embodiment, the system provides range estimation. The range may be an electrical range estimate or fuel range estimate depending on the kind of vehicle. Prior art systems provide estimation for range. They provide estimation of how many miles a vehicle can go based on the charge of the vehicle or the fuel. However, the prior art systems do not provide a range estimate when the vehicle has attachments or additional items attached to it. Prior art systems do not provide range estimation of a vehicle when a trailer is attached to the vehicle.

The range is an essential factor for consumers when considering a vehicle's suitability for their needs, especially for those who regularly undertake long-distance trips or have limited access to charging or refueling infrastructure. Manufacturers often provide range estimates based on standardized testing procedures, but real-world range may vary depending on driving habits, weather conditions, and other factors. In the case of traditional internal combustion engine vehicles, the range is determined by the fuel efficiency and the capacity of the fuel tank and for electric vehicles it depends on battery efficiency and battery capacity. It represents the distance the vehicle can travel before the fuel tank needs to be refilled or recharging has to be done. Apart from the design and performance factors that influence range, there are many other factors such as additional load and driving conditions that influence range. In an embodiment, the application deals with these factors such as additional load, driving conditions, driving habits, etc., that influence the range.

Today, the range of a vehicle is based on the vehicle's specification and total fuel / charge available. The problem is that when the owner of a vehicle adds additional items to the vehicle, it is difficult to determine the range (e.g., fuel based vehicles or electric vehicles) of the vehicle. For example, when an owner adds a trailer and a boat, the vehicle system does not have the means to determine the impact of the additional weight. This can lead to inaccurate range estimation which can leave the driver stranded.

In an aspect, a system is provided at the vehicle that can automatically detect the item being added to the vehicle. For example, a connection (wired or wireless) is established upon attaching the trailer. Once the connection is established, the system can modify the estimated range. In an aspect, the connection comprises information about the attached item (e.g., item identification, length, weight, wind drag, etc.). This information may be extracted from the item identification. For example, using the item ID, the system can identify the additional information from the cloud by using a preferred communication protocol. In an alternate aspect, the system can extract some previously stored information and interact with the owner to complete the collection of required information to accurately estimate the range. This may include determining the impact of having an additional item attached to the vehicle using routing information, weather information, impact of wind, and so on. Once the analysis is complete, the system can determine the new range estimate.

The problem is that when the owner of a vehicle plans to add additional items or people to the vehicle, it is difficult to accurately determine the range of the vehicle. For example, when an owner travels to a friend's house and adds a trailer and a boat, the vehicle system does not have the means to determine the impact of that additional weight. This can lead to inaccurate range estimation which can leave the driver stranded. Also, the current estimated range would not include the additional passengers (e.g., impact due to additional weight).

In an aspect, the system receives information from the user. For example, the system receives the final destination and any additional stopovers. The system receives information about additional attachments planned to be attached to the vehicle either at the start or at stopover points. The system also receives how many, and which additional passengers will be added. Using this information, the system initially estimates available range, recommendations to extend the range based on additional attachments and addition of passengers. Thereafter, the system can adaptively adjust the range using all the available information, including tire pressure, weather, or unexpected stops/addition or removal of weight.

The problem is that when the owner of a vehicle adds additional items to the car, it is difficult to determine the range of the car. For example, when an owner adds a trailer and a boat, the vehicle system does not have the means to determine the impact of that additional weight. This can lead to inaccurate range estimation which can leave the driver stranded.

In an aspect, once the system has determined the range based on additional weight or attachments, the system determines possible adjustments and makes recommendations to increase calculated range. For example, the system can recommend tire pressure adjustment on the vehicle and the attached trailer, driving speed, alternate route (e.g., one with fewer hills), time to depart or rest due to weather. The system may suggest placement of the item (e.g., placing a bike on top or on the back). The system may recommend adding additional items to reduce wind drag. Such adjustment may be determined before the trip if the system detects a planned configuration changes and estimates a range based on the planned configuration changes. In an embodiment, some adjustments may include changing the trailer type, or adding additional profile changing accessories to the trailer before the trailer is attached and the trip begins or halting a trip and providing such adjustments manually. In another embodiment, adjustments may be electronically deployed, for example an automatic cover deployment on the trailer. In an embodiment, some adjustments like changing a route, changing tire pressure may take place while the trip is ongoing.

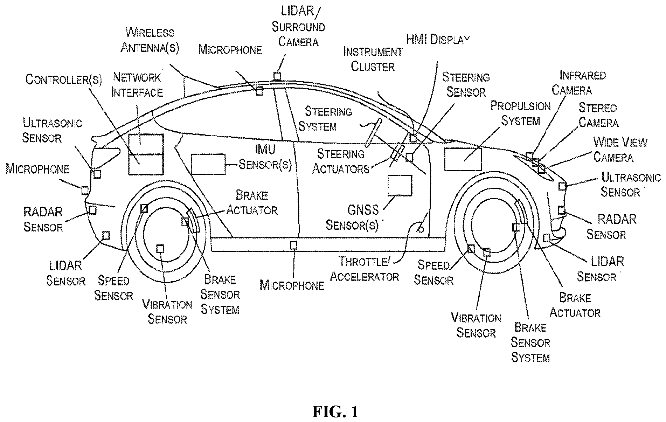

FIG. 1 is an illustration of an autonomous vehicle with various sensors, actuators, and systems according to an embodiment. The Autonomous system comprises various sensors, such as ultrasonic sensor, LIDAR sensors, radar sensors, etc., actuators such as brake actuator, steering actuators, etc., and various subsystems such as propulsion system, steering system, brake sensor system, communication system, etc. FIG. 1 is depicted as an example system; neither is it limited by the systems depicted nor is it an exhaustive list of the sensors, actuators, and systems / subsystems, and / or features of the autonomous vehicle. Further, the vehicle shown should not be construed as limiting in terms of the arrangement of any of the sensors, actuators, and systems / subsystems depicted. These sensors, actuators, and systems / subsystems can be arranged as suited for a purpose to be performed by the autonomous vehicle. Autonomous vehicles, also known as self-driving vehicles or driverless vehicles, are vehicles that can navigate and operate without human intervention. Sensors, for example, including cameras, LIDARs, radars, and ultrasonic sensors, enable autonomous vehicles to detect and recognize objects, obstacles, and pedestrians on the road. Autonomous vehicles use advanced control systems to make real-time decisions based on sensor data and pre-programmed rules or intelligence-based decision systems. These systems control, for example, acceleration, braking, steering, and communication of the vehicle. Navigation systems such as GPS, maps, and other location-based technologies help autonomous vehicles navigate and plan the optimal route to a destination. Communication systems of autonomous vehicles help them communicate with other vehicles and infrastructure, such as traffic lights and road signs, to exchange information and optimize traffic flow. Autonomous vehicles have several safety features, including collision avoidance systems, emergency braking, and backup systems in case of system failures. Autonomous vehicles are assisted by artificial intelligence and machine learning algorithms to analyze data, recognize patterns, and improve performance over time.

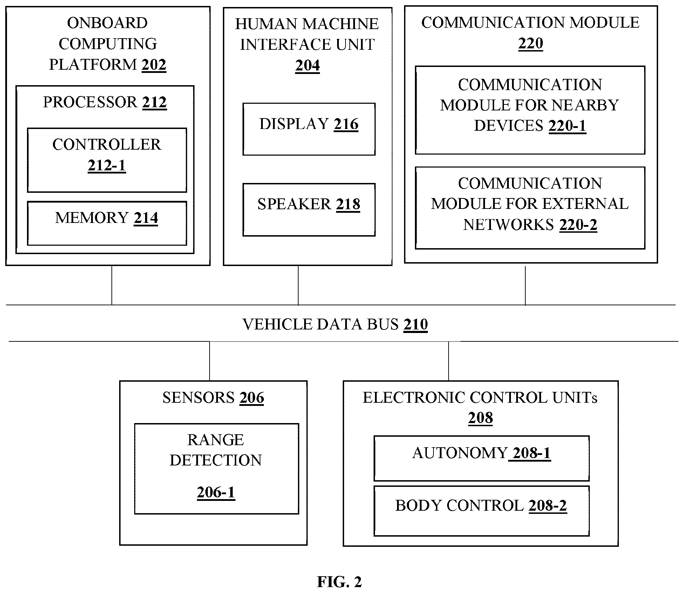

FIG. 2 shows a block diagram of electronic components of a vehicle according to an embodiment. In the illustrated example, the electronic components include an onboard computing platform 202, a human-machine interface (HMI) unit 204, the communication module 220, sensors 206, electronic control units (ECUs) 208, and a vehicle data bus 210. FIG. 2 illustrates an example architecture of some of the electronic components as displayed in FIG. 1.

The onboard computing platform 202 includes a processor 212 (also referred to as a microcontroller unit or a controller) and memory 214. In the illustrated example, processor 212 of the onboard computing platform 202 is structured to include the controller 212-1. In other examples, the controller 212-1 is incorporated into another ECU with its own processor and memory. The processor 212 may be any suitable processing device or set of processing devices such as, but not limited to, a microprocessor, a microcontroller-based platform, an integrated circuit, one or more field programmable gate arrays (FPGAs), and / or one or more application-specific integrated circuits (ASICs). The memory 214 may be volatile memory (e.g., RAM including non-volatile RAM, magnetic RAM, ferroelectric RAM, etc.), non-volatile memory (e.g., disk memory, FLASH memory, EPROMs, EEPROMs, memristor-based non-volatile solid-state memory, etc.), unalterable memory (e.g., EPROMs), read-only memory, and / or high-capacity storage devices (e.g., hard drives, solid state drives, etc.). In some examples, memory 214 includes multiple kinds of memory, particularly volatile memory, and non-volatile memory. Memory 214 is computer readable media on which one or more sets of instructions, such as the software for operating the methods of the present disclosure, can be embedded. The instructions may embody one or more of the methods or logic as described herein. For example, the instructions reside completely, or at least partially, within any one or more of the memory 214, the computer readable medium, and / or within the processor 212 during execution of the instructions.

The HMI unit 204 provides an interface between the vehicle and a user. The HMI unit 204 includes digital and / or analog interfaces (e.g., input devices and output devices) to receive input from, and display information for, the user(s). The input devices include, for example, a control knob, an instrument panel, a digital camera for image capture and / or visual command recognition, a touch screen, an audio input device (e.g., cabin microphone), buttons, or a touchpad. The output devices may include instrument cluster outputs (e.g., dials, lighting devices), haptic devices, actuators, a display 216 (e.g., a heads-up display, a center console display such as a liquid crystal display (LCD), an organic light emitting diode (OLED) display, a flat panel display, a solid state display, etc.), and / or a speaker 218. For example, the display 216, the speaker 218, and / or other output device(s) of the HMI unit 204 are configured to emit an alert, such as an alert to request manual takeover to an operator (e.g., a driver) of the vehicle. Further, the HMI unit 204 of the illustrated example includes hardware (e.g., a processor or controller, memory, storage, etc.) and software (e.g., an operating system, etc.) for an infotainment system that is presented via display 216.

Sensors 206 are arranged in and / or around the vehicle to monitor properties of the vehicle and / or an environment in which the vehicle is located. One or more of the sensors 206 may be mounted to measure properties around an exterior of the vehicle. Additionally, or alternatively, one or more of sensors 206 may be mounted inside a cabin of the vehicle or in a body of the vehicle (e.g., an engine compartment, wheel wells, etc.) to measure properties of the vehicle and / or interior sensing of the vehicle. For example, the sensors 206 include accelerometers, odometers, tachometers, pitch and yaw sensors, wheel speed sensors, microphones, tire pressure sensors, biometric sensors, ultrasonic sensors, infrared sensors, Light Detection and Ranging (LIDAR / lidar), Radio Detection and Ranging System (radar), Global Positioning System (GPS), millimeter wave (mmWave) sensors, cameras and / or sensors of any other suitable type. In the illustrated example, sensors 206 include the range-detection sensors that are configured to monitor object(s) located within a surrounding area of the vehicle. Sensors may comprise range detection sensors 206-1 such as LIDAR, radar, cameras, ultrasonic sensors, GPS sensors, etc., to detect distance between the vehicle and an object or target in its vicinity.

The ECUs 208 monitor and control the subsystems of the vehicle. For example, the ECUs 208 are discrete sets of electronics that include their own circuit(s) (e.g., integrated circuits, microprocessors, memory, storage, etc.) and firmware, sensors, actuators, and / or mounting hardware. The ECUs 208 communicate and exchange information via a vehicle data bus (e.g., the vehicle data bus 210). Additionally, the ECUs 208 may communicate properties (e.g., status of the ECUs, sensor readings, control state, error, and diagnostic codes, etc.) and / or receive requests from each other. For example, the vehicle may have dozens of the ECUs that are positioned in various locations around the vehicle and are communicatively coupled by the vehicle data bus 210.

In the illustrated example, the ECUs 208 include the autonomy unit 208-1 and a body control module 208-2. For example, the autonomy unit 208-1 is configured to perform autonomous and / or semi-autonomous driving maneuvers (e.g., defensive driving maneuvers) of the vehicle based upon, at least in part, instructions received from the controller 212-1 and / or data collected by the sensors 206 (e.g., range-detection sensors). Further, the body control module 208-2 controls one or more subsystems throughout the vehicle, such as power windows, power locks, an immobilizer system, power mirrors, etc. For example, the body control module 208-2 includes circuits that drive one or more relays (e.g., to control wiper fluid, etc.), brushed direct current (DC) motors (e.g., to control power seats, power locks, power windows, wipers, etc.), stepper motors, LEDs, safety systems (e.g., seatbelt pretensioner, air bags, etc.), etc.

The vehicle data bus 210 communicatively couples the communication module 220, the onboard computing platform 202, the HMI unit 204, the sensors 206, and the ECUs 208. In some examples, the vehicle data bus 210 includes one or more data buses. The vehicle data bus 210 may be implemented in accordance with a controller area network (CAN) bus protocol as defined by International Standards Organization (ISO) 11898-1, a Media Oriented Systems Transport (MOST) bus protocol, a CAN flexible data (CAN-FD) bus protocol (ISO 11898-7) and/a K-line bus protocol (ISO 9141 and ISO 14230-1), and / or an Ethernet^{™} bus protocol IEEE 802.3 (2002 onwards), etc.

The communication module 220-1 is configured to communicate with other nearby communication devices. In the illustrated example, communication module 220 includes a dedicated short-range communication (DSRC) module. A DSRC module includes antenna(s), radio(s) and software to communicate with nearby vehicle(s) via vehicle-to-vehicle (V2V) communication, infrastructure-based module(s) via vehicle-to-infrastructure (V2I) communication, and / or, more generally, nearby communication device(s) (e.g., a mobile device-based module) via vehicle-to-everything (V2X) communication.

V2V communication allows vehicles to share information such as speed, position, direction, and other relevant data, enabling them to cooperate and coordinate their actions to improve safety, efficiency, and mobility on the road. V2V communication can be used to support a variety of applications, such as collision avoidance, lane change assistance, platooning, and traffic management. It may rely on dedicated short-range communication (DSRC) and other wireless protocols that enable fast and reliable data transmission between vehicles. V2V communication, which is a form of wireless communication between vehicles, allows vehicles to exchange information and coordinate with other vehicles on the road. V2V communication enables vehicles to share data about their location, speed, direction, acceleration, and braking with other nearby vehicles, which can help improve safety, reduce congestion, and enhance the efficiency of transportation systems.

V2V communication is typically based on wireless communication protocols such as Dedicated Short-Range Communications (DSRC) or Cellular Vehicle-to-Everything (C-V2X) technology. With V2V communication, vehicles can receive information about potential hazards, such as accidents or road closures, and adjust their behavior accordingly. V2V communication can also be used to support advanced driver assistance systems (ADAS) and automated driving technologies, such as platooning, where a group of vehicles travel closely together using V2V communication to coordinate their movements.

More information on the DSRC network and how the network may communicate with vehicle hardware and software is available in the U.S. Department of Transportation's Core June 2011 System Requirements Specification (SyRS) report (available at http://wwwits.dot.gov/meetings/pdf/CoreSystemSESyRSRev A%20(2011-06-13).pdf). DSRC systems may be installed on vehicles and along roadsides on infrastructure. DSRC systems incorporating infrastructure information are known as a "roadside" system. DSRC may be combined with other technologies, such as Global Position System (GPS), Visual Light Communications (VLC), Cellular Communications, and short-range radar, facilitating the vehicles communicating their position, speed, heading, relative position to other objects and to exchange information with other vehicles or external computer systems. DSRC systems can be integrated with other systems such as mobile phones.

Currently, the DSRC network is identified under the DSRC abbreviation or name. However, other names are sometimes used, usually related to a Connected Vehicle program or the like. Most of these systems are either pure DSRC or a variation of the IEEE 802.11 wireless standard. However, besides the pure DSRC system it is also meant to cover dedicated wireless communication systems between vehicles and roadside infrastructure systems, which are integrated with GPS and are based on an IEEE 802.11 protocol for wireless local area networks (such as 802. 11p, etc.).

Additionally, or alternatively, the communication module 220-2 includes a cellular vehicle-to-everything (C-V2X) module. A C-V2X module includes hardware and software to communicate with other vehicle(s) via V2V communication, infrastructure-based module(s) via V2I communication, and / or, more generally, nearby communication devices (e.g., mobile device-based modules) via V2X communication. For example, a C-V2X module is configured to communicate with nearby devices (e.g., vehicles, roadside units, mobile devices, etc.) directly and / or via cellular networks. Currently, standards related to C-V2X communication are being developed by the 3^{rd} Generation Partnership Project.

Further, the communication module 220-2 is configured to communicate with external networks. For example, the communication module 220-2 includes hardware (e.g., processors, memory, storage, antenna, etc.) and software to control wired or wireless network interfaces. In the illustrated example, the communication module 220-2 includes one or more communication controllers for cellular networks (e.g., Global System for Mobile Communications (GSM), Universal Mobile Telecommunications System (UMTS), Long Term Evolution (LTE), Code Division Multiple Access (CDMA)), Near Field Communication (NFC) and / or other standards-based networks (e.g., WiMAX (IEEE 802.16m), local area wireless network (including IEEE 802.11 a/b/g/n/ac or others), Wireless Gigabit (IEEE 802.11ad), etc.). In some examples, the communication module 220-2 includes a wired or wireless interface (e.g., an auxiliary port, a Universal Serial Bus (USB) port, a Bluetooth^{®} wireless node, etc.) to communicatively couple with a mobile device (e.g., a smart phone, a wearable, a smart watch, a tablet, etc.). In such examples, the vehicle may communicate with the external network via the coupled mobile device. The external network(s) may be a public network, such as the Internet; a private network, such as an intranet; or combinations thereof, and may utilize a variety of networking protocols now available or later developed including, but not limited to, TCP/IP-based networking protocols.

In an embodiment of the system, the communication between the host vehicle and the trailer is via Vehicle-to-Vehicle (V2V) communication. In an embodiment of the system, the Vehicle-to-Vehicle (V2V) communication is based on wireless communication protocols using at least one of a Dedicated Short-Range Communications (DSRC), and a Cellular Vehicle-to-Everything (C-V2X) technology. In an embodiment of the system, the communication between the host vehicle and the trailer is via an internet connection.

In an embodiment, the communication module is enabled for an autonomous communication, wherein the autonomous communication comprises communication over a period with minimal supervision under different scenarios. The communication module comprises a hardware component comprising, a vehicle gateway system comprising a microcontroller, a transceiver, a power management integrated circuit, an Internet of Things device capable of transmitting one of an analog and a digital signal over one of a telephone, a communication, either wired or wirelessly.

The autonomy unit 208-1 of the illustrated example is configured to perform autonomous and / or semi-autonomous driving maneuvers, such as defensive driving maneuvers, for the vehicle. For example, the autonomy unit 208-1 performs the autonomous and / or semi-autonomous driving maneuvers based on data collected by the sensors 206. In some examples, the autonomy unit 208-1 is configured to operate a fully autonomous system, a park-assist system, an advanced driver-assistance system (ADAS), and / or other autonomous system(s) for the vehicle.

An ADAS is configured to assist a driver in safely operating the vehicle. For example, the ADAS is configured to perform adaptive cruise control, collision avoidance, lane-assist (e.g., lane centering), blind-spot detection, rear-collision warning(s), lane departure warnings and / or any other function(s) that assist in operating the vehicle. To perform the driver-assistance features, the ADAS monitors objects (e.g., vehicles, pedestrians, traffic signals, etc.) and develops situational awareness around the vehicle. For example, the ADAS utilizes data collected by the sensors 206, the communication module 220-1 (e.g., from other vehicles, from roadside units, etc.), the communication module 220-2 from a remote server, and / or other sources to monitor the nearby objects and develop situational awareness.

Further, in the illustrated example, controller (or control module) 212-1 is configured to monitor an ambient environment of the vehicle. For example, to enable the autonomy unit 208-1 to perform autonomous and / or semi-autonomous driving maneuvers, the controller 212-1 collects data that is collected by sensors 206 of the vehicle. In some examples, the controller 212-1 collects location-based data via the communication module 220-1 and / or another module (e.g., a GPS receiver) to facilitate the autonomy unit 208-1 in performing autonomous and / or semi-autonomous driving maneuvers. Additionally, the controller 212-1 collects data from (i) adjacent vehicle(s) via the communication module 220-1 and V2V communication and / or (ii) roadside unit(s) via the communication module 220-1 and V2I communication to further facilitate the autonomy unit 208-1 in performing autonomous and / or semi-autonomous driving maneuvers.

In operation, according to an embodiment, the communication module 220-1 performs V2V communication with an adjacent vehicle. For example, the communication module 220-1 collects data from the adjacent vehicle that identifies (i) whether the adjacent vehicle includes an autonomous and / or semi-autonomous system (e.g., ADAS), (ii) whether the autonomous and / or semi-autonomous system is active, (iii) whether a manual takeover request of the autonomous and / or semi-autonomous system has been issued, (iv) lane-detection information of the adjacent vehicle, (v) a speed and / or acceleration of the adjacent vehicle, (vi) a (relative) position of the adjacent vehicle, (vii) a direction-of-travel of the adjacent vehicle, (viii) a steering angle rate-of-change of the adjacent vehicle, (ix) dimensions of the adjacent vehicle, (x) whether the adjacent vehicle is utilizing stability control system(s) (e.g., anti-lock braking, traction control, electronic stability control, etc.), and / or any other information that facilitates the controller 212-1 in monitoring the adjacent vehicle.

Based at least partially on the data that the communication module 220-1 collects from the adjacent vehicle via V2V communication, the controller 212-1 can determine a collision probability for the adjacent vehicle. For example, the controller 212-1 determines a collision probability for the adjacent vehicle in response to identifying a manual takeover request within the data collected by the communication module 220-1 from the adjacent vehicle. Additionally, or alternatively, the controller 212-1 determines a collision probability for the adjacent vehicle in response to identifying a discrepancy between (i) lane-marker locations determined by the controller 212-1 of the vehicle based on the sensors 206 and (ii) lane-marker location determined by the adjacent vehicle. Further, in some examples, the controller 212-1 determines the collision probability for the adjacent vehicle based on data collected from other sources, such as the sensors 206, e.g., range detector sensors 206-1 and / or other sensor(s) of the vehicle, roadside unit(s) in communication with the communication module 220-1 via V2I communication, and / or remote server(s) in communication with the communication module 220-1.

In some examples, controller 212-1 determines the collision probability based on a takeover time for the adjacent vehicle and / or a time-to-collision of the adjacent vehicle. For example, the takeover time corresponds with a duration of time between (1) the adjacent vehicle emitting a request for a manual takeover to be performed and (2) an operator of the adjacent vehicle manually taking over control of the adjacent vehicle. The controller 212-1 is configured to determine the takeover time of the adjacent vehicle based on measured characteristics of the adjacent vehicle (e.g., velocity, acceleration, dimensions, etc.), the operator of the adjacent vehicle (e.g., a measured reaction time, etc.), and / or an environment of the adjacent vehicle (e.g., road conditions, weather conditions, etc.). Further, the time-to-collision corresponds with the time it would take for the adjacent vehicle to collide with another vehicle (e.g., a third vehicle) and / or object (e.g., a guardrail, a highway lane divider, etc.) if the current conditions were maintained.

Additionally, or alternatively, the controller 212-1 is configured to determine the time-to-collision of the adjacent vehicle based on a velocity, an acceleration, a direction-of-travel, a distance to the object, a required steering angle to avoid the object, a steering angle rate-of-change, and / or other measured characteristics of the adjacent vehicle that the communication module 220-1 collects from the adjacent vehicle via V2V communication. Further, controller 212-1 is configured to determine a collision probability for the vehicle based on the collision probability of the adjacent vehicle.

Upon determining the collision probability of the adjacent vehicle and determining that the collision probability is not as per threshold, the autonomy unit 208-1 autonomously performs (e.g., for the ADAS) a defensive driving maneuver to prevent the vehicle from being involved in a collision caused by the adjacent vehicle. For example, the autonomous defensive driving maneuver includes deceleration, emergency braking, changing of lanes, changing of position within a current lane of travel, etc. In some examples, the autonomy unit 208-1 is configured to initiate the defensive driving maneuver before the takeover time of the adjacent vehicle has been completed. That is, the controller 212-1 is configured to cause the autonomy unit 208-1 to perform the defensive driving maneuver before the operator of the adjacent vehicle manually takes over control of the adjacent vehicle. Further, in some examples, the controller 212-1 emits an audio, visual, haptic, and / or other alert (e.g., via an HMI unit 204) for the operator of the vehicle to request manual takeover in response to determining that the collision probability is less than the first threshold and greater than the second threshold. By emitting such an alert, controller 212-1 enables the operator of the vehicle to safely take control of the vehicle before the adjacent vehicle is potentially involved in a collision. Additionally, or alternatively, the controller 212-1 is configured to perform other defensive measures (e.g., prefilling brake fluid lines) in response to determining that the collision probability is greater than a threshold (e.g., the second threshold, a third threshold).

The communication module enables in-vehicle communication, communication with other vehicles, infrastructure communication, grid communication, etc., using Vehicle to network (V2N), Vehicle to infrastructure (V2I), Vehicle to vehicle (V2V), Vehicle to cloud (V2C), Vehicle to pedestrian (V2P), Vehicle to device (V2D), Vehicle to grid (V2G) communication systems. Then, the system notifies nearby or surrounding vehicles or vehicles communicating with the vehicle's communication module. The vehicle uses, for example, a message protocol, a message that goes to the other vehicles via a broadcast.

In an embodiment, a connection is established between a vehicle and the attachment such as a trailer. A trailer is detected by the vehicle control system. The trailer is detected by exchanging handshaking signals. Handshaking is the automated process for negotiation of setting up a communication channel between entities. The processor sends a start signal through the communication channel in order to detect a trailer or attachment. If there is a trailer or attachment, the processor may receive an acknowledgement signal from the trailer or attachment. Upon receiving the acknowledgement signal, the processor establishes a secured connection with the trailer or attachment. The processor may receive a signal at the communication module from the trailer or attachment. The processor may further automatically determine the origin of the signal. The processor communicatively connects the communication module to the trailer or attachment. Then the processor is configured to send and / or receive a message to and / or from the trailer or attachment. The signals received by the communication module may be analyzed to identify the origin of the signal to determine the location of the trailer or attachment.

In an embodiment, the system is enabled for bidirectional communication. The system or vehicle sends a signal and then receives a signal/communication from the trailer or attachment.

As a first step of the method according to the disclosure, a data link between the vehicle and the external device, which may be the trailer or attachment, is set up in order to permit data to be exchanged between the vehicle and the trailer or attachment in the form of a bidirectional communication. This can take place, for example, via a radio link or a data cable. It is therefore possible for the trailer or attachment to receive data from the vehicle or for the vehicle to request data from the trailer or attachment.

In an embodiment, bidirectional communication comprises the means for data acquisitions and are designed to exchange data bidirectionally with one another. In addition, at least the vehicle comprises the logical means for gathering the data and arranging it to a certain protocol based on the receiving entity's protocol. Initially, a data link for bidirectional communication is set up. The vehicle and the trailer or attachment can communicate with one another via this data link and therefore request or exchange data, wherein the data link can be implemented, for example, as a cable link or radio link.

Bidirectional communication has various advantages as described herein. In various embodiments, data is communicated and transferred at a suitable interval, including, for example, 200 millisecond (ms) intervals, 100 ms intervals, 50 ms intervals, 20 ms intervals, 10 ms intervals, or even more frequent and / or in real-time or near real-time, in order to allow a vehicle to respond to, or otherwise react to, data. Bidirectional IR communication may be used to facilitate data exchange.

The apparatus for the vehicle according to the embodiment that performs bidirectional communication may be by means of a personal area network (PAN) modem. Therefore, a user can have access to an external device using the vehicle information terminal, and can then store, move, and delete the user's desired data.

In an embodiment, the vehicle may transmit a message via a communication link. It can be using any combination of vehicle to vehicle (V2V), vehicle to everything (V2X) or vehicle to infrastructure (V2I) type of communication. In an embodiment, it uses vehicle-to-vehicle (V2V) communication that enables vehicles to wirelessly exchange information (communicate), for example, about their speed, location, and heading.

In an embodiment, messaging protocols comprise of at least one of Advanced Message Queuing Protocol (AMQP), Message Queuing Telemetry Transport (MQTT), Simple (or Streaming) Text Oriented Message Protocol (STOMP), MQTT-S (an extension of the open publish/subscribe MQTT), which are heavily used in IoT based technologies and edge networks.

In an embodiment of the system, the host vehicle is operable to establish a communication via a communication module with the trailer or attachment to obtain information on the trailer or attachment, wherein the state comprises size and weight of the trailer or attachment. In an embodiment of the system, information about the trailer or attachment is obtained using a longitudinal accelerometer sensor, a GPS, an Inertial Measurement Unit (IMU), a LIDAR, a radar, and a camera.

In an embodiment of the system, the communication between the host vehicle and the trailer or attachment is via Vehicle-to-Vehicle (V2V) communication. In an embodiment of the system, V2V communication is based on wireless communication protocols using at least one of a Dedicated Short-Range Communications (DSRC), and a Cellular Vehicle-to-Everything (C-V2X) technology. In an embodiment of the system, the communication between the host vehicle and the trailer or attachment is via an internet connection.

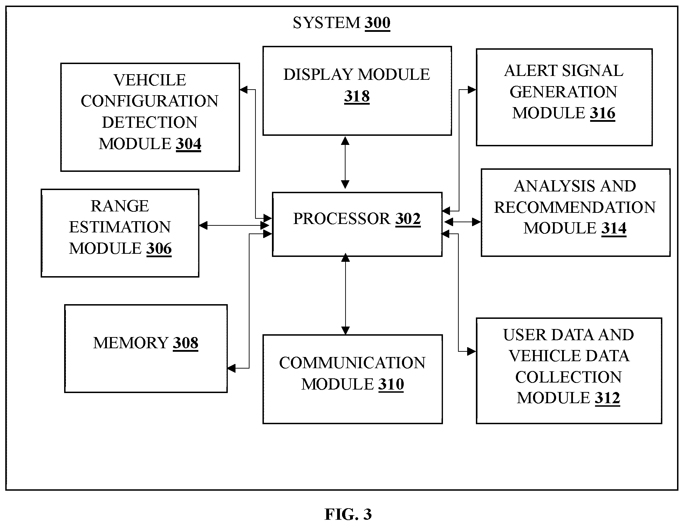

FIG. 3 shows the block diagram of the system 300 and its components for detecting a change in vehicle configuration and estimating range according to an embodiment. The system comprises a processor 302, vehicle configuration detection module 304, range estimation module 306, memory 308, communication module 310, user data and vehicle data collection module 312, analysis and recommendation module 314, alert signal generation module 316, and display module 318.

**Processor 302** may be a high-performance, multi-core CPU or system-on-chip (SoC) solution to process vast amounts of data from various sensors that may be used or present in the vehicles. It processes vast amounts of data from sensors, such as cameras, LIDAR, radar, and other inputs, to make real-time decisions, recommendations, and execute control actions for the vehicle. Graphics Processing Units (GPUs) are also utilized for their ability to accelerate tasks like image and sensor data processing. Some vehicles may incorporate Field-Programmable Gate Arrays (FPGAs) to efficiently perform specialized computations, while others might leverage Application-Specific Integrated Circuits (ASICs) for optimized functions. The choice of processor depends on factors such as the vehicle's level of autonomy, processing requirements, power consumption, and thermal considerations. Processors, also known as central processing units (CPUs), are the heart and brain of any computer or electronic device capable of executing instructions. Processor or processors' function is to process data and perform calculations, etc. At the core of their operation lies data processing, where they handle arithmetic and logical operations on data stored in memory. CPUs execute instructions, which are sets of specific operations encoded in machine language, to perform various tasks. The control unit within or interacting with the processor manages and coordinates the execution of instructions, fetching them from memory, decoding them, and directing the appropriate components to execute the instruction. To ensure a controlled and orderly flow of tasks, processors use an internal clock that generates regular electrical pulses, synchronizing their operations through clock cycles. Processors support multitasking environments, rapidly switching between executing different tasks for various applications. Additionally, they may work with the operating system to manage virtual memory, allowing programs to access more memory than is physically available, and efficiently manage memory usage. Processor or processors may be integrated with security features, including hardware-level encryption, memory protection, and support for secure execution environments, enhancing the system's security against potential threats. The processor may run sophisticated algorithms and artificial intelligence (AI) software to analyze sensor data, detect obstacles, interpret the environment, and help in decision making to navigate the vehicle. Its high-performance capabilities and parallel processing help ensure the vehicle can perceive and respond to its surroundings quickly and accurately. In an embodiment, the processor may be a neuromorphic processor, inspired by the human brain, which offers a unique approach to handling AI tasks. The processor interacts and exchanges data with one or more of the other components or modules of the system, for example, vehicle configuration detection module 304, range estimation module 306, memory 308, communication module 310, user data and vehicle data collection module 312, analysis and recommendation module 314, alert signal generation module 316, and display module 318 as shown in FIG. 3.

**Vehicle configuration detection module 304** comprises various sensors which are configured for detecting any change in the vehicle configuration. Vehicle configuration refers to the specific arrangement and combination of components and features in the vehicle. It includes adding or deleting items that can significantly impact the vehicle's overall performance, including its range. It may include various elements such as engine type, fuel tank capacity, battery capacity (for electric vehicles), weight, aerodynamics, tire type, tire pressure, and other factors that can significantly impact the vehicle's overall range. Adding weight to a vehicle, such as trailers, bikes, boats, extra passengers, and / or cargo, will increase its overall mass. Further, a place of attachment of the items, i.e., whether the bike is added behind the vehicle or the bike is added above the vehicle in a luggage carriage changes the weight, aerodynamics, friction on the tires or trailer, etc., which influence the vehicle range. Similarly, the modes of attachment for a trailer to a vehicle include ball hitch, fifth wheel hitch, pintle hitch, gooseneck hitch, and receiver hitch; such choice of attachment can influence the towing vehicle's range, more particularly for electric vehicles. Factors such as the weight and drag of the trailer, towing capacity, hitch design, terrain, and driving conditions can impact the vehicle's energy consumption and reduce its range. A heavier vehicle requires more energy to move, leading to reduced fuel efficiency or higher energy consumption for electric vehicles, which can lower the range. Similarly, modifications to the vehicle's design, such as adding roof racks, spoilers, or other attachments, can negatively impact aerodynamics. Poor aerodynamics increase air resistance and cause the vehicle to consume more fuel or energy, thus reducing its range. Thus, vehicle configuration detection module detects vehicle configuration, whether trailer attachments are present, whether a trailer is added, whether a luggage carrier is present, whether more luggage is added in the carrier or elsewhere in the vehicle, whether additional items are added, whether more passengers are present, whether bike attachments are present, etc.

In an embodiment of the system, the configuration of the vehicle is determined via the computer vision module comprising an artificial intelligence engine, wherein the artificial intelligence engine comprises a machine learning algorithm. In an embodiment of the system, while determining the configuration of the vehicle, the system may activate a camera of the computer vision module to record surroundings of the vehicle.

In an embodiment, the vehicle configuration detection module first estimates a range based on its original configuration or a default configuration. While doing so the system may assume the default number of passengers traveling based on historical data, destination, starting location, etc. If a change is made to the configuration by adding or deleting items, passengers, or any other equipment which would impact range, the vehicle would detect and re-estimate the new range. The new range is displayed on the infotainment system along with an alert signal. The detection of change in the configuration is performed at the start of the journey, i.e., at the starting location by using all the data that is available at the time. The inputs to the range estimation model may comprise of parameters that impact the range at future periods, for example picking up a trailer at XYZ stopover. In an embodiment, the system may ask questions with the user via the infotainment system or an App on the mobile phone to confirm its inputs to the range estimation model, for example, "Are you picking up a trailer at this location XYZ?" Once the user confirms, then the estimated range is displayed. The system would continue to monitor for any change in configuration once the vehicle starts moving. If it finds a new stopover, a change in route, a change in load on the vehicle, a change in weather, etc., it may recalibrate the range and provide the new range information on the display of the infotainment system.

In an embodiment, a trailer identification system for a vehicle is disclosed. The system includes an imaging device configured to capture image data depicting a trailer and a user interface configured to communicate with a user. The processor processes the image data and applies a trailer detection model configured to detect a trailer depicted in the image data. The processor activates a detection module for the trailer and captures the image data of the trailer from a plurality of perspectives relative to the trailer heading of the trailer such that a size and shape of the trailer can be captured. According to an embodiment, it is a method for trailer detection for a vehicle trailer detection system, the method comprising the steps of identifying a trailer in image data via a trailer detection model, activating a detection routine for the trailer; capturing the image data of the trailer from a plurality of perspectives relative to a trailer heading of the trailer, and generating a size and shape estimation of the trailer.

There are several ways to detect whether a vehicle has a trailer attached to it or if there is a plan for the attachment to take place. Detection can take place using the schedule of the user and / or using Vision System comprising image sensors. The image sensors may be mounted on the back of the tow vehicle or on the rear-view mirrors. The system may further determine the length, width, height, and shape of the trailer. Further it may estimate the weight of the system based on the material, shape, and volume.

For example, if somebody is going to go camping and wants to know what the range estimate for the vehicle would be, the system can provide, via an Application Program (App) or via vehicle infotainment system using display, a certain range number. If the system knows, based on the schedule of the user, that the user is going camping and is going to have a trailer, the system will try to get the information on the trailer. The information on the trailer could be its size including dimensions of height, width, and length, mode of attachment, no. of wheels touching the road, trailer being covered or uncovered, trailer shape, trailer weight, whether it is directly being attached or being carried on an additional trolley, etc. With the information about the trailer, the system is going to provide the range estimate with the trailer and without the trailer. The system may further provide a stop schedule for recharging or refueling.

In an embodiment, the size and shape of the trailer may be detected using various sensors that are disposed strategically in and on the vehicle.

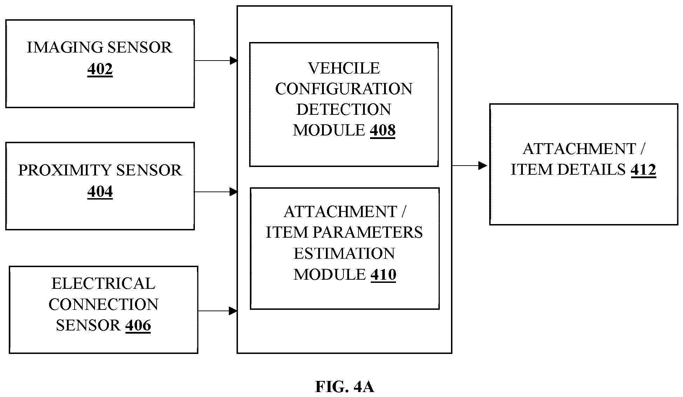

FIG. 4A shows a system with a vehicle configuration detection module and vehicle parameters estimation module according to an embodiment. The system comprises imaging sensor 402, proximity sensor 404, and electrical connection sensor 406 positioned such that they detect the trailer or any item of interest that is being added to the vehicle. The vehicle configuration detection module 408 may comprise a computer vision system and analyzes the input from one or more sensors, using sensor fusion technique, and figures out the current configuration. Based on the configuration, imaging sensor 402, proximity sensor 404, electrical connection sensor 406 are further used to gather more data. There may be one or more sensors of the same kind placed at various positions to gather data of the item or the attachment/trailer. Once the data is gathered, attachment/item parameters estimation module 410, comprising various artificial intelligence algorithms or data based models, may estimate the parameters of the item. Attachment/item details 412 are provided from the estimation module. These details or parameters may include but are not limited to size including length, height, width or breadth, shape, weight, color, and other details, as necessary.

Radar and LIDAR may be proximity sensors that are capable of detecting nearby objects, including trailers, however they need to be properly configured and positioned on the vehicle. Radar sensors use radio waves to detect objects, and when a trailer is attached to the vehicle, the radar can detect it as a separate object in its detection range. Based on the distance and speed, it can be correlated as connected with the vehicle itself. Similarly, when a trailer is attached to the vehicle, the LIDAR can detect it as an additional object within its field of view. The LIDAR can capture the shape and position of the trailer accurately, providing valuable data for the vehicle's perception and decision-making systems. In an embodiment, camera, radar, and LIDAR sensors may work together to ensure that the vehicle can detect and recognize objects, such as trailers attached to it.

When a trailer is attached to a vehicle, it becomes an extension of the vehicle itself. Ultrasonic sensors, positioned on the rear bumper or sides of the vehicle, can detect the presence of the trailer and the distance between the vehicle and the trailer. These sensors emit ultrasonic pulses and measure the time it takes for the pulses to bounce back after hitting an object. By analyzing the time delay, the sensor can calculate the distance to the trailer.

Vehicles are commonly equipped with trailer hitches that enable the vehicle to be connected to and tow a trailer. In many trailer coupling arrangements, the trailer has a coupler which usually engages and can be connected to the trailer coupling of the vehicle via a coupling ball. The coupler typically includes a coupler lock that is actuated by a user by operating a coupler lock lever between a locked and an unlocked position. In an embodiment, sensors are placed near the coupler such that they are operable to detect that the vehicle and a trailer are in a connected state. According to an embodiment, the vehicle includes a trailer hitch, a vehicle electrical connector configured to be electrically connected to a trailer electrical connector, and an imaging system adapted to capture images near the trailer hitch and the images of the trailer.

In an embodiment, capacitance-based sensors are used. One common implementation of capacitance-based sensors for trailer detection is through the use of electrical connectors. Many trailers have electrical connectors that plug into corresponding receptacles on the towing vehicle. These connectors are used to transfer electrical signals for lighting and other systems on the trailer.

Capacitance sensors can detect the presence of a connected trailer by monitoring changes in capacitance when the electrical connector is plugged in or disconnected. When the trailer is attached, the electrical system of the vehicle and the trailer are electrically connected, causing a change in the capacitance. The sensor can detect this change and determine that a trailer is connected.

In an embodiment, mmWave radar sensors can be used to detect trailers attached to a vehicle, particularly when the trailer has sufficient reflective surfaces, such as metal parts. Such metal reflective surfaces can be provided on the trailers for detection purposes. MmWave radar sensors operate by emitting electromagnetic waves in the millimeter-wave frequency range and then measuring the time it takes for the waves to bounce back after hitting an object. The radar sensor can analyze the reflected signals to detect and track objects in the vehicle's vicinity.

Once the trailer is detected, its size, shape, weight, etc., information can be accessed via Radio Frequency Identification Chip (RFID) technology. In an embodiment, the details of the trailer such as size, shape, height, etc., can be estimated via an image or images captured using one or more cameras. To enhance overall object detection and objects geometric estimation capabilities, the system may use a combination of different sensor technologies, including cameras, radars, and LIDARs. This sensor fusion approach allows the system to leverage the strengths of each sensor type and provide comprehensive perception of the detection of attached trailers as well as further details of the trailers relating to shape, size, height, weight, color, model, make, etc.

According to an embodiment of the method, the change in configuration comprises adding an item to the vehicle. According to an embodiment of the method, the change in configuration comprises deleting an item from the vehicle. According to an embodiment of the method, the change in configuration is detected using an RFID technology, wherein an RFID tag comprising information on a size, a shape, and a weight of the item is associated with the item and an RFID reader is associated with the vehicle.

In an embodiment, a trailer may be detected using a bounding box method. In an embodiment, parts of the vehicle are detected using the bounding box method. For example, results of a bounding box method used to detect a frame of a trailer. In an embodiment, the computer vision system may be utilizing both 2D and 3D methods in a hierarchical manner to first select regions of interest quickly, then it may try to gain more insight about the object with a 3D bounding box.

Sensor fusion is the process of combining data from multiple sensors to improve the accuracy, reliability, and efficiency of the information collected. It involves integrating information from various sources, such as cameras, radar, LIDAR, and other sensors, to obtain a more complete and more accurate picture of the environment. Sensor fusion may be able to reduce errors and uncertainties that can arise from using a single sensor and to obtain a more comprehensive understanding of the surrounding world. By combining data from multiple sensors, vehicle systems can make more informed decisions and respond to changing conditions in real-time. The process of sensor fusion typically involves several steps, including data acquisition, signal processing, feature extraction, data association, and estimation. Different algorithms and techniques may be used to integrate the information from multiple sensors, depending on the application and the specific sensors being used.

According to an embodiment of the system, the detection module comprises one or more sensors. According to an embodiment of the system, the one or more sensors comprises a magnetic sensor, a proximity sensor, a load sensor, an electrical sensor, and a vision sensor. According to an embodiment of the system, the one or more sensors comprises a camera coupled with a computer vision system. According to an embodiment of the system, the one or more sensors is mounted on the vehicle such that the one or more sensors detects the change in the configuration to the vehicle by detecting a change in a sensor data. According to an embodiment of the system, the one or more sensors is configured to determine one or more of a size, a shape, and a weight of the item. According to an embodiment of the system, the detection module is operable to process sensor data; analyze a pattern; determine a presence of the item; and determine one or more of a size, a shape, and a weight of the item.

According to an embodiment, an AI-based trailer detection may be used in combination with sensor fusion techniques. Some of the algorithms that are suitable for trailer detection include, but not limited to: (i) Hough Transform: the Hough Transform algorithm is an approach to object detection that works by identifying straight lines in an image. The Hough Transform can be used to detect the edges of a trailer and to estimate the shape and size of the trailer. (ii) Convolutional Neural Networks (CNNs): CNNs are deep learning algorithms that may be used for trailer detection. A neural network is trained on lane data obtained from various sensors to recognize the features of a trailer, such as size, shape, and texture. In an embodiment, the neural network is trained to estimate a weight of the trailer based on the size and shape. Once the network is trained, it can be used to detect and classify trailers in real-time. (iii) Support Vector Machines (SVMs): SVMs are machine learning algorithms that work by learning a boundary that separates the trailer from the rest of the image. The SVM algorithm can be trained using labeled data to create a model. The model is then used to detect the size and shape of the trailer. (iv) Markov Random Fields (MRFs): MRFs are a probabilistic graphical model that works by modeling the relationship between neighboring pixels in an image to identify the shape and size of the trailer. MRFs can be combined with other algorithms, such as CNNs or SVMs, to create a more robust and accurate trailer detection system.

According to an embodiment of the system, the system further comprises one or more sensors. According to an embodiment of the system, one or more sensors comprise a magnetic sensor, a proximity sensor, a load sensor, an electrical sensor, and a vision sensor. According to an embodiment of the system, the processor is further operable to sense, via one or more sensors, a change in the configuration of the vehicle. According to an embodiment of the system, one or more sensors comprises a camera coupled with a computer vision system. According to an embodiment of the system, one or more sensors is mounted on the vehicle such that the one or more sensors detects a change in configuration to the vehicle by detecting a change in a sensor data. According to an embodiment of the system, one or more sensors is operable to determine one or more of a size, a shape, and a weight of the one or more items.

According to an embodiment of the system, the system is further configured to detect additional factors. According to an embodiment of the system, the additional factors comprises one or more of a driving condition, and a driving mode . According to an embodiment of the system, the system comprises a non-volatile memory configured to store details of the one or more items, the vehicle, and the new range.

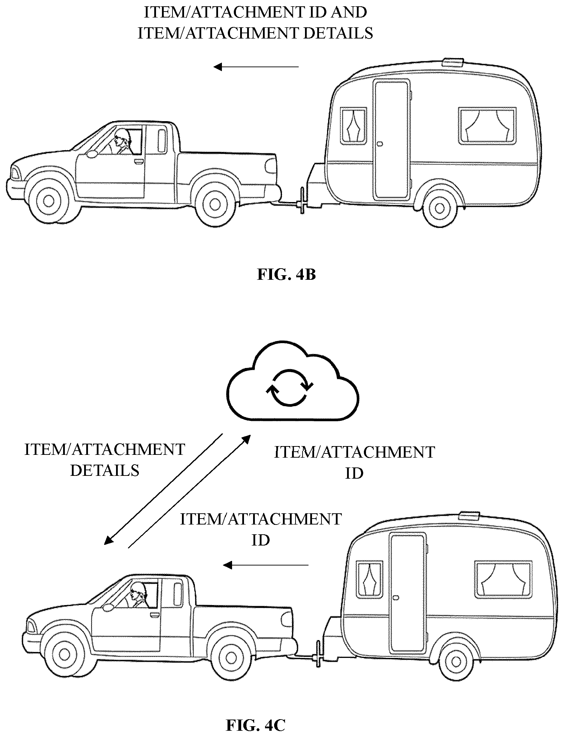

FIG. 4B shows obtaining item or attachment details from the item itself according to an embodiment. In an embodiment, the attachment and item details can be directly obtained from the item or attachment itself as shown in FIG. 4B. Item may be a trailer and may be fitted with a Radio Frequency Identification Chip (RFID). The RFID may contain identification and additional details pertaining to the item or attachment such as size, shape, weight, color, technologies it is fitted with, etc. RFID tags or transponders attached to the item or trailer contain a unique identifier and sometimes additional data. These tags are equipped with an antenna that communicates with RFID readers using radio frequency signals. When an RFID tag comes within the range of an RFID reader which is attached in the vehicle, the reader emits radio waves that power the tag, allowing it to transmit its unique identifier back to the reader. The RFID reader then captures the transmitted data and can retrieve additional details or information associated with that particular tag from a database or information system. The details may be password protected and the password may be sent to the user by the RFID tag owner. In an embodiment, the RFID may direct to a website from which additional details may be obtained.

FIG. 4C shows obtaining item or attachment details from the cloud network according to an embodiment. According to this embodiment, an RFID tag may be used to obtain an identification number. Using this identification number, the system may obtain the details related to the item or attachment using a cloud network where the information may be stored.

According to an embodiment of the method, the detection module is operable to establish a communication link, via a communication module, between the vehicle and the item; and retrieve, via the communication link, a feature of the item. According to an embodiment of the method, the detection module is operable to establish a communication link, via a communication module, between the vehicle and the item; detecting, the change in the configuration due to one of adding the item; retrieve an identification of the item via the communication link; and retrieve a feature of the item via a cloud network using the identification of the item via the communication link.

According to an embodiment of the system, the detection module is operable to detect the item via a communication module of the vehicle, wherein the communication module establishes a communication link between the vehicle and the item. According to an embodiment of the system, the communication link is a wireless connection. According to an embodiment of the system, the communication link is a wired connection. According to an embodiment of the system, the detection module retrieves a feature of the item directly from the communication link between the vehicle and the item. According to an embodiment of the system, the detection module retrieves an identification number of the item from the communication link between the vehicle and the item, and further uses the identification number to retrieve the feature of the item from a cloud network. According to an embodiment of the system, the feature of the item comprises one or more of a weight of the item, a make and model of the item, a shape of the item, a size of the item, and a mode of Attachment of the item. According to an embodiment of the system, the communication module supports a communication protocol, wherein the communication protocol comprises one or more of a Hypertext Transfer Protocol (HTTP), Message Queuing Telemetry Transport (MQTT), WebSocket, Constrained Application Protocol (CoAP) and Advanced Message Queuing Protocol (AMQP).

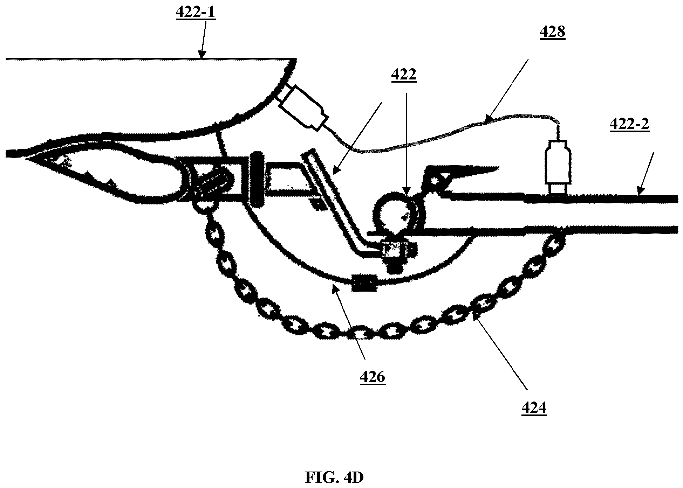

FIG. 4D shows detecting an attachment or trailer using a communication module according to an embodiment. One of the purposes of attaching a trailer is to increase the overall cargo-carrying capacity of the vehicle, allowing it to transport larger or heavier loads than it could carry on its own. The trailer typically has wheels and can be either single-axle or multi-axle, depending on its size and weight capacity. It may have an open or closed design, and its cargo area can vary in shape and dimensions based on the intended use. Trailers are commonly used to transport items such as furniture, appliances, construction materials, boats, livestock, motorcycles, or other vehicles. The attachment process involves connecting the trailer's hitch to the vehicle's tow hitch receiver. The hitch is a mechanical coupling that enables the trailer to be securely linked to the towing vehicle. The trailer may also have electrical connectors to enable the functioning of lights and brakes on the trailer, synchronized with those of the towing vehicle.

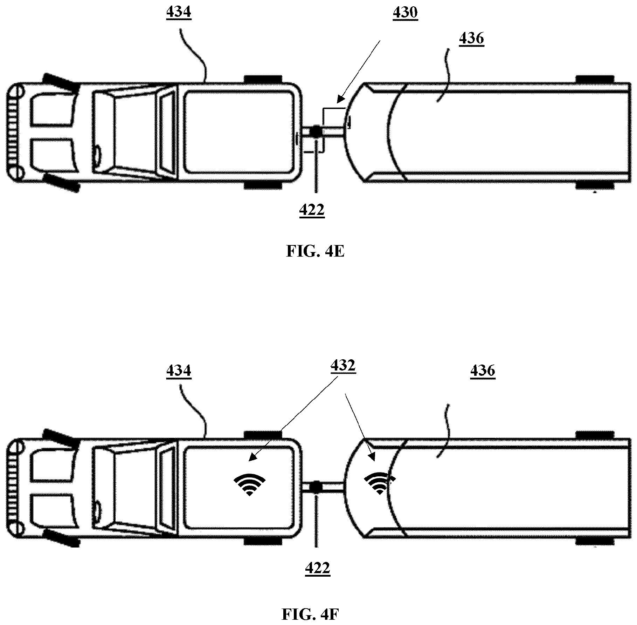

According to an embodiment, the system for attaching a trailer to a vehicle may comprise coupling 422 connecting the vehicle 422-1 and the trailer 422-2. It may further comprise a safety chain 424, a trailer wiring harness 426, and a communication connection 428. The safety chain 424 is configured to keep the trailer from completely separating from the vehicle if it ever becomes disconnected while towing. A trailer wiring harness 426 is a wire at the back of a vehicle that allows its electrical system to connect to a trailer configured to supply power to the trailer lights and synchronizes them with the vehicle's taillights. It can also be configured to connect trailer brakes and auxiliary power. The communication connection 428 could be a wired connection 430 as shown in FIG. 4E that is connecting communicatively the vehicle 434 and the trailer 436 or a wireless communication 432 that is connecting communicatively the vehicle 434 and the trailer 436 as shown in FIG. 4F. FIG. 4E and FIG. 4F further show mechanical coupling 422 connecting the vehicle 434 and the trailer 436. Wireless communication encompasses various technologies that enable the transmission of data without the need for physical wires or cables. According to an embodiment, wireless communication includes Wi-Fi^{®}, Bluetooth', cellular communication, Radio Frequency Identification (RFID) Near Field Communication (NFC), Satellite communication. These wireless technologies are enabled for seamless connectivity and data sharing.

According to an embodiment of the system, the item comprises a physical connection, an electrical connection, and a communication connection. According to an embodiment of the system, the physical connection comprises a physical coupling between the item and the vehicle. According to an embodiment of the system, the electrical connection comprises an electrical coupling between the item and the vehicle. According to an embodiment of the system, the communication connection comprises at least one of a wired communication and a wireless communication between the item and the vehicle.

According to an embodiment of the system, the one or more items comprises a physical connection, an electrical connection, and a communication connection. According to an embodiment of the system, the physical connection comprises a physical coupling between the one or more items and the vehicle. According to an embodiment of the system, electrical connection comprises an electrical coupling between the one or more items and the vehicle. According to an embodiment of the system, the communication connection comprises at least one of a wired communication and a wireless communication between the one or more items and the vehicle.

According to an embodiment of the system, the estimation module comprises a machine learning algorithm. According to an embodiment of the system, the estimation module comprises historical data collected on a range estimation based on a similar item category, wherein a similar item category is based on a comparison factor among a size factor, a shape factor, and a weight factor.

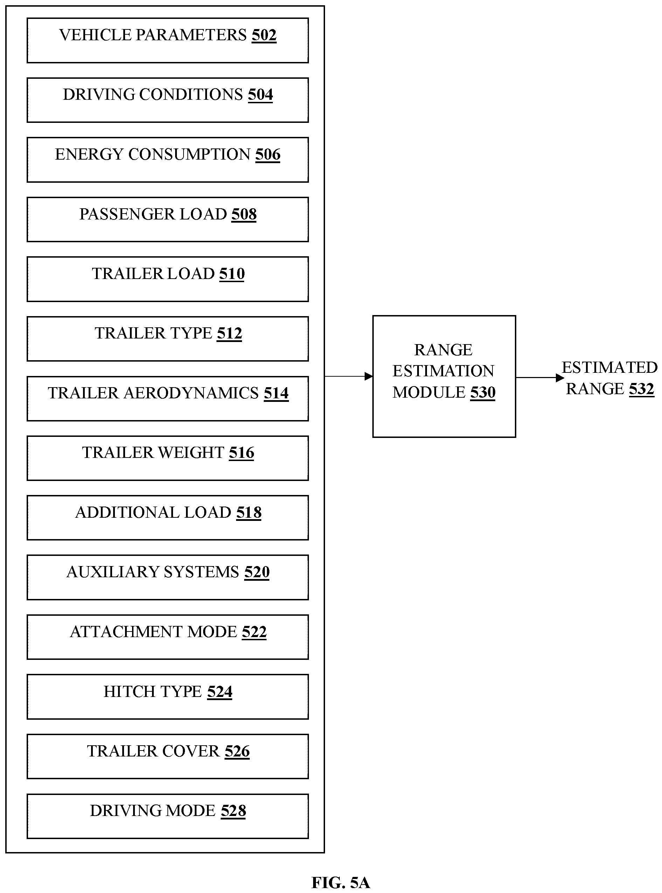

**Range estimation module 306:** In an embodiment, a model based engineering approach is used for range estimation. Model-based engineering for range estimation involves using mathematical models to predict a vehicle's range under various driving conditions. FIG. 5A shows input and output of the Range Estimation Module according to an embodiment. Range estimation module 306 may take various inputs and feeds into a model for range estimation which may typically involve multiple variables representing the vehicle's characteristics, driving conditions, energy consumption, and other relevant parameters that influence range. For example, a general equation or model for model-based range estimation may be considered as:
Range (in distance units, e.g., miles or kilometers) = f (VEHICLE_PARAMETERS 502, DRIVING CONDITIONS 504, ENERGY_CONSUMPTION 506, PASSENGER LOAD 508, TRAILER_LOAD 510, TRAILER_TYPE 512, TRAILER_AERODYNAMICS 514, TRAILER_WEIGHT 516, ADDITIONAL_LOAD 518, AUXILIARY_SYSTEMS 520, ATTACHMENT_MODE 522, HITCH_TYPE 524, TRAILER_COVER 526, DRIVING_MODE 528)
Where: f(...) represents a mathematical function that utilizes various parameters to calculate the range;
VEHICLE_PARAMETERS 502 comprises variables such as vehicle weight, aerodynamics, tire characteristics, engine or motor specifications, transmission efficiency, and auxiliary system consumption (e.g., Heating, Ventilation, and Air Conditioning (HVAC));
DRIVING_CONDITIONS 504 comprises parameters like driving speed, road conditions, terrain (uphill/downhill), driving pattern (e.g., city, highway, stop-and-go traffic), traffic conditions (heavy traffic, light traffic, no traffic), and environmental conditions (e.g., temperature, wind, humidity);
ENERGY_CONSUMPTION 506 accounts for the specific energy source used by the vehicle, such as gasoline, diesel, or electricity for electric vehicles. It comprises factors like fuel or battery efficiency, regenerative braking (for Electric Vehicles (Evs)), Specific Fuel Consumption (for Internal Combustion Engine Vehicles) which is fuel consumed per unit of power generated by the engine or Energy Consumption Rate (for Electric Vehicles) which is energy consumed per unit of distance traveled (miles/kWh).
PASSENGER LOAD 508 comprises the total number of passengers in the vehicle and includes the average weight of each passenger.
TRAILER_LOAD 510 comprises the weight of the trailer, bike, or boat being towed, including cargo or equipment.
TRAILER_TYPE 512 comprises diverse types of trailers with varying aerodynamic characteristics, frontal areas, and shapes (e.g., enclosed cargo trailer, flatbed trailer, boat trailer).
TRAILER_AERODYNAMICS 514 comprises parameters that account for the impact of the trailer or towing attachment's aerodynamics on the overall drag of the vehicle-trailer system.
TRAILER_WEIGHT 516 comprises the weight of the trailer itself, excluding the load.
ADDITIONAL_LOAD 518 comprises any extra load or equipment added to the vehicle, aside from the trailer, such as roof racks, cargo carriers, or additional accessories.
AUXILIARY_SYSTEMS 520 comprises parameters for the energy consumed by various auxiliary systems in the vehicle, such as air conditioning, heating, entertainment systems, etc.
ATTACHMENT_MODE 522 comprises parameters that account for how the trailer is attached to the vehicle. For example, it could be "bumper-mounted," "frame-mounted," or "gooseneck."
HITCH_TYPE 524 comprises the type of hitch used for connecting the trailer. Common hitch types include "ball hitch", "fifth-wheel hitch,", "pintle hitch" etc. It comprises variables to define all classes of hitches like class 1 to class 5 commercial duty hitches.
TRAILER_COVER 526 comprises parameters to define whether the trailer is covered or not. It can be represented as a binary variable (1 for covered, 0 for uncovered). It may further include other identifiers related to covers such as material, stiffness, shape, etc.
DRIVING_MODE 528 comprises selected driving modes, which may include options such as "eco mode," "sport mode," "normal mode," etc. Different driving modes demand different performance characteristics, such as throttle response, engine output, and transmission settings of the vehicle.

The range estimation module 530 (which is similar to range estimation module 306) may take all the above parameters from the vehicle and the item that is attached, and then predict or estimate the range and provide estimated range 532.

The actual form of the equation and the specific variables used may depend on the complexity of the model and the level of detail required for accurate range estimation. According to an embodiment, sophisticated models might be used and may include additional parameters, such as battery state of charge for electric vehicles or the effect of different driving modes (e.g., eco mode, sport mode), etc.

According to an embodiment, developing an accurate model for range estimation, extensive data collection, pre-processing, analysis, model building, and validation against real-world driving data may be performed. The data may then be regressed and presented as a form of regression equation with all the parameters (input variables) of interest. Once the model is prepared, it is validated and trained, it may further be evaluated in real world situations. Upon desired performance in accuracy and precision, the model may be deployed on the vehicle systems.

In an embodiment, the system may include aerodynamic models. In an embodiment, the system may include regression models based on data from the aerodynamic models. In another embodiment, the system may include regression models based on data collected from similar trailers, items, vehicles under similar driving conditions and weather conditions, etc.

In an embodiment, the model may be deployed on the system. In another embodiment, the model may be deployed on a cloud. In an embodiment, the model may be based on data collected over various scenarios and different vehicles. In another embodiment, the model may include physics based equations.

According to an embodiment of the system, the estimation module comprises an energy consumption rate value recorded during one or more previous operating cycles. According to an embodiment of the system, the estimation module derives a range estimation factor from a cloud network, wherein the cloud network comprises historical data on a range due to the one or more items. According to an embodiment of the system, the new range is based on a regression on historical data on impact on a range due to the one or more items. According to an embodiment of the system, the new range is based on a size, a shape, and a weight of the one or more items. According to an embodiment of the system, the new range considers one or more of a driving condition, a vehicle load, a terrain, and a driving style. According to an embodiment of the system, the new range is estimated at the starting location. According to an embodiment of the system, the new range is estimated upon detecting a deviation from the planned change in configuration of the vehicle. According to an embodiment of the system, the system further comprises displaying a current range and the new range on an infotainment system of the vehicle.

In an embodiment, the system monitors for a change in configuration and then determines a new range. When the configuration of the vehicle impacts the range, then the new range will be different from previously estimated range. In an embodiment, the range equation may be a composite equation formed from individual models providing range estimation for a single or group of variables/factors. In an embodiment, the parameters or factors may be weighted based on the contribution and importance to the range. The weights may be provided to various items such as trailers, passengers, other loads, driving conditions, etc while determining the new range which may also be also referred to as driving range.

According to an embodiment, the estimation module is smart and adaptive and thus an adaptive smart range estimation module. According to an embodiment of the system, the adaptive smart range estimation is configured to consider one or more of driving conditions, terrain, weather, driving habits, historical data, real-time inputs, and a current state of the vehicle system. According to an embodiment of the system, the adaptive smart range estimation is configured to modify the system to extend the new range according to one or more of the driving conditions, the terrain, the weather, the driving habits, the historical data, the real-time inputs, and the current state of the vehicle system. According to an embodiment of the system, the system is configured to provide an upper limit and a lower limit of the new range.

**Memory 308** may be a non-volatile memory (NVM) which is crucial for the reliable operation of the system, ensuring that essential data is preserved even during power interruptions or failures. Various NVM technologies are utilized, such as flash memory for storing the operating system and software, EEPROM for retaining configuration data, calibration values, and sensor settings, Ferroelectric RAM (FRAM) for critical real-time information, and emerging technologies like ReRAM for potential performance enhancements due to its high-speed operation and low power consumption.

In an embodiment, the memory may be a cloud-based memory. In another embodiment, the memory may be a local memory. In another embodiment, it may be a combination of local and cloud based memory. Local memory refers to the traditional memory components present in a physical device, such as a computer's RAM, hard disk drives (HDDs), or solid-state drives (SSDs). It provides fast access to data and is directly connected to the device, making it suitable for immediate processing tasks and offline use. On the other hand, cloud-based memory relies on remote servers and services provided by third-party cloud providers to store and manage data over the internet. Systems can access their data from anywhere with an internet connection, allowing for seamless collaboration and scalability. Cloud-based memory is often used for storing large amounts of data, enabling data sharing, and providing backup and disaster recovery solutions. The combination of local memory and cloud-based memory allows for flexible and efficient data management tailored to different needs of the system.

According to an embodiment of the system, the estimation module comprises a machine learning algorithm. According to an embodiment of the system, the estimation module comprises historical data collected on a range estimation based on a similar item category, wherein similar item category is based on a comparison factor among a size factor, a shape factor, and a weight factor. According to an embodiment of the system, the estimation module comprises an energy consumption rate value recorded during one or more previous operating cycles. According to an embodiment of the system, the estimation module derives a range estimation factor from a cloud network, wherein the cloud network comprises historical data on impact on a range due to the item. According to an embodiment of the system, the new range is based on a regression on historical data on impact on a range due to the item. According to an embodiment of the system, the new range is based on a size, a shape, and a weight of the item. According to an embodiment of the system, estimation module further considers one or more of a driving condition, a vehicle load, a terrain, and a driving style for estimating the new range.

**Communication module 310,** functions are similar to communication module 220 as described herein in this application in relation to FIG. 2. Further it facilitates communication between different modules within the system, communication between the item such as trailer and the vehicle, etc.

Communication between the vehicle and the attachment: In order for the system to understand the attachment, a communication connection is formed between the vehicle and the trailer to negotiate or transfer the information. Between the vehicle and the trailer, a new connection that does not exist at the moment will be established and communications will start going back and forth.

In an embodiment, the connection could be a physical connection or a wired connection. In another embodiment, the connection is a wireless connection. In an embodiment, the connection is established immediately once a trailer is attached. In another embodiment, the user may be pushing a button or choosing an option on the infotainment system to establish the connection after the trailer is attached. Prior art does not disclose any communication between the trailer and the vehicle.

In an embodiment, the trailer has a wireless communication module that is activated upon connecting it to the vehicle. The communication module is configured to communicate with the vehicle information regarding the trailer for example, trailer weight, trailer payload, trailer size, etc., which the vehicle will then consider in calculating the overall range considering the trailer attachment.

In an embodiment, the system detects the connection of a trailer or an additional item. Further, it also retrieves the information about that particular trailer or the additional item using the communication module. In an embodiment, the communication is via a physical connection, like a wired communication. In an embodiment, it is via wireless communication. For example, if the vehicle is being connected with a trailer that is really big in size, the routing has to be modified, because maybe there are some places the vehicle cannot go through that may be too narrow. If there is something that is attached as a trailer and the trailer height is much higher than the allowed height on a path, then the routing has to change. Initially, without the trailer, the system may suggest a routing. The system would then consider the trailer attachment, and the trailer size and height, and reevaluate if there are any restrictions on the routing. If it finds the routing is unsuitable to the trailer height or size, the system may suggest a new route. In one scenario, the vehicle detects whether the cargo it is transporting falls under the category of Hazardous Materials (HazMat). The system also validates whether both the cargo and the chosen transportation route adhere to regulatory requirements. If a route is found to be unsuitable for transporting HazMat materials, the system then calculates an alternative route that is in compliance with HazMat regulations.

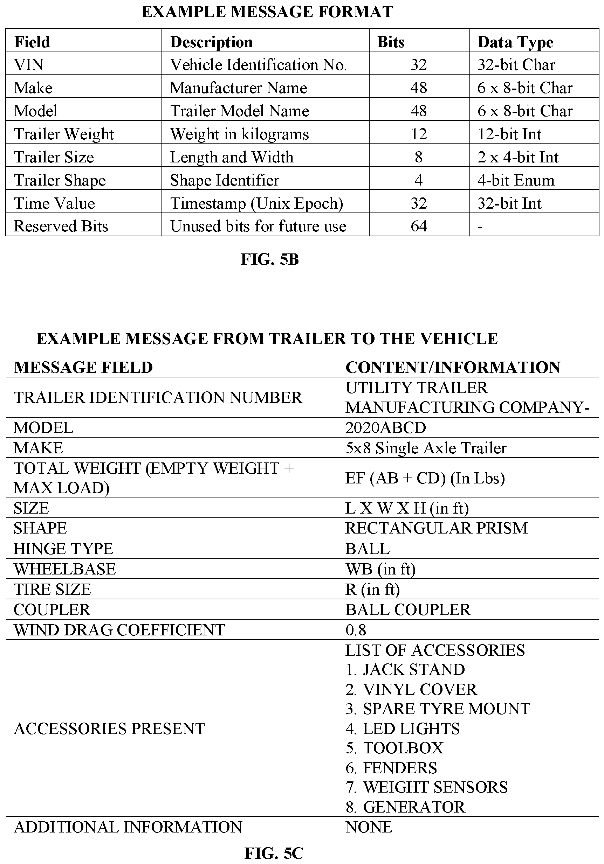

FIG. 5B shows an example communication message format according to an embodiment. To prepare a compact message for conveying trailer details, a binary encoding scheme where each item is allocated a specific number of bits may be used. The number of bits allocated to each item will depend on the range and precision required for that particular attribute. FIG. 5B shows an example field and allocation of bits according to an embodiment. In this example, each field in the message has a specific number of bits allocated to it:

Vehicle Identification Number (VIN) field uses 32 bits (32 characters, each represented by an 8-bit ASCII code) to represent the Vehicle Identification Number, a unique identifier for the trailer. Make uses 48 bits (6 characters, each represented by an 8-bit ASCII code) to specify the manufacturer's name. Model uses 48 bits (6 characters, each represented by an 8-bit ASCII code) to specify the trailer's model name.

Trailer Size field uses 8 bits (4 bits for length and 4 bits for width) to represent the trailer's size in meters or feet. The Trailer Shape field uses 4 bits to represent a shape identifier, where different shape codes can be assigned to various trailer shapes (e.g., rectangular, rounded, etc.). The Trailer Weight field uses 12 bits to represent the trailer's weight in kilograms, accommodating a range of weight values.

The Time Value field uses 32 bits to represent the timestamp using Unix Epoch format, indicating when the message was generated. The Reserved Bits are bits set aside for potential future use or additional attributes that may be added to the message format later.

Message fields and allocation of bits are for example and a hypothetical representation for demonstration. In implementations, the fields, actual message format, and the number of bits allocated to each item may vary based on the specific requirements and constraints of the application and communication protocol used.

Various communication protocols can be employed for transmitting trailer details based on specific application requirements and range considerations. Bluetooth' and Wi-Fi' are suitable for short-range communication within close proximity, while cellular communication utilizing 3G, 4G, or 5G networks allows for data transfer over longer distances. RFID is valuable for contactless identification or tracking purposes, and CAN may be used for in-vehicle communication between the trailer and the vehicle. V2X protocols encompass V2V and V2I communication, enabling vehicles to share data with each other and infrastructure units. DSRC, designed for V2V and V2I scenarios, facilitates short-range communication of trailer details. The selection of the communication protocol depends on factors such as range, data transfer rate, power consumption, security, and existing infrastructure, as well as the specific use case for trailer details communication.

FIG. 5C shows an example message exchange between trailer and the vehicle according to an embodiment. It may comprise elements that relate to the trailer and its parameters or data. It may comprise of trailer identification number, trailer model, trailer make, and trailer details comprising an empty weight, max load carriable, a size, a shape, a hinge type or coupling mode, wheelbase, tire size, a coupler type, a wind drag coefficient and a list of additional accessories. In an embodiment, the message can be tailored to basic information comprising a size, shape, and weight. In an embodiment, the message can be sent to the vehicle upon attachment. In an embodiment, the message may be sent to an App when the trailer is booked. In an embodiment, the message may be in the RFID tag and can be read when a reader scans the RFID tag.

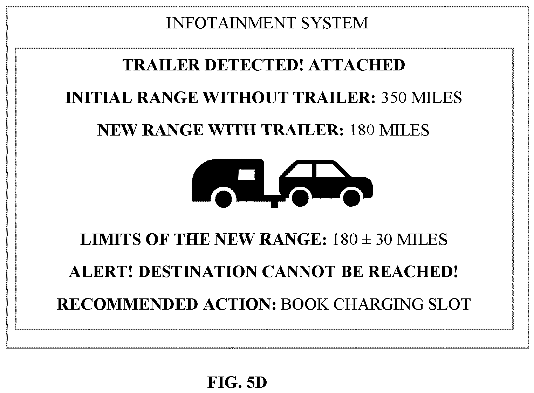

Once the data from the trailer is received or the trailer is detected, the system may consider this new configuration of the vehicle and estimate the range. FIG. 5D shows an example message displayed on the infotainment system of the vehicle according to an embodiment. In an embodiment, the estimated range without the trailer consideration and after considering the trailer are displayed on the infotainment system. In an embodiment, an upper and lower limit of the range are estimated and displayed. The upper and lower limit may be obtained by considering the variations in the real-time conditions and adaptive adjustments. Further, the alert message may comprise a notification whether the new range would still be able to get the users to their destination or if they need recharging. In an embodiment, the system may schedule the appointment for recharging before the range goes to a minimum level. In another embodiment, the system may reroute so that the destination may be reached within the available range whenever possible. In all the embodiments, the infotainment system informs the user via display messages and alert signals. In an embodiment, it may take input from the user.

According to an embodiment of the method, the method further comprises displaying a previous estimated range and the new range on an infotainment system of the vehicle. According to an embodiment of the method, the new range is based on current driving data, historical driving data, and historical range related data. According to an embodiment of the method, the method further comprises detecting environmental information surrounding the vehicle. According to an embodiment of the method, the method further comprises adjusting the new range based on the environmental information surrounding the vehicle.

According to an embodiment of the system, the system further comprises displaying a previous estimated range and the new range on an infotainment system of the vehicle. According to an embodiment of the system, the change in the configuration comprises an initial configuration of the vehicle at a starting location which impacts the previous estimated range. A change in configuration of the vehicle involves a situation where the initially estimated range for the first vehicle configuration differs from the current configuration's estimated range. Consequently, the range itself undergoes a modification due to the configuration shift, thus indicating that a configuration change has occurred in the vehicle.

According to an embodiment of the system, the system is further configured to detect additional factors. According to an embodiment of the system, the additional factors comprises a route condition, a road condition, a weather condition, and a traffic condition. According to an embodiment of the system, the system comprises a non-volatile memory configured to store details of the item details comprising, item identification details, item model, item make, item size, item shape, item weight, item details such as sensors etc.; the vehicle details comprising vehicle model, vehicle make, vehicle health parameters, tire pressure, etc.; previous cycle energy consumption details including a route, a load, a start location, a target location, a stopover location and the energy consumed over the trip relating to a previous trip etc.; current trip details, including starting location, stopover locations, destination, number of passengers traveled, driver details, charging/ refueling details, and the new range. The data is stored during and after the end of every trip. The data may be stored in a local memory, cloud, or a combination of local memory and cloud. The system may store all the details initially to a local memory and may upload all the details at the end of the trip to cloud. In an embodiment, the details stored may be further segregated and available pertaining to each leg of the journey or each segment of the journey. The data may be retrieved by the system when it has to determine item category based on previously stored information. It may be retrieved when the system has to determine item identification and categorize a size factor, a shape factor, or a weight factor based on previously stored information of various items in the database.

**User data and vehicle data collection module 312:** User data may be collected from any of the devices that the user owns or uses. Prior permission may be taken to access such data or portions of data. In an embodiment, the vehicle system may be synchronized with the other devices of the user to access the data. User data may include calendar appointments, pickup or drop schedule, holiday planning, purchase, or lease of holiday accessories such as boats, bikes, RVs, etc. It may include instructions from other devices like Amazon Alexa^{®} for reminders or scheduling. It may include voice processing assisted by natural language processing algorithms of the conversations the user has over his phone. These are used to understand the user's intentions, planning, and any other data to understand the user's trips, route, and stops. For example, the user may talk to a friend saying that he will pick him up on his way to boating. The user may further describe that he has to pick up a boat before picking his friend. The system then processes this conversation using AI based language models to understand the user's starting point, how many passengers there were at the initial point, vehicle's route and pick up points for items/attachments or people. It may include information from an online mapping service, like Google Maps^{®}, such as home location, destinations, route, and any other data as relevant. In case of missing data or links, the system may ask for user input. For example, when it may ask how many passengers will travel from the starting point, how many friends will board at the pickup point? It may ask if the user has a trailer that will be attached at home and then a boat will be picked up on the way or if the user will pick up the boat and the trailer at the pickup point. The system may try to figure these out based on user data, conversation, messages, appointments, purchase or booking orders, etc. In case of discrepancy or ambiguity or missing data points, it may pose questions to the user. Further, even when the system has figured out all the data, it may further ask the user input to confirm whether it got all the data correct. The system may interface with the user via an app installed on the phone which can be used any time before the trip or via the infotainment system of the vehicle which can be used while starting the trip. When the user switches on the vehicle, the infotainment system may present the data to the user, as your final destination "X" and present options to say yes/no or may provide additional options to choose or enter the right data. It may ask "Are you picking up two friends at Y"? Are you picking up a boat at "Z", etc. It further includes user behavior such as whether the user is usually punctual in keeping appointments.

According to an embodiment, the system collects vehicle data. Understanding driver behavior and driving conditions is crucial for ensuring safety, optimizing vehicle performance, and improving overall driving experiences. To gain insights into these aspects, several types of vehicle data can be collected and analyzed. Driving patterns of the vehicle are analyzed in determining its role in the range of the vehicle. Data on distance traveled, routes taken, and stop-start frequencies provide insights into the driver's habits and their impact on energy consumption. Identifying inefficient driving patterns allows for targeted improvements to maximize the vehicle's range. The data on driving patterns and habits include acceleration, braking, and steering behaviors, providing valuable information about the driver's style and aggressiveness. Driving behavior such as aggressive driving, rapid acceleration, and excessive braking can all lead to increased energy consumption, reducing the range.

One category of vehicle data is energy consumption data, which tracks the vehicle's electricity or fuel usage over time. This information allows the system to assess how driving behavior impacts the vehicle's range. For instance, aggressive acceleration and constant high-speed driving can significantly increase energy consumption, resulting in a reduced range. Additionally, collecting data on speed and acceleration profiles provides further insights into the impact of driving at different speeds and sudden acceleration on energy consumption. High speeds and rapid acceleration generally lead to increased energy usage, which can negatively affect the vehicle's range. Apart from driver behavior, understanding the driving conditions is crucial for assessing their impact on energy consumption. Topography and terrain data are essential in this regard. Driving uphill or on hilly terrains generally requires more energy, which can reduce the vehicle's range.

Additionally, sensors associated with the vehicle can collect data on weather conditions, road surfaces, and visibility, shedding light on how external factors influence driver behavior, range, and safety. Weather conditions also play a significant role in range realizations; extreme temperatures, both hot and cold, can affect battery performance, while headwinds can increase energy consumption during driving. Other external factors or additional factors, such as road surface conditions, traffic congestion, and stop-and-go driving can influence energy usage. Rough roads or heavy traffic might lead to increased energy consumption, which can further impact the vehicle's range. Monitoring the use of auxiliary systems, like air conditioning or heating, provides insights into how much additional energy is consumed for passenger comfort, which is essential for overall range considerations.

Determining Driving conditions (Example, Road Surface Condition and Weather). According to an embodiment of the system, the road surface condition is determined by receiving a real-time weather broadcast. According to an embodiment of the system, the road surface condition is determined by a map showing the weather conditions. According to an embodiment of the system, the road surface condition is determined by detecting a road condition in real-time via the computer vision module. According to an embodiment of the system, the road surface condition is determined by analyzing a scattering of an emitted beam of light on a road surface using a filtering technique on an image that is captured by the computer vision module.

According to an embodiment of the system, the road surface condition is detected by using vehicle dynamics sensor data and an image obtained of surroundings ahead of the host vehicle by a camera, wherein the camera is a monochrome camera. According to an embodiment of the system, a surface condition observer classifies a road condition based on an evaluation of the image from the camera and comparing it with the vehicle dynamics sensor data.

According to an embodiment of the system, the surface condition observer further considers a local weather data and derives the road surface condition, wherein the local weather data comprises a temperature, a humidity value, a rainfall, a sleet fall, a snowfall, a wiper activity, and a cloud data. According to an embodiment of the system, the road surface condition is detected by identifying a road sign using the computer vision module. According to an embodiment of the system, the road surface condition is detected by Vehicle-to-Infrastructure (V2I) communication.

According to an embodiment of the system, the road surface condition is determined by a frictional coefficient between a road on which the host vehicle is traveling and a tire of the host vehicle via an accelerometer sensor. According to an embodiment of the system, the road surface condition is determined by a road condition sensor, wherein the road condition sensor is at least one of a temperature sensor, an infrared sensor, an accelerometer, a GPS sensor, and a humidity sensor.

Vehicle data collected from regenerative braking data is considered in electric and hybrid vehicles in range estimation. Regenerative braking systems recover energy during deceleration, making them essential for extending the vehicle's range. Analyzing regenerative braking data helps determine how effectively the driver utilizes this feature, ensuring that energy is recaptured and reused instead of being wasted as heat.

Some of the other factors include tire wear and tear, tire pressure, attachments present, vehicle configuration as purchased and as updated, vehicle model, make, type, year of manufacture, its current conditions, attachments that are present currently or will be attached in future, etc.

Speed and location data combined with GPS information offer a comprehensive view of the vehicle's movements and speed profile, helping to understand driving conditions. Further vehicle performance data, such as engine performance and fuel efficiency, allows for an evaluation of how the driver's behavior affects the vehicle's health, range, and overall performance. In some embodiments, driver biometric data like eye movements and heart rate may be collected to assess attentiveness and emotional state during different driving conditions.

In an embodiment, diverse sets of vehicle data can offer valuable insights into driver behavior, the impact of external factors on driving conditions, and areas for improvement to enhance vehicle performance, such as range. Privacy and security measures are provided on the data using a cyber security module.

By collecting and analyzing these diverse sets of vehicle data and user data, the system may gain a comprehensive understanding of how driver behavior and driving conditions impact the range of a vehicle.

According to an embodiment of the system, the detection module is operable to: receive data from one or more of a device of a user and the user; process the data; determine a plan of the user; determine the planned change in the configuration of the vehicle; determine that the planned change in the configuration is due to one or more of an addition of the one or more items or addition of the one or more passengers; receive an identification of the one or more items; determine a size, a shape, and a first weight of the one or more items; determine a second weight of the one or more passengers; estimate the new range based on the size, the shape, and the first weight of the one or more items and the second weight of the one or more passengers. According to an embodiment of the system, the device is a smartphone. According to an embodiment of the system, the data comprises one or more of a first data from the scheduler, a second data extracted from a speech using natural language processing methods, a third data from an informal chat, a fourth data from a booking, and a fifth data from social media websites.

**Analysis and Recommendation module 314:** By collecting and analyzing diverse sets of vehicle data and user data via the user data and vehicle data collection module 312, strategies are developed using the analysis and recommendation module 314 for predicting the range and increasing the range.

Leveraging machine learning algorithms, Artificial Intelligence (AI) may predict the potential range of a vehicle under different driving conditions and scenarios. By considering factors like terrain, weather, traffic, and user behavior, AI can estimate the vehicle's range with a higher degree of accuracy. Range estimation using predictive analytics is a sophisticated approach that relies on advanced machine learning algorithms to analyze a wealth of vehicle data, user data, and various driving conditions.

The process begins with data collection and preprocessing, where historical vehicle data on energy consumption, speed, acceleration, and driving behavior is combined with real-time information on weather conditions, traffic, and terrain. Relevant features are extracted from this comprehensive dataset, creating a foundation for accurate predictions.

An appropriate machine learning algorithm is selected that can provide the range estimation. Example modules include Regression models, time series analysis, and neural networks. The chosen model is then trained on the preprocessed dataset to understand the relationships between different variables and their impact on the vehicle's range. These variables may be discussed herein in the Range estimation module 306. By learning from historical data, the model can uncover how several factors, such as driving habits and external conditions, influence energy consumption.

Predictive analytics, for range estimation, further integrates real-time data. The model continuously incorporates up-to-date information on weather conditions, traffic patterns, and other relevant factors, ensuring that the predictions are adaptive and responsive to dynamic driving conditions. In addition to estimating the vehicle's range, predictive analytics can also optimize the route to maximize energy efficiency. By considering traffic patterns, road conditions, and elevation changes, the model can recommend the most energy-efficient route for the given destination.

Predictive analytics can provide uncertainty assessments, offering insights into the confidence level of the range prediction. This helps users understand the reliability of the estimated range under different scenarios and allows them to make more informed decisions. The process also involves user profiling, creating personalized range estimates based on individual driving behaviors, charging habits, and climate control preferences. This level of personalization ensures that the range predictions cater to the specific driving patterns and usage of each driver.

Predictive analytics models learn continuously. As new data becomes available, the model may update and refine its predictions, maintaining accuracy over time and adapting to changes in the vehicle's performance or driving patterns. By combining historical data, real-time information, and advanced machine learning techniques, range estimation using predictive analytics provides vehicle users with more reliable and dynamic range predictions.

This empowers drivers to make informed decisions about route planning, charging, and driving behavior. This ultimately enhances the overall driving experience and promotes the adoption of sustainable transportation solutions.

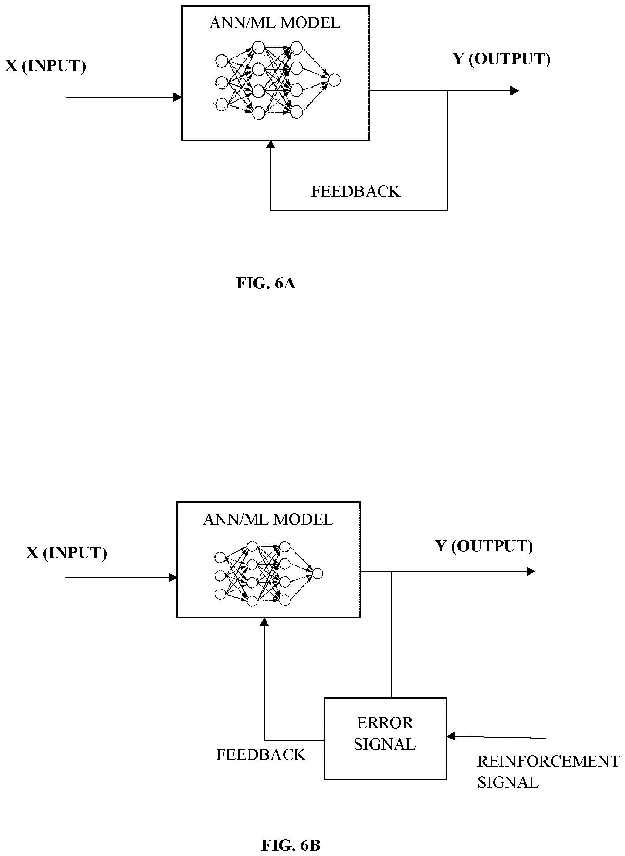

FIG. 6A shows a structure of the neural network / machine learning model with a feedback loop according to an embodiment. Artificial neural networks (ANNs) model comprises an input layer, one or more hidden layers, and an output layer. Each node, or artificial neuron, connects to another and has an associated weight and threshold. If the output of any individual node is above the specified threshold value, that node is activated, sending data to the next layer of the network. Otherwise, no data is passed to the next layer of the network. A machine learning model or an ANN model may be trained on a set of data to take a request in the form of input data, make a prediction on that input data, and then provide a response. The model may learn from the data. Learning can be supervised learning and / or unsupervised learning and may be based on different scenarios and with different datasets. Supervised learning comprises logic using at least one of a decision tree, logistic regression, and support vector machines. Unsupervised learning comprises logic using at least one of a k-means clustering, a hierarchical clustering, a hidden Markov model, and an apriori algorithm. The output layer may predict a range based on the input data.

In an embodiment, ANNs may be a Deep-Neural Network (DNN), which is a multilayer tandem neural network comprising Artificial Neural Networks (ANN), Convolution Neural Networks (CNN) and Recurrent Neural Networks (RNN) that can recognize features from inputs, do an expert review, and perform actions that require predictions, creative thinking, and analytics. In an embodiment, ANNs may be Recurrent Neural Network (RNN), which is a type of Artificial Neural Networks (ANN), which uses sequential data or time series data. Deep learning algorithms are commonly used for ordinal or temporal problems, such as language translation, Natural Language Processing (NLP), speech recognition, image recognition, etc. Like feedforward and convolutional neural networks (CNNs), recurrent neural networks utilize training data to learn. They are distinguished by their "memory" as they take information from prior input via a feedback loop to influence the current input and output. An output from the output layer in a neural network model is fed back to the model through the feedback. The variations of weights in the hidden layer(s) will be adjusted to fit the expected outputs better while training the model. This will allow the model to provide results with far fewer mistakes.

The neural network is featured with the feedback loop to adjust the system output dynamically as it learns from the new data. In machine learning, backpropagation and feedback loops are used to train an Artificial Intelligence (AI) model and continuously improve it upon usage. As the incoming data that the model receives increases, there are more opportunities for the model to learn from the data. The feedback loops, or backpropagation algorithms, identify inconsistencies and feed the corrected information back into the model as an input.

Even though the AI/ML model is trained well, with large sets of labeled data and concepts, after a while the models' performance may decline while adding new, unlabeled input due to many reasons which include, but not limited to, concept drift, recall precision degradation due to drifting away from true positives, and data drift over time. A feedback loop to the model keeps the AI results accurate and ensures that the model maintains its performance and improvement, even when new unlabeled data is assimilated. A feedback loop refers to the process by which an AI model's predicted output is reused to train new versions of the model.

Initially, when the AI/ML model is trained, a few labeled samples comprising both positive and negative examples of the concepts (e.g., vehicle type, trailer type, driving conditions, etc.) are used that are meant for the model to learn. Afterward, the model is tested using unlabeled data. By using, for example, deep learning and neural networks, the model can then make predictions on whether the desired output (for e.g., range) is in the predicted range. However, in the cases where the model returns a low probability score, this input may be sent to a controller (maybe a human moderator) which verifies and, as necessary, corrects the result. The human moderator may be used only in exceptional cases. The feedback loop feeds labeled data, auto-labeled or controller-verified, back to the model dynamically and is used as training data so that the system can improve its predictions in real-time and dynamically. These models may be utilized at various levels, for example, in image processing for detecting a trailer and its parameters given an image.

FIG. 6B shows a structure of the neural network / machine learning model with reinforcement learning according to an embodiment. The network receives feedback from authorized networked environments. Though the system is similar to supervised learning, the feedback obtained in this case is evaluative, not instructive, which means there is no teacher as in supervised learning. After receiving the feedback, the network performs adjustments of the weights to get better predictions in the future. Machine learning techniques, like deep learning, allow models to take labeled training data and learn to recognize those concepts in subsequent data and images. The model may be fed with new data for testing, hence by feeding the model with data it has already predicted over, the training gets reinforced. If the machine learning model has a feedback loop, the learning is further reinforced with a reward for each true positive of the output of the system. Feedback loops ensure that AI results do not stagnate. By incorporating a feedback loop, the model output keeps improving dynamically and over usage/time.

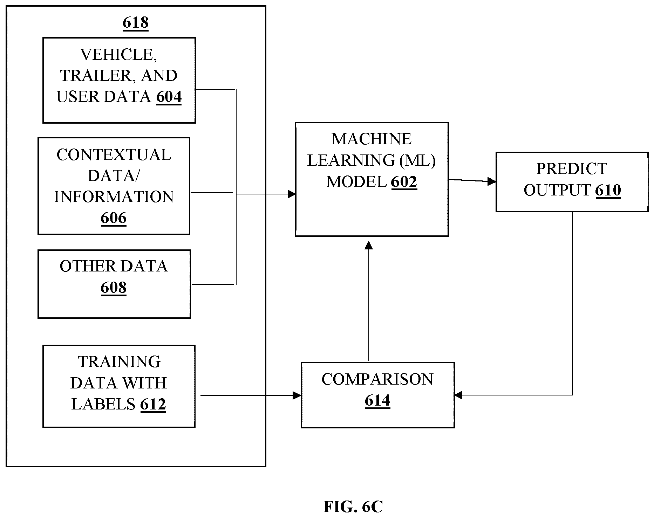

FIG. 6C shows an example block diagram for predicting a range using a machine learning model according to an embodiment. The machine learning model 602 may take as input any data associated with the vehicle, user, attachments and learn to identify features within the data that are predictive of range output. The training data sample may include, for example, the vehicle, trailer, and user data 604, such as the vehicle size, vehicle shape, vehicle type, vehicle model, weight, length, vehicles accessories, etc.; similarly, the training data sample may include trailer size, trailer shape, trailer type, trailer model, weight, trailer length, trailer accessories, etc. It further comprises user data such as driving habits, speed profile, braking profile, etc. In an embodiment, it relates to systems and methods that identify a trailer and its features in real time using an on-board camera and / or other sensors. This trailer identification and feature information, along with the vehicle and user data may be transmitted to the cloud, where the trailer identification is coupled with available range estimation predictions in the case of a previously identified vehicle and trailer of a similar class and built having similar characteristics as well as similar user habits. Some of the data may be historical data from the vehicle in similar situations. Subsequently, the information is used to compute/estimate the range of the vehicle using trailer data and the user behavior. The systems and methods of the present disclosure may also provide data analytics information that may be used later to improve vehicle range.

In an embodiment, the training data sample may also include contextual data/information 606 relating to the surrounding environment. This may include, for example, location of the vehicle, current weather conditions, temperature, time of day, traffic conditions in the region, number of lanes, other obstacles, uphill segments of the road, etc. The system may also garner contextual information from a device associated with the vehicle. For example, through an application installed on the device, such as an online mapping service, like Google^{®} maps, and location services, the system may know the vehicle details. Real-time sensor data may be collected which may include, for example, video, image, audio, infrared, temperature, 3D modeling, and any other suitable types of data that capture the current state around the vehicle. In an embodiment, the real-time sensor data may be processed using one or more machine learning models 602 trained and based on similar types of data to predict a range. The current contextual information 606 includes real time sensor data.

Other data 608 may include data derived from user data. For example, user's future pickups, future addition of passengers or drop of passengers, future addition or deletion of luggage, future addition of trailer, bike, etc., which may have been derived from his appointments, holiday bookings, etc., as explained herein somewhere else in this application. The future addition and deletion of items or passengers may be planned or unplanned. In an embodiment, the change in the configuration of adding or deleting items or passengers is via mm-Wave radar sensor. In an embodiment, the mm-wave radar sensor is operable to detect the presence and number of living things through the micro-movement of their heartbeats and respiration.

Any of the aforementioned types of data (e.g., target vehicle, trailer, and user data 604, contextual data / information 606, other data 608) may correlate with the range computations, and such correlation may be automatically learned by the machine learning model 602. In an embodiment, during training, the machine learning model 602 may process the training data sample (e.g., target vehicle, trailer, and user data 604, contextual data/information 606, other data 608), and based on the current parameters of the machine learning model 602, predict output 610 which may be a range (estimated range) for the given scenario. The predicted output, which is a range of the vehicle, may depend on the training data with labels 612 associated with the training data sample 618. In an embodiment, during training, the predicted output, and the training data with labels 612 may be compared at 614. For example, comparison 614 may be based on a loss function that measures a difference between the predicted output and the training data with labels 612. Based on the comparison at 614 or the corresponding output of the loss function, a training algorithm may update the parameters of the machine learning model 602, with the objective of minimizing the differences or loss between subsequent predicted output 610 and the corresponding labels 612. By iteratively training in this manner, the machine learning model 602 may "learn" from the different training data samples and become better at predicting output 610, predicting a range that is similar to the ones represented by the training labels at 612. In an embodiment, the machine learning model 602 is trained using data which is specific to a type of trailer/s for which the model is used for detecting range. In an embodiment, the machine learning model 602 is trained using data which is general to the trailer types and is used for predicting a range and thus determining a recommendation action to extend the range.

Using the training data, a machine learning model 602 may be trained so that it recognizes features of input data that signify or correlate to range. For example, a trained machine learning model 602 may recognize data features that signify the likelihood of an impact in the range of the vehicle. Through training, the machine learning model 602 may learn to identify predictive and non-predictive features and apply the appropriate weights to the features to optimize predictive accuracy of the machine learning model 602. In embodiments where supervised learning is used and each training data sample 618 has a label 612, the training algorithm may iteratively process each training data sample 618 (including target vehicle, trailer, and user data 604, contextual data/information 606, other data 608), and generate a predicted output 610 which is a range or estimated range based on the machine learning model 602 current parameters. Based on the comparison 614 results, the training algorithm may adjust the model's 602 parameters/configurations (e.g., weights) accordingly to minimize the differences between the generated predicted output 610 and the corresponding labels 612. Any suitable machine learning model and training algorithm may be used, including, e.g., neural networks, decision trees, clustering algorithms, and any other suitable machine learning techniques. Once trained, the machine learning model 602 may take input data associated with a vehicle, trailer and user and output a range considering the vehicle, trailer, and user data.

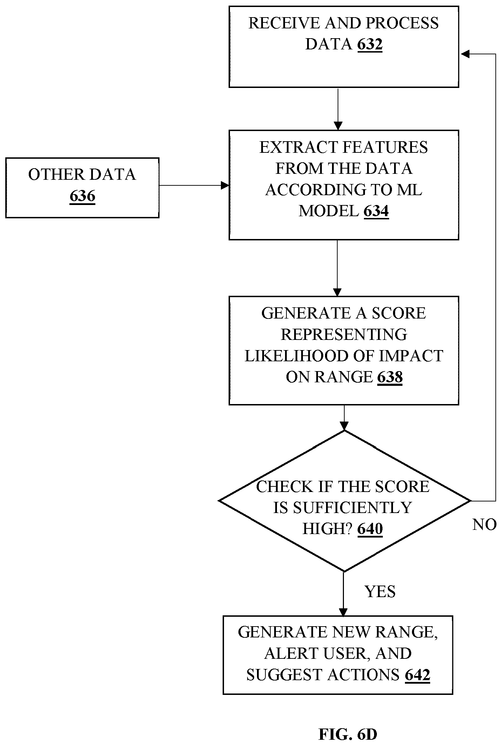

FIG. 6D shows an example flow chart for continuous monitoring and recommending an action using a machine learning model according to an embodiment. The system may receive real-time data associated with the vehicle, the trailer or items that are being attached, and the user, as shown at 632. Any type of sensor may be used to gather data pertaining to the vehicle. A sensor output may be, for example, images, videos, audios, LiDAR measures, infrared measures, temperature measures, GPS data, or any other information measured or detected by sensors. In an embodiment, a sensor output may be the result of one or more sensors capturing environmental information associated with the surroundings of the vehicle, which may include traffic at the location, target vehicle details, number of lanes, traffic around the host vehicle, road surface condition, etc. The system may receive any data associated with the sensor output from sensors, including raw sensory output and / or any derivative data. In an embodiment, the system may process the received data and identify any actionable parameter of interest using a machine learning model, trained using a set of training data. It may receive other data 636, such as weather conditions, humidity, temperature, driver behavior, tire tread, tire conditions, tire pressure, etc., from other sensors of the vehicle.

As shown at step 634, the system may extract features from the received data according to a machine learning model. The machine learning model is able to automatically do so based on what it learned during the training process. In an embodiment, appropriate weights that were learned during the training process may be applied to the features.

As shown at step 638, the machine learning model, based on the features of the received data, may generate a score representing a likelihood or confidence that the received data about an item or a trailer is associated with impacting the current range of the vehicle and how much it is impacted in the current range.

As shown at step 640, the system may determine whether the score is sufficiently high relative to a threshold or criteria to warrant certain action. If the score is not sufficiently high, thus indicating a false-positive, the system may return to step 632 and continue to monitor subsequent incoming data. On the other hand, if the score is sufficiently high, then at step 642 the system may generate a new range which is altered from the current range due to the new parameter added (example, new passengers boarded the vehicle which was unplanned), alert the user, and generate or determine an appropriate action/response. In an embodiment, the system may send alerts to appropriate recipients based on the detected event types. For instance, an alert is generated in the vehicle regarding the drop, the decrease, in the range, and a message may be sent to a recharge station for booking a charging slot.

In an embodiment, the system may repeat one or more steps of the method of FIG. 6D, where appropriate. In an embodiment, the steps 632 to 642 may be performed by the system, any combination of those steps may be performed by any other computing systems, for example, a remote network or a cloud network. In an embodiment, where machine learning models are used for making such determination, the system may transmit a trained machine learning model to the computing system in the vehicle. This may be desirable since sensor data may be overly large to transmit to the in vehicle system for training in a timely fashion.

In an embodiment, the system is provided, wherein the driving parameters recognition module utilizes a Convolutional Neural Networks (CNN). In an embodiment, it may use a recurrent neural network architecture because of its ability to use past, temporal information for inference on current inputs.

The system may further execute steps to detect whether the user followed and executed the suggested or recommended action and to modify the estimated range accordingly.

According to an embodiment, the adjustment may be performed or recommended prior to the actual configuration change in anticipation of the planned change.

According to an embodiment of the system, the recommendation module may suggest a first adjustment to the vehicle.

According to an embodiment of the system, the first adjustment may comprise a change in tire pressure on the vehicle. According to an embodiment of the system, the first adjustment may comprise one or more of changing the place of an attachment. According to an embodiment of the system, the first adjustment comprises one or more of a change in a route such that hilly terrain and steep inclined roads are avoided. According to an embodiment of the system, the first adjustment comprises speed management of the vehicle. According to an embodiment of the system, the first adjustment comprises a braking profile along the route of the vehicle. According to an embodiment of the system, the first adjustment comprises utilizing regenerative braking. According to an embodiment of the system, the first adjustment comprises air condition management. According to an embodiment of the system, the first adjustment comprises reducing idling. According to an embodiment of the system, the first adjustment comprises deployment of a first aerodynamic attachment, wherein the aerodynamic attachment comprises one or more of a spoiler, a side skirt, an air deflector on the vehicle.

According to an embodiment of the system, the recommendation module may suggest a second adjustment to an attachment.

According to an embodiment of the system, the second adjustment comprises a change in the tire pressure of an attached trailer. According to an embodiment of the system, the second adjustment comprises a change in a mode of attachment. According to an embodiment of the system, the second adjustment comprises changing the mode of an attachment of an item. According to an embodiment of the system, the second adjustment comprises covering the trailer for a streamlined shape and for reduced drag of the airflow over the trailer. According to an embodiment of the system, the second adjustment comprises deploying side skirts along the bottom of the trailer to cover the gaps between the wheels to reduce the drag.

According to an embodiment of the system, the second adjustment comprises covering the exposed areas beneath the trailer to prevent air from getting trapped and to create a smoother airflow to reduce drag. According to an embodiment of the system, the second adjustment comprises attaching a tail cone at the rear of the trailer to taper it into a teardrop shape to reduce turbulence and drag. According to an embodiment of the system, the second adjustment comprises sealing any gap and opening between the vehicle and the front of the trailer to minimize airflow disruptions. According to an embodiment of the system, the second adjustment comprises raising the height of the trailer to reduce wind resistance. According to an embodiment of the system, the second adjustment comprises opting for the trailer made of lightweight materials, wherein the lightweight materials is one or more composite materials. According to an embodiment of the system, the second adjustment comprises deployment of a second aerodynamic attachment, wherein the second aerodynamic attachment comprises aerodynamic trailer fairings in the front, side, and top, such that a drag is reduced. According to an embodiment of the system, the second adjustment comprises choosing a trailer with brakes to reduce dependency on the vehicle braking load. According to an embodiment of the system, the second adjustment comprises a change in height, weight and the size of the trailer and a payload. According to an embodiment of the system, the second adjustment comprises covering the trailer to create a smooth surface to reduce turbulence and hence reduce the drag. According to an embodiment of the system, the second adjustment comprises distributing the payload evenly on the trailer.

According to an embodiment of the system, the recommendation module may suggest a third adjustment to driving conditions.

According to an embodiment of the system, the third adjustment comprises one or more of a change in time to departure, and a change in a rest period based on weather. According to an embodiment of the system, the third adjustment comprises one or more of a change in a route such that hilly terrain and steep inclined roads are avoided. According to an embodiment of the system, the third adjustment comprises a change in stopover location. According to an embodiment of the system, the third adjustment comprises a drop in the number of passengers that are picked up.

According to an embodiment of the system, any of the parameters that affect the range as discussed in a function form f(), and those which affect the range as discussed herein in this application, may be used to plan for a recommendation for an adjustment.

According to an embodiment of the system, the range is estimated using one or more parameters using model based engineering, wherein the one or more parameters comprise vehicle parameters, trailer parameters, driving conditions, and energy consumption.

Modifications to the vehicle with trailer: The system may suggest an overall scheme of modifications when trailer or items get added. As an example, the range of a vehicle with a driver alone versus having 4 to 5 additional passengers will be different, because of the added extra weight. The system would consider the added extra weight and compute or estimate the new range.

The system in the vehicle has a way to find out what things are going to happen, based on AI or machine learning. For example, it will find out whether additional people will board, whether a trailer will be attached, etc. Based on all this information, the system gives you the range and the routing information for the trip. The system is taking these additional information into factor and computing the new range which does not exist in the state of the art systems. State of the art systems do not take additional information into factor when giving a range for the vehicle. When the user starts the vehicle, the vehicle gives a range based on what it attains to be the current vehicle configuration, for example, fuel level or state of charge, vehicle basic configuration, and some basic assumptions on average number of passengers; also, state of the art systems do not give any information of the range by taking into consideration future happenings, for example, additional passengers boarding along the route at a stop over or a trailer being picked up mid-way to a destination, etc. Therefore, it is helpful and useful to know both, or all, of those scenarios for the current range/s, as in this invention, which helps to satisfy the user to forecast, and weigh, changes in the range to avoid disappointments. Are you adding any additional weight? Trailer? People? Anything else along the route or at the start of the route? What will be the new range? In an embodiment, the system displays the charging stations that are within the current range and the new range.

Additionally, running boards and side steps aid passenger entry and exit, also influence the range due to changes in aerodynamics. Spoilers installed on the vehicle may enhance range due to enhanced aerodynamics. Interior accessories like air conditioning, audio and entertainment systems, lights, mobile charging facility, coffee heaters, etc., do influence the range by taking up a portion of the battery charge.

**Alert signal generation module 316,** is an aspect of communication that serves to draw immediate attention to specific events, conditions, or situations that require prompt action or awareness. For example, an alert signal to alert the user for estimated range and to, further, provide signals to the recharge stations along with route.

These alert signals are designed to be noticeable, distinctive, and easily recognizable, ensuring they effectively convey the urgency of the situation to the intended recipients. The generation of alert signals takes various forms, depending on the context and the target audience.

In an embodiment, it may be audible alarms. They can range from simple beeps or chimes to attention-grabbing sirens.

In an embodiment, it may be a visual alert. Bright and conspicuous visual signals, such as flashing screen, flashing LED displays, flashing text, are employed to draw attention.

In addition to auditory and visual alert, haptic feedback may also be present. Haptic feedback provides alert signals through tactile sensations, such as vibrations or pulses. This form of alert may be used in smartphones and wearable devices to notify users of the messages without relying solely on sound or visuals.

In an embodiment, it may be a text message, an email, and app notifications are also utilized to generate alert signals on electronic devices.

In various contexts, alert signals are used to notify drivers of potential range issues, for example when the range is dropped from original estimated value. In an embodiment, the alert may comprise information about nearby charging stations. In another embodiment, the alert may be to notify a longer range than estimated and cancel a charging appointment at a station and book at another station based on the new range.

The effectiveness of alert signal generation depends on factors such as the clarity of the signal, the urgency of the situation, and the attention of the intended recipients. Proper design and consideration of the context are taken care of to ensure that alert signals serve their intended purpose and effectively communicate important information to the users. In an embodiment, audible alarms, visual alerts, haptic feedback, text messages, vehicle alerts, alert signal generation are used in keeping users informed about issues related to the range and recommended actions.

Alert signals for range issues in electric and hybrid vehicles are operable for ensuring that the driver remains informed about the remaining driving range and potential range limitations. These alert signals are designed to prompt immediate attention, helping drivers make informed decisions to manage their vehicle's energy efficiently and reach their destination safely.

One common method of generating an alert signal is through a low range warning light on the vehicle's dashboard. When the remaining range is nearing a critical level or nearing a predefined limit, this dedicated light illuminates, providing a clear and noticeable visual indicator that the driver needs to take action. It prompts the driver of the need to find a nearby charging station or adjust their driving habits to conserve energy effectively.

In addition to the warning light, displaying the remaining range as a percentage on the dashboard offers a continuous visual indication of the vehicle's range status. As the range percentage decreases, the driver is alerted for conservation measures or charging. This percentage display helps drivers quickly assess the available range and make informed decisions about their driving plans.

Real-time range estimates can be conveyed to the driver through a pop-up alert on the infotainment or navigation screen. As the vehicle's onboard system predicts that the current charge may not be sufficient to reach the destination, the pop-up alert provides the driver with a timely update. This helps the driver plan their route accordingly and consider nearby charging options to avoid running out of battery power. In conjunction with visual alerts, an audible alert tone or chime can accompany the low range warning light or pop-up alert. The audible signal serves as an effective way to capture the driver's attention, especially in busy or noisy environments where visual alerts might be less noticeable. This multi-sensory approach ensures that the driver is promptly notified of any range concerns, reducing the risk of unexpected range-related issues during the journey. Furthermore, haptic feedback capabilities in some vehicles allow for additional alert signals. These systems can generate gentle vibrations in the steering wheel or seat to alert drivers about range issues without causing distractions. Haptic feedback is a subtle yet effective way to keep the driver informed without relying solely on visual or audible alerts.

Additionally, connected mobile apps provided by the vehicle manufacturer are used in alert signal generation. These apps can send range-related notifications directly to the driver's smartphone, even when they are not in the car. This ensures that drivers stay informed about their vehicle's range status and can plan their trips, accordingly, enhancing convenience and peace of mind.

By utilizing a combination of visual, audible, and haptic alert signals, the alert signal generation module ensures that drivers receive timely and impactful notifications about range issues. These alert signals empower drivers to make informed decisions and take appropriate actions to optimize their vehicle's range.

**Display module 318,** in the vehicles may be connected to the range alert system through the vehicle's onboard computer or electronic control unit (ECU) according to an embodiment. The range alert system constantly monitors various parameters related to the vehicle's energy consumption, battery charge level, driving patterns, and other factors that influence the remaining driving range.

When the range alert system detects that the remaining range is approaching a critical level or a predetermined level, it triggers a warning signal. This warning signal is then sent to the display module, which is responsible for presenting essential information to the driver on the vehicle's dashboard or instrument cluster.

The connection between the range alert system and the display module is typically established through a communication network within the vehicle. Modern vehicles use Controller Area Network (CAN) or other communication protocols to transmit data between different electronic components, including the range alert system and the display module.

Once the warning signal reaches the display module, it activates the appropriate visual and audible alerts to inform the driver about the range issue. The low range warning light may illuminate, indicating that the remaining range is nearing a critical level or a predefined level. At the same time, the display module may show the remaining range as a percentage, allowing the driver to see the exact amount of range left. In another embodiment, the display module may also generate pop-up alerts on the infotainment or navigation screen, providing more detailed information about the range issue and potential solutions, such as nearby charging stations Furthermore, the vehicle may be equipped with haptic feedback capabilities, the display module can trigger haptic alerts, such as gentle vibrations in the steering wheel or seat, to provide an additional tactile cue to the driver.

The integration of the range alert system with the display module ensures that drivers receive timely and accurate information about their vehicle's range status. It empowers drivers to make informed decisions, optimize their driving behavior, and plan their routes accordingly to maximize energy efficiency and avoid range-related issues during their journey.

In an embodiment of the system, the message comprises generating an alert in the vehicle, wherein the alert is at least one of a text message, a visual cue, a sound alert, a tactile cue, and a vibration.

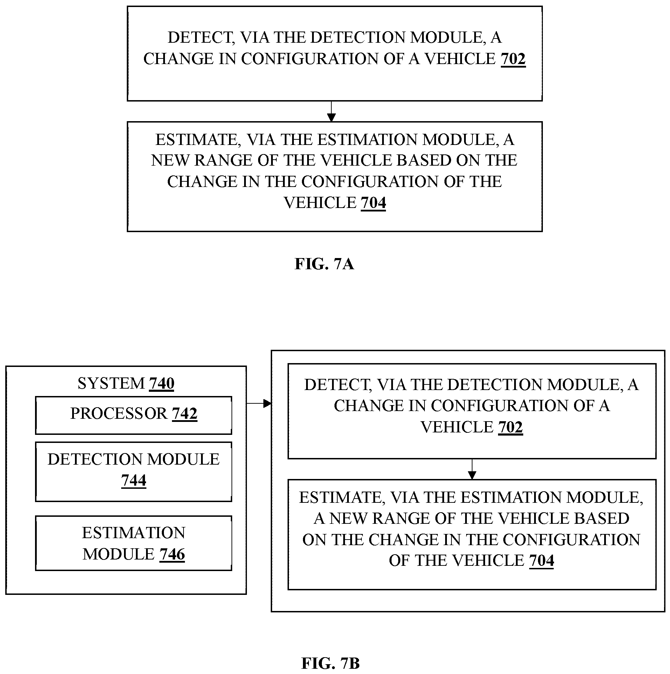

FIG. 7A shows a block diagram for a method for estimating a range based on change in configuration of the vehicle according to an embodiment. In an embodiment it is a method comprising: detecting, via a detection module, a change in configuration of the vehicle at step 702; and estimating, via an estimation module, a new range of the vehicle based on the change in configuration of the vehicle at step 704. According to an embodiment of the method, the change in the configuration comprises one of adding an item, deleting the item, adding a passenger, dropping the passenger.

According to an embodiment of the method, the detection module is operable to detect, via a computer vision system, the item; and estimate, via a computer vision system, a size, a shape, and a weight of the item.

FIG. 7B shows a block diagram for a system for estimating a range based on change in configuration of the vehicle according to an embodiment. According to an embodiment, it is a system 740 comprising: a detection module 744; an estimation module 746; and a processor 742; wherein the processor 742 is operable to: detect, via the detection module 744, a change in configuration of a vehicle at step 702; and estimate, via the estimation module 746, a new range of the vehicle based on the change in the configuration of the vehicle at step 704.

According to an embodiment of the system, the change in the configuration comprises adding an item to the vehicle. According to an embodiment of the system, the item comprises a trailer connected to the vehicle configured as an extension for increasing carrying capacity of the vehicle. According to an embodiment of the system, the item comprises one or more of a trailer, a boat, a rack, a camper, a caravan, and a cargo carrier. According to an embodiment of the system, the rack is one or more of a roof rack, a bike rack, and a ski rack.

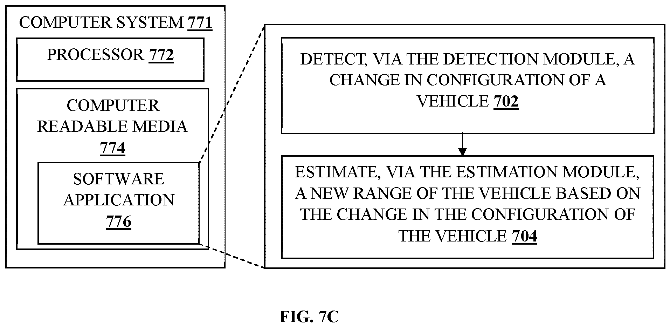

FIG. 7C shows a block diagram for a method stored on a non-transitory computer medium for estimating a range based on change in configuration of the vehicle according to an embodiment. According to an embodiment, it is a non-transitory computer-readable medium 774 having stored thereon instructions executable by a computer system 771 to perform operations comprising: detecting, via a detection module, a change in configuration of the vehicle at step 702; and estimating, via an estimation module, a new range of the vehicle based on the change in configuration of the vehicle at step 704. A software application 776 may be stored on the computer readable medium 774 and executed with processor 772 of the computer system 771.

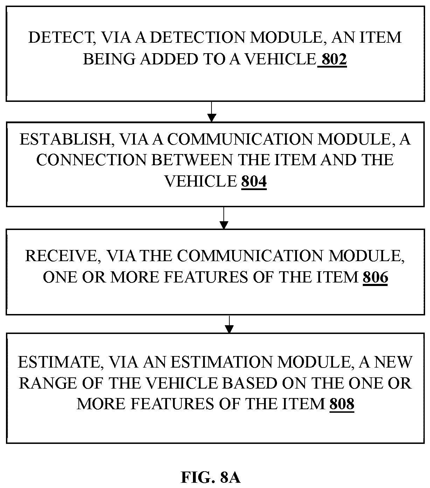

FIG. 8A shows a block diagram for a method for detecting an item via communication module and estimating a range according to an embodiment.

According to an embodiment, it is a method comprising: detect, via a detection module, a change in configuration of a vehicle due to addition of an item at step 802; establish, via a communication module, a connection between the item to the vehicle at step 804; receive, via the communication module, one or more features of the item at step 806; and estimate, via an estimation module, a new range of the vehicle based on the one or more feature of the item at step 808.

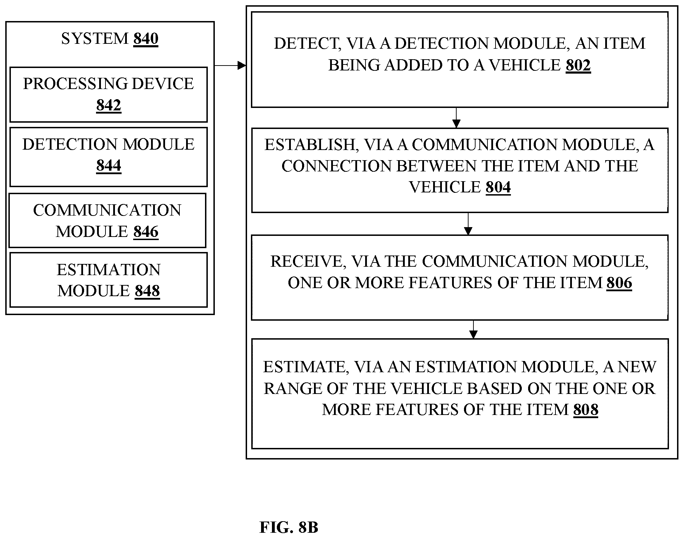

FIG. 8B shows a block diagram for a method for detecting an item via communication module and estimating a range according to an embodiment.

In an embodiment, it is a system 840 comprising: a detection module 844; a communication module 846; and a processing device 842 comprising an estimation module 848; wherein the processing device under power is operable to: detect, via the detection module, a change in configuration of a vehicle due to addition of an item at step 802; establish, via the communication module, a connection between the item to the vehicle at step 804; retrieve, via the communication module, one or more features of the attached item at step 806; and estimate, via the estimation module, a range of the vehicle based on the one or more feature of the item at step 808.

The vehicle is equipped with a sensor arrangement having a plurality of sensors located and oriented on the vehicle exterior for sensing objects within regions proximal to the front and rear ends and sides of the vehicle. The plurality of sensors generate sensed signals indicative of one or more sensed objects. The plurality of sensors may include a plurality of imaging devices, such as front, rear, and side facing cameras. Each of the cameras may generate images of regions around the perimeter and proximate to the vehicle. The generated images may be processed by video processing to identify the objects, such as a trailer and trailer features, and the position of the objects relative to the vehicle. The plurality of sensors may also include radar sensors, ultrasonic sensors, located at each of the four corners of a vehicle, in the front and in the rear of the vehicle for sensing objects located outside of the vehicle and within regions surrounding the vehicle.

The sensor arrangement including a plurality of sensors are configured to sense an area proximate to an exterior of the vehicle, to detect the trailer and geometric features of the trailer to determine a geometric profile of the trailer. The geometric profile may include the size, shape and distance of the trailer and features on the trailer.

A trailer that is being added to the vehicle may have various aerodynamic characteristics. These aerodynamic characters may be altered to enhance or change the performance of the trailer when the trailer is attached to the vehicle. These enhancements or additions may be performed before the trailer is attached. For example, the trailer may be fitted with a molded trailer nose that may be adjustable to change the aerodynamic profile on the front side of the trailer. The trailer nose has a shaped front side that is curved and improves the aerodynamic performance, i.e., to decrease the wind resistance or drag force during the travel. The trailer nose may be altered in shape or replaced with another trailer nose having a different shape. Additionally, the trailer may include aerodynamic side panels on the left and right sides of the trailer which may be altered in position or shape to change the aerodynamic profile of the trailer. Further, the trailer may include one or more trailer tails at the rear side of the trailer which may be adjustable in position or shape to change the aerodynamic properties of the trailer during a towing operation. It should be appreciated that other features may be provided on the trailer to enable a change in the aerodynamic profile of the trailer. In an embodiment, the vehicle or system may notify the driver of the vehicle for a given trailer what the driving range of the vehicle will be. Similarly, the vehicle controller may prompt the user to change out one trailer for another trailer to realize reduced air resistance and hence enhanced driving range. In an embodiment, the geometric profile of the trailer is initiated immediately once a trailer is detected.

In an embodiment, the geometric profile of the trailer along with the complete profile of the radar/camera sensor scans are stored in a cloud database or to a local database. In an embodiment, the system determine if scanned trailer profiles are matched with any of the trailer profiles stored. In another embodiment, the system matches the trailer identification number it receives via a communication model or a camera, to download the trailer profile details along with weight, aerodynamic resistance, etc. If no match is found, then the system utilizes various physics based models, or regression based models to estimate the range and store the same under new profile. The system may leverage the machine learning and map 3D model of scans with camera overlay for profile matching from the cloud or local database. The system may then determine if the geometric profile match with the cloud/local database is within a certain confidence level, for example a 90-95% match in terms of shape, size, and weight, for example. The system then proceeds to utilize preset inputs for existing intelligent range algorithm. In an embodiment it used various models to predict available range for the trailer profile and weight. In an embodiment, the system suggests trailer modifications and provides a range comparison with and without the modifications. In an embodiment, it may prompt the user of the recommended modifications for the added efficiency, such as adding the aerodynamic shields for redistribution of load to reduce the drag, and hence improve the aerodynamic efficiency and extend the driving range of the vehicle. The system may implement the recommendation automatically by electronic deployment of the shields, to extend the driving range. In an embodiment, data of the trip, trailer, trailer features, range, route, weather conditions, driving details such as driving mode are all stored to the database by the system. Trip refers to a journey, often involving travel from one place to another. It involves moving from a starting location or point of origin to a destination. In an embodiment, driving mode may be determined via a sensor dedicated to the setting of the driving mode. In an embodiment, determining a vehicle's driving mode relies on monitoring various factors and sensors within the vehicle. These include the vehicle's speed, throttle position, brake pedal status, steering angle, and wheel speed, which help ascertain the driver's actions and intentions, facilitating adjustments to engine output and transmission settings. Additionally, engine RPM and transmission gear provide insights into whether the vehicle is accelerating, cruising, or encountering challenging terrain. Environmental sensors and external sensors, like cameras and radar, aid in determining comfort and safety. Driver inputs, GPS data, and navigation systems offer valuable context, while terrain and road surface conditions prompt adaptive responses. All this data is processed by the vehicle's electronic control unit (ECU) to determine the driving mode.

According to an embodiment of the system, a detection module is operable to detect the item via the communication module of the vehicle, wherein the communication module establishes a wireless connection between the vehicle and the item. GPS data and navigation systems can help determine the vehicle's location, route, and upcoming road conditions, and may further allow for anticipatory adjustments to the driving mode. External sensors, like cameras and radar, to detect road conditions, traffic, and obstacles. Environmental sensors measure ambient temperature, humidity, wind speed, and air quality. The gear in which the transmission is operating can provide insight into whether the vehicle is in a low gear for climbing hills or a high gear for highway cruising. The engine's revolutions per minute (RPM) can indicate whether the vehicle is idling, accelerating, or cruising.

According to an embodiment of the system, a detection module is operable to detect the item via the communication module of the vehicle, wherein the communication module establishes a wired connection between the vehicle and the item.

In an embodiment, a range value during a current vehicle operating cycle is dependent on an energy consumption rate value recorded during a previous vehicle operating cycle with similar operating conditions and configuration settings. In one embodiment, the range model may include calculating a composite energy consumption rate value based on a current energy consumption rate value associated with a current vehicle operating cycle and the energy consumption rate value recorded during a previous vehicle operating cycle and determining the range value based on the composite energy consumption rate value. It may further include the impact of various factors in the form of weighted value or a weighted factor in the range calculation equation.

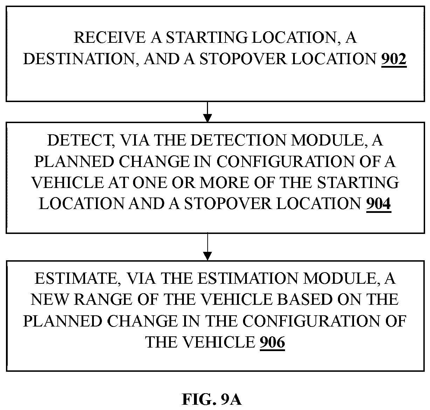

FIG. 9A shows a block diagram for a method for estimating a range based on a planned or future change in configuration of the vehicle according to an embodiment. According to an embodiment, it is a method comprising: receiving a starting location, a destination, and a stopover location at step 902; detecting, via a detection module, a planned change in configuration of a vehicle at one or more of the starting location and the stopover location at step 904; and estimating, via the estimation module, a new range of the vehicle based on the planned change in configuration of the vehicle at step 906; and wherein the system is configured for adaptive smart range estimation.

According to an embodiment of the method, the planned change in configuration comprises adding one or more items, and one or more passengers to the vehicle. According to an embodiment of the method, the method comprises receiving the starting location, the destination, and the stopover location via one of an infotainment system, and a user interface of a user device.

According to an embodiment of the method, the new range is based on an energy consumption rate recorded during a previous vehicle operating cycle and historical data. According to an embodiment of the method, the method further comprising sensing a change in one or more parameters, the one or more parameters comprising a change in a tire pressure, a weather condition, a route, an unexpected stop, an additional weight, and a removed weight; estimating a reduction in an available range due to the change; and providing a recommendation to extend the available range.

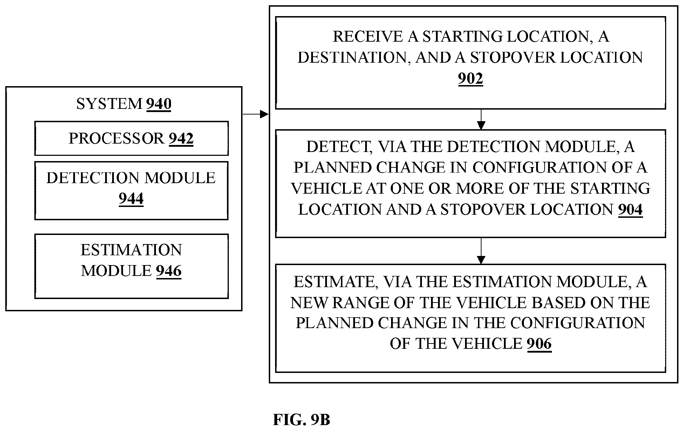

FIG. 9B shows a block diagram for a system for estimating a range based on a planned or future change in configuration of the vehicle according to an embodiment. According to an embodiment, it is a system 940 comprising: a detection module 944; an estimation module 946; and a processor 942; wherein the processor is operable to: receive a starting location, a destination, and a stopover location at step 902; detect, via the detection module, a planned change in configuration of a vehicle at one or more of the starting location and the stopover location at step 904; and estimate, via the estimation module, a new range of the vehicle based on the planned change in configuration of the vehicle at step 906; and wherein the system is configured for adaptive smart range estimation..

According to an embodiment of the system, the planned change in configuration comprises one or more of adding one or more items, and one or more passengers to the vehicle. According to an embodiment of the system, one or more items comprises a trailer, a boat, a rack, a camper, a caravan, and a cargo carrier. According to an embodiment of the system, the system further receives information about the number of the one or more passengers planned to be added at one or more of the starting location and the stopover location. According to an embodiment of the system, the system further receives an identification number of the one or more items planned to be added at one or more of the starting location and a stopover.

According to an embodiment of the system, the system provides a recommendation for an action to extend the new range based on additional attachments and addition of passengers, wherein the action comprises one or more of an adjustment in tire pressure, a reduction in stopover, an addition of stopover, a reduction in passengers, a reduction in weight. According to an embodiment of the system, the system estimates a first range based on the action. According to an embodiment of the system, the system is operable to adaptively adjust a tire pressure so as to extend the first range.

According to an embodiment of the system, the system further comprises a communication module to connect one or more items with the vehicle via a communication link. According to an embodiment of the system, the communication link is a wireless connection. According to an embodiment of the system, the communication link is a wired connection. According to an embodiment of the system, the detection module retrieves a feature of the one or more items directly from the communication link between the vehicle and the one or more items. According to an embodiment of the system, the detection module retrieves an identification number of the one or more items from the communication link between the vehicle and the one or more items, and further uses the identification number to retrieve a feature of the one or more items from a cloud network. According to an embodiment of the system, the feature of the one or more items comprises a weight, a make and model, a shape, a size, and a mode of attachment of the one or more items.

According to an embodiment of the system, the communication module supports a communication protocol, wherein the communication protocol comprises one or more of a Hypertext Transfer Protocol (HTTP), Message Queuing Telemetry Transport (MQTT), WebSocket, Constrained Application Protocol (CoAP), and Advanced Message Queuing Protocol (AMQP).

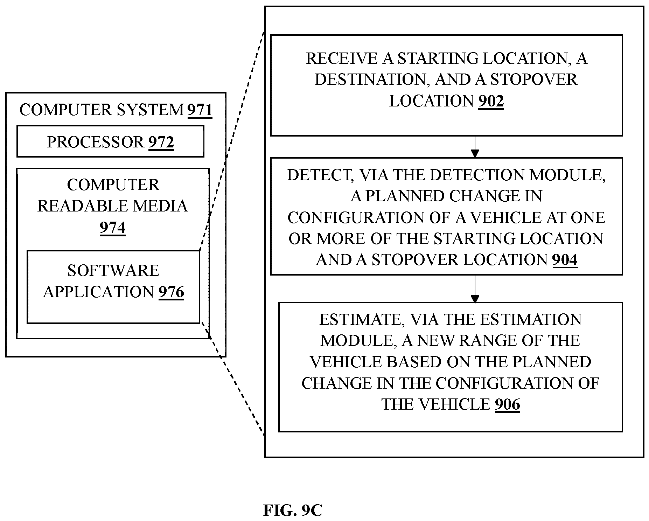

FIG. 9C shows a block diagram for a method stored on a non-transitory computer medium for estimating a range based on a planned or future change in configuration of the vehicle according to an embodiment. According to an embodiment, it is a non-transitory computer-readable medium 974 having stored thereon instructions executable by a computer system 971 to perform operations comprising: receiving a starting location, a destination, and a stopover location at step 902; detecting, via a detection module, a planned change in configuration of a vehicle at one or more of the starting location and the stopover location at step 904; and estimating, via an estimation module, a new range of the vehicle based on the planned change in the configuration of the vehicle at step 906. A software application 976 may be stored on the computer readable medium 974 and executed with processor 972 of the computer system 971; and wherein the system is configured for adaptive smart range estimation.

According to an embodiment of the non-transitory computer-readable medium, the method further comprising instructions executable by a computer system to perform additional operations comprising: sensing a change in one or more parameters, the one or more parameters comprise tire pressure, a weather condition, a route, an unexpected stop, an additional weight, and a removed weight; estimating a reduction in an available range due to the change; and providing a recommendation to extend the available range.

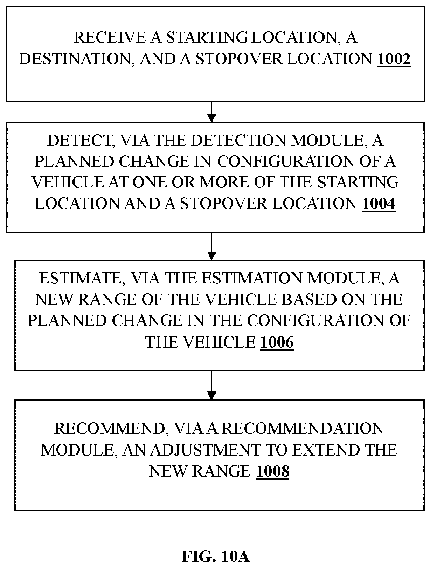

FIG. 10A shows a block diagram for a method for recommending an adjustment for increasing the range of the vehicle according to an embodiment. According to an embodiment, it is a method comprising, receiving a starting location, a destination, and a stopover location at step 1002; detecting, via a detection module, a change in configuration of a vehicle at one or more of the starting location and a stopover location at step 1004; estimating, via an estimation module, a new range of the vehicle based on the change in the configuration of the vehicle at step 1006; and recommend, via a recommendation module, an adjustment to extend the new range at step 1008.

According to an embodiment of the method, the starting location, the destination, and the stopover location are received via a user device. According to an embodiment of the method, the system processes data from the user device to determine the starting location, the destination, and the stopover location. According to an embodiment of the method, the starting location, the destination, and the stopover location are received on the infotainment system via a user input.

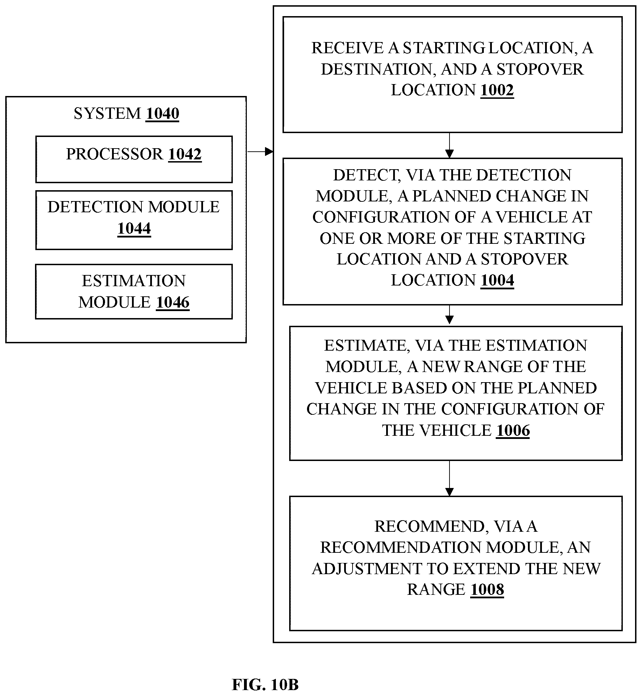

FIG. 10B shows a block diagram for a system for recommending an adjustment for increasing the range of the vehicle according to an embodiment. According to an embodiment, it is a system 1040 comprising a detection module 1044; an estimation module 1046; and a processor 1042; wherein the processor 1042 is operable to: receive a starting location, a destination, and a stopover location at step 1002; detect, via the detection module, a change in configuration of a vehicle at one or more of the starting location and a stopover location at step 1004; estimate, via the estimation module, a new range of the vehicle based on the change in the configuration of the vehicle at step 1006; and recommend, via a recommendation module, an adjustment to extend the new range at step 1008.

The system may further execute steps to detect whether the user followed and executed the suggested or recommended action and to modify the estimated range accordingly.

According to an embodiment of the system, the recommendation module may suggest a first adjustment to the vehicle.

According to an embodiment of the system, the first adjustment may comprise a change in tire pressure on the vehicle. According to an embodiment of the system, the first adjustment may comprise one or more of changing a place of an attachment. According to an embodiment of the system, the first adjustment comprises one or more of a change in a route such that hilly terrain and steep inclined roads are avoided. According to an embodiment of the system, the first adjustment comprises a speed management of the vehicle. According to an embodiment of the system, the first adjustment comprises a braking profile along the route of the vehicle. According to an embodiment of the system, the first adjustment comprises utilizing regenerative braking. According to an embodiment of the system, the first adjustment comprises air condition management. According to an embodiment of the system, the first adjustment comprises reducing idling. According to an embodiment of the system, the first adjustment comprises deployment of a first aerodynamic attachment, wherein the aerodynamic attachment comprises one or more of a spoiler, a side skirt, an air deflector on the vehicle.

According to an embodiment of the system, the recommendation module may suggest a second adjustment to an attachment.

According to an embodiment of the system, the second adjustment comprises a change in the tire pressure of an attached trailer. According to an embodiment of the system, the second adjustment comprises a change in a model of attachment. According to an embodiment of the system, the second adjustment comprises changing a mode of an attachment of an item. According to an embodiment of the system, the second adjustment comprises covering the trailer for a streamlined shape and for reduced drag of the airflow over the trailer. According to an embodiment of the system, the second adjustment comprises deploying side skirts along the bottom of the trailer to cover the gaps between the wheels to reduce the drag.

According to an embodiment of the system, the second adjustment comprises covering the exposed areas beneath the trailer to prevent air from getting trapped and to create a smoother airflow to reduce drag. According to an embodiment of the system, the second adjustment comprises attaching a tail cone at the rear of the trailer to taper it into a teardrop shape to reduce turbulence and drag. According to an embodiment of the system, the second adjustment comprises sealing any gap and opening between the vehicle and the front of the trailer to minimize airflow disruptions. According to an embodiment of the system, the second adjustment comprises raising the height of the trailer to reduce wind resistance. According to an embodiment of the system, the second adjustment comprises opting for the trailer made of lightweight materials, wherein the lightweight materials is one or more composite materials. According to an embodiment of the system, the second adjustment comprises deployment of a second aerodynamic attachment, wherein the second aerodynamic attachment comprises aerodynamic trailer fairings in the front, side, and top, such that a drag is reduced. According to an embodiment of the system, the second adjustment comprises choosing a trailer with brakes to reduce dependency on the vehicle braking load. According to an embodiment of the system, the second adjustment comprises a change in height, weight and the size of the trailer and a payload. According to an embodiment of the system, the second adjustment comprises covering the trailer to create a smooth surface to reduce turbulence and hence reduce the drag. According to an embodiment of the system, the second adjustment comprises distributing the payload evenly on the trailer.

According to an embodiment of the system, the recommendation module may suggest a third adjustment to driving conditions.

According to an embodiment of the system, the third adjustment comprises one or more of a change in time to departure, and a change in a rest period based on weather. According to an embodiment of the system, the third adjustment comprises one or more of a change in a route such that hilly terrain and steep inclined roads are avoided. According to an embodiment of the system, the third adjustment comprises a change in stopover location. According to an embodiment of the system, the third adjustment comprises a drop in the number of passengers that are picked up.

According to an embodiment of the system, any of the parameters that affect the range as discussed in a function form f(), and those which affect the range as discussed herein in this application, may be used to plan for a recommendation for an adjustment.

According to an embodiment of the system, the range is estimated using one or more parameters using model based engineering, wherein the one or more parameters comprise vehicle parameters, trailer parameters, driving conditions, and energy consumption.

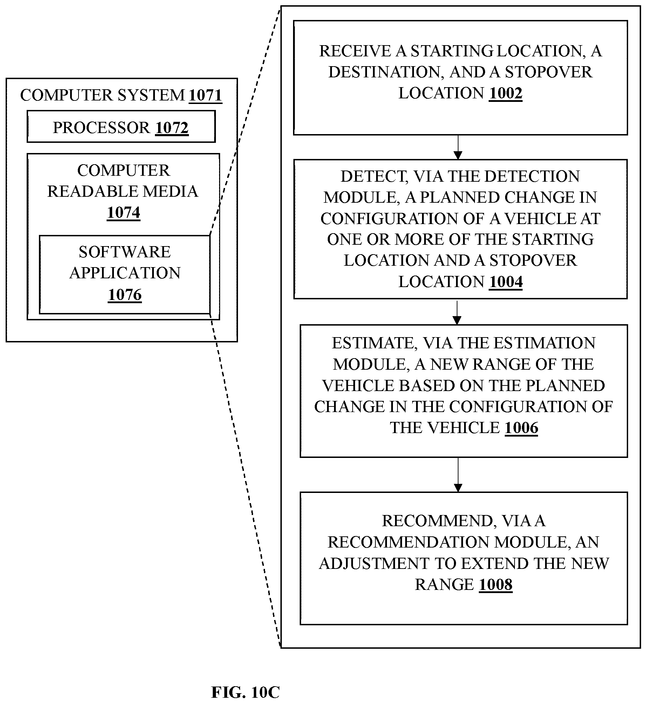

FIG. 10C shows a block diagram for recommending an adjustment for increasing the range of the vehicle according to an embodiment. According to an embodiment, it is a non-transitory computer-readable medium 1074 having stored thereon instructions executable by a computer system 1071 to perform operations comprising receiving a starting location, a destination, and a stopover location at step 1002; detecting, via a detection module, a change in configuration of a vehicle at one or more of the starting location and a stopover location at step 1004; estimating, via an estimation module, a new range of the vehicle based on the change in the configuration of the vehicle at step 1006; and recommend, via a recommendation module, an adjustment to increase the new range at step 1008. A software application 1076 may be stored on the computer readable medium 1074 and executed with processor 1072 of the computer system 1071.

According to an embodiment of the non-transitory computer-readable medium, the estimation module is operable to continuously monitor for a change in configuration of the vehicle in real-time. According to an embodiment of the non-transitory computer-readable medium, the recommendation module is operable to generate the recommendation for booking a recharging slot at a recharging station to increase the new range.

According to an embodiment of the system, the change in configuration comprises adding one or more of an item, and one or more passengers to the vehicle. According to an embodiment of the system, the system further receives information about the number of the one or more passengers planned to be added at one or more of the starting location and a stopover. According to an embodiment of the system, the item comprises one or more of a trailer, a boat, a rack, a camper, a caravan, and a cargo carrier. According to an embodiment of the system, the system further receives the identification of the item planned to be added at one or more of the starting location and a stopover.

In an embodiment, the system may comprise a cyber security module. In one aspect, a secure communication management (SCM) computer device for providing secure data connections is provided. The SCM computer device includes a processor in communication with memory. The processor is programmed to receive, from a first device, a first data message. The first data message is in a standardized data format. The processor is also programmed to analyze the first data message for potential cyber security threats. If the determination is that the first data message does not contain a cyber security threat, the processor is further programmed to convert the first data message into a first data format associated with the vehicle environment and transmit the converted first data message into a first data format associated with the vehicle environment and transmit the converted first data message to the communication module using a first communication protocol associated with the negotiated protocol.

According to an embodiment, secure authentication for data transmissions comprises, provisioning a hardware-based security engine (HSE) located in the cyber security module, said HSE having been manufactured in a secure environment and certified in said secure environment as part of an approved network; performing asynchronous authentication, validation and encryption of data using said HSE, storing user permissions data and connection status data in an access control list used to define allowable data communications paths of said approved network, enabling communications of the cyber security module with other computing system subjects (e.g., communication module) to said access control list, performing asynchronous validation and encryption of data using security engine including identifying a user device (UD) that incorporates credentials embodied in hardware using a hardware-based module provisioned with one or more security aspects for securing the system, wherein security aspects comprising said hardware-based module communicating with a user of said user device and said HSE.

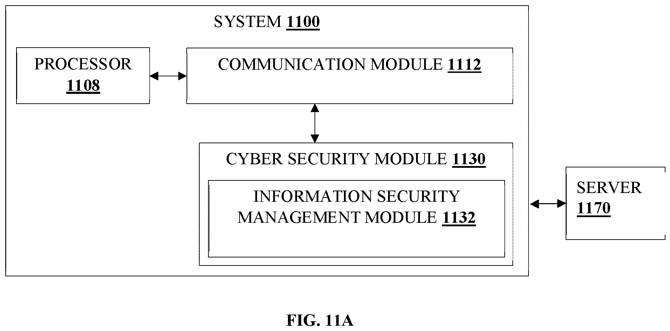

FIG. 11A shows the block diagram of the cyber security module according to an embodiment. In an embodiment, FIG. 11A shows the block diagram of the cyber security module. The communication of data between the system 1100 and the server 1170 through the communication module 1112 is first verified by the information security management module 1132 before being transmitted from the system to the server or from the server to the system. The information security management module is operable to analyze the data for potential cyber security threats, to encrypt the data when no cyber security threat is detected, and to transmit the data encrypted to the system or the server. The system 1100 comprises processor 1108.

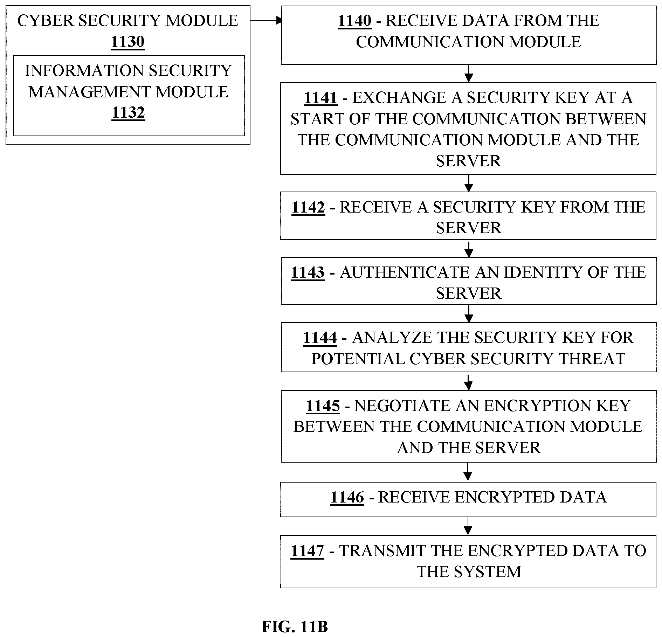

In an embodiment, the cyber security module further comprises an information security management module providing isolation between the system and the server. FIG. 11B shows the flowchart of securing the data through the cyber security module 1130. At step 1140, the information security management module is operable to receive data from the communication module. At step 1141, the information security management module exchanges a security key at the start of the communication between the communication module and the server. At step 1142, the information security management module receives a security key from the server. At step 1143, the information security management module authenticates an identity of the server by verifying the security key. At step 1144, the information security management module analyzes the security key for potential cyber security threats. At step 1145, the information security management module negotiates an encryption key between the communication module and the server. At step 1146, the information security management module receives the encrypted data. At step 1147, the information security management module transmits the encrypted data to the server when no cyber security threat is detected.

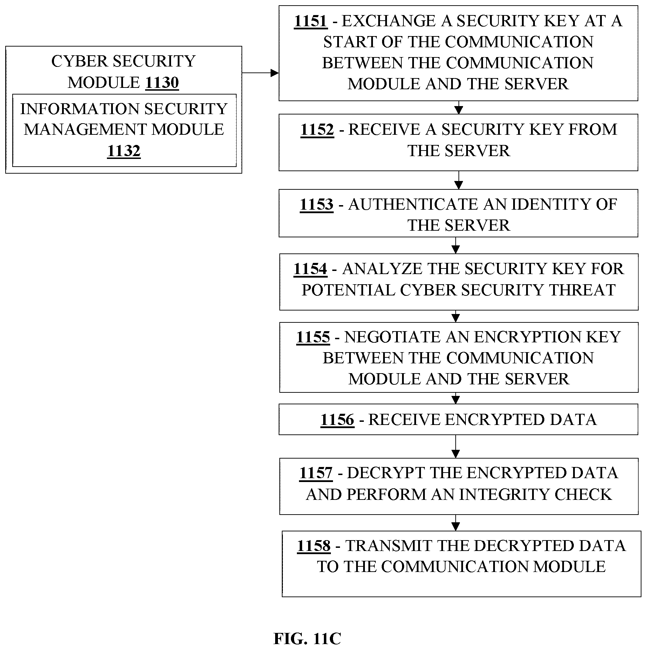

In an embodiment, FIG. 11C shows the flowchart of securing the data through the cyber security module 1130. At step 1151, the information security management module is operable to: exchange a security key at the start of the communication between the communication module and the server. At step 1152, the information security management module receives a security key from the server. At step 1153, the information security management module authenticates an identity of the server by verifying the security key. At step 1154, the information security management module analyzes the security key for potential cyber security threats. At step 1155, the information security management module negotiates an encryption key between the communication module and the server. At step 1156, the information security management module receives encrypted data. At step 1157, the information security management module decrypts the encrypted data, and performs an integrity check of the decrypted data. At step 1158, the information security management module transmits the decrypted data to the communication module when no cyber security threat is detected.

In an embodiment, the integrity check is a hash-signature verification using a Secure Hash Algorithm 256 (SHA256) or a similar method. In an embodiment, the information security management module is configured to perform asynchronous authentication and validation of the communication between the communication module and the server.

In an embodiment, the information security management module is configured to raise an alarm if a cyber security threat is detected. In an embodiment, the information security management module is configured to discard the encrypted data received if the integrity check of the encrypted data fails.

In an embodiment, the information security management module is configured to check the integrity of the decrypted data by checking accuracy, consistency, and any possible data loss during the communication through the communication module.

In an embodiment, the server is physically isolated from the system through the information security management module. When the system communicates with the server as shown in FIG. 11A, identity authentication is first carried out on the system and the server. The system is responsible for communicating/exchanging a public key of the system and a signature of the public key with the server. The public key of the system and the signature of the public key are sent to the information security management module. The information security management module decrypts the signature and verifies whether the decrypted public key is consistent with the received original public key or not. If the decrypted public key is verified, the identity authentication is passed. Similarly, the system and the server carried out identity authentication on the information security management module. After the identity authentication is passed on to the information security management module, the two communication parties, the system, and the server, negotiate an encryption key and an integrity check key for data communication of the two communication parties through the authenticated asymmetric key. A session ID number is transmitted in the identity authentication process, so that the key needs to be bound with the session ID number; when the system sends data to the outside, the information security gateway receives the data through the communication module, performs integrity authentication on the data, then encrypts the data through a negotiated secret key, and finally transmits the data to the server through the communication module. When the information security management module receives data from the server, the data is decrypted first, integrity verification is carried out on the data after decryption, and if verification is passed, the data is sent out through the communication module; otherwise, the data is discarded. In an embodiment, the identity authentication is realized by adopting an asymmetric key with a signature.

In an embodiment, the signature is realized by a pair of asymmetric keys which are trusted by the information security management module and the system, wherein the private key is used for signing the identities of the two communication parties, and the public key is used for verifying that the identities of the two communication parties are signed. Signing identity comprises a public and a private key pair. In other words, signing identity is referred to as the common name of the certificates which are installed in the user's machine.

In an embodiment, both communication parties need to authenticate their own identities through a pair of asymmetric keys, and a task in charge of communication with the information security management module of the system is identified by a unique pair of asymmetric keys.

In an embodiment, the dynamic negotiation key is encrypted by adopting an Rivest-Shamir-Adleman (RSA) encryption algorithm. RSA is a public-key cryptosystem that is widely used for secure data transmission. The negotiated keys include a data encryption key and a data integrity check key.

In an embodiment, the data encryption method is a Triple Data Encryption Algorithm (3DES) encryption algorithm. The integrity check algorithm is a Hash-based Message Authentication Code (HMAC-MD5-128) algorithm. When data is output, the integrity check calculation is carried out on the data, the calculated Message Authentication Code (MAC) value is added with the header of the value data message, then the data (including the MAC of the header) is encrypted by using a 3DES algorithm, the header information of a security layer is added after the data is encrypted, and then the data is sent to the next layer for processing. In an embodiment the next layer refers to a transport layer in the Transmission Control Protocol / Internet Protocol (TCP/IP) model.

The information security management module ensures the safety, reliability, and confidentiality of the communication between the system and the server through the identity authentication when the communication between the two communication parties starts the data encryption and the data integrity authentication. The method is particularly suitable for an embedded platform which has less resources and is not connected with a Public Key Infrastructure (PKI) system and can ensure that the safety of the data on the server cannot be compromised by a hacker attack under the condition of the Internet by ensuring the safety and reliability of the communication between the system and the server.

The descriptions of the one or more embodiments are for purposes of illustration but are not exhaustive or limiting to the embodiments described herein. Many modifications and variations will be apparent to those of ordinary skill in the art without departing from the scope and spirit of the described embodiments. The terminology used herein best explains the principles of the embodiments, the practical application and / or technical improvement over technologies found in the marketplace, and / or to enable others of ordinary skill in the art to understand the embodiments described herein.

## Claims

1. A system comprising:
a detection module; an estimation module; and a processor; and
wherein the processor is operable to:
receive a starting location, a destination, and a stopover location;
detect, via the detection module, a planned change in a configuration of a vehicle at one or more of the starting location and the stopover location; and
estimate, via the estimation module, a new range of the vehicle based on the planned change in the configuration of the vehicle; and
wherein the system is operable for adaptive smart range estimation.

2. The system of claim 1, wherein the planned change in the configuration of the vehicle comprises one or more of adding one or more items, and one or more passengers to the vehicle, wherein the one or more items comprise a trailer, a boat, a rack, a camper, a caravan, and a cargo carrier.

3. The system of claim 2, wherein the system further receives information of a number of the one or more passengers planned to be added at one or more of the starting location and the stopover location, and/or wherein the system further receives an identification number of the one or more items planned to be added at one or more of the starting location and a stopover.

4. The system of claim 2 or 3, wherein the detection module is operable to:
receive data from one or more of a user and a device of the user;
process the data;
determine a plan of the user;
determine the planned change in the configuration of the vehicle;
determine that the planned change is the configuration is due to one or more of an addition of the one or more items and addition of the one or more passengers;
receive an identification of the one or more items;
determine a size, a shape, and a first weight of the one or more items;
determine a second weight of the one or more passengers; and
estimate the new range based on one or more of the size, the shape, and the first weight of the one or more items, and the second weight of the one or more passengers.

5. The system of claim 4, wherein the data comprises one or more of a first data from a scheduler, a second data extracted from a speech using natural language processing methods, a third data from an informal chat, a fourth data from a booking, a fifth data from social media websites.

6. The system of claim any one of the previous claims, wherein the adaptive smart range estimation considers one or more of driving conditions, a vehicle load, a terrain, a weather, a driving habit, historical data, real-time inputs, a driving style, and a current state of the vehicle, wherein preferably the adaptive smart range estimation modifies the system to extend the new range according to one or more of the driving conditions, the vehicle load, the terrain, the weather, the driving habit, the historical data, the real-time inputs, the driving style, and the current state of the vehicle, and/or wherein the adaptive smart range estimation detects a deviation from the planned change in the configuration of the vehicle.

7. The system of any one of the previous claims, wherein the vehicle is mounted with one or more sensors such that the one or more sensors are operable to detect a change in the configuration to the vehicle, wherein the one or more sensors comprise one or more from: a magnetic sensor, a proximity sensor, a load sensor, an electrical sensor, and a vision sensor coupled with a computer vision system.

8. The system of claim 7, wherein the one or more sensors is operable to determine one or more of a size, a shape, and a weight of the one or more items.

9. The system of any one of the previous claims, wherein the system further comprises a communication module to connect with the one or more items with the vehicle via a communication link, wherein the communication link is one of a wireless connection and a wired connection, wherein the communication module is operable to detect a change in the configuration to the vehicle, and determine one or more of a weight, a make and model, a shape, a size, and a mode of attachment of the one or more items.

10. The system of claim 9, wherein the detection module retrieves a feature of the one or more items directly from the communication link between the vehicle and the one or more items, wherein the feature of the one or more items comprises one or more of the weight, the make and model, the shape, the size, and the mode of attachment of the one or more items.

11. The system of claim 1, wherein the detection module retrieves an identification number of the one or more items from the communication link between the vehicle and the one or more items, and further uses the identification number to retrieve a feature of the one or more items from a cloud network, wherein the feature of the one or more items comprises one or more of the weight, the make and model, the shape, the size, and the mode of attachment of the one or more items.

12. The system of any one of the previous claims, wherein the new range is estimated before a start of a journey.

13. A method comprising:
receiving a starting location, a destination, and a stopover location;
detecting, via a detection module, a planned change in a configuration of a vehicle at one or more of the starting location and the stopover location; and
estimating, via an estimation module, a new range of the vehicle based on the planned change in the configuration of the vehicle; and
wherein the method is operable for adaptive smart range estimation.

14. The method of claim 13, further comprising:
detecting, the planned change in the configuration of the vehicle, wherein the planned change in the configuration comprises adding one or more items, and one or more passengers to the vehicle;
sensing one or more parameters, the one or more parameters comprise a tire pressure, a weather condition, a route, an unplanned stop, an additional weight, and a removed weight;
estimating a change in an available range due to the one or more parameters; and
providing a recommendation to extend the available range.

15. A non-transitory computer-readable medium having stored thereon instructions executable by a computer system to perform operations comprising:
receiving a starting location, a destination, and a stopover location;
detecting, via a detection module, a planned change in a configuration of a vehicle at one or more of the starting location and the stopover location; and
estimating, via an estimation module, a new range of the vehicle based on the planned change in the configuration of the vehicle; and
wherein the non-transitory computer-readable medium is operable for adaptive smart range estimation.
